# EUROPEAN PATENT SPECIFICATION

(11) **EP 0 460 436 B1**
(45) Date of publication and mention of the grant of the patent: **12.03.1997**
(21) Application number: 91107939.0
(22) Date of filing: 16.05.1991
(51) Int. Cl.: C09K 19/02, C09K 19/30, C09K 19/42

(54) **Supertwist liquid-.crystal display**
Supertwist Flüssigkristallanzeige
Affichage à cristaux liquides super-torsadés

(30) Priority: 08.06.1990 GB 9012750; 04.10.1990 EP 90118932
(43) Date of publication of application: 11.12.1991
(73) Proprietor: MERCK PATENT GmbH, D-64271 Darmstadt (DE)
(72) Inventor: Plach, Herbert, Dr., W-6100 Damstadt (DE); Hittich, Reinhard, Dr., W-6101 Modautal 1 (DE); Reiffenrath, Volker, W-6101 Rossdorf (DE); Coates, David, Dr., Wimborne, Dorset BH21 3SW (GB); Marden, Shirley Ann, Dr., Parkstone, Poole, Dorset BH14 0RS (GB); Lymer, Karl Philip, Dr., Ringwood, Hampshire, BH24 2EB (GB); Yoshitake, Hiroki, Dr., Atsugi-shi, Kanagawa Pref. 243-02 (JP); Numata, Hiroshi, Dr., 1351-1 Miho machi, Midori-ku (JP); Kobayashi, Keiko, Dr., Ebina-shi, Kanagawa Pref. 243 (JP); Weber, Georg, W-6106 Erzhausen (DE); Bartmann, Ekkehard, Dr., W-6106 Erzhausen (DE)

(56) References cited:
- EP-A- 0 315 014
- EP-A- 0 393 443
- EP-A- 0 445 274
- WO-A-89/08692
- WO-A-91/02043
- WO-A-91/10716
- WO-A-91/15556
- DE-A- 4 026 200

## Description

The invention relates to supertwist liquid-crystal displays (SFAs) having extremely short switching times and good steepnesses and angle dependencies, and to the novel nematic liquid-crystal mixtures used therein.

SFAs as in the heading are known, for example from EP 0,131,216 B1; DE 3,423,993 Al; EP 0,098,070 A2; M. Schadt and F. Leenhouts, 17th Freiburg conference on liquid crystals (8-10.04.87); K. Kawasaki et al., SID 87 Digest 391 (20.6); M. Schadt and F. Leenhouts, SID 87 Digest 372 (20.1); K. Katoh et al., Japanese Journal of Applied Physics, Vol. 26, No. 11, L 1784-L1786 (1987); F. Leenhouts et al., Appl. Phys. Lett. 50 (21), 1468 (1987); H.A. van Sprang and H.G. Koopman, J. Appl. Phys. 62 (5), 1734 (1987); T.J. Scheffer and J. Nehring, Appl. Phys. Lett. 45 (10), 1021 (1984), M. Schadt and F. Leenhouts, Appl. Phys. Lett. 50 (5), 236 (1987) and E.P. Raynes, Mol. Cryst. Liq. Cryst. Letters, Vol. 4 (1), pp. 1-8 (1986). The term SFA here includes any relatively highly twisted display element having a twist angle with a value between 160° and 720°, such as, for example, the display elements of Waters et al. (C.M. Waters et al., Proc. Soc. Inf. Disp. (New York) (1985) (3rd Intern. Display Conference, Kobe, Japan), the STN-LCDs (DE OS 3,503,259), SBE-LCDs (T.J. Scheffer and J. Nehring, Appl. Phys. Lett. 45 (1984) 1021), OMI-LCDs (M. Schadt and F. Leenhouts, Appl. Phys. Lett. 50 (1987), 236, DST-LCDs (EP OS 0,246,842) or BW-STN-LCDs (K. Kawasaki et al., SID 87 Digest 391 (20.6)).

Compared with standard TN displays, SFAs of this type are distinguished by significantly better steepnesses of the electrooptical characteristic and, associated therewith, better contrast values, and by a significantly lower angle dependence of the contrast. Of particular interest are SFAs with extremely short switching times, in particular also at relatively low temperatures. In order to achieve short switching times,the viscosities, in particular of the liquid crystal mixtures have hitherto been optimized using usually optimized combinations of liquid crystal components and optionally also monotropic additives of relatively high vapour pressure. However, the switching times achieved were not adequate for all applications.

Shorter switching times can also be achieved by reducing the thickness of LC layer of the SFA and using liquid-crystal mixtures with a higher birefringence Δn.

All these approaches to shorter switching times, however, still end up with mixtures which were not adequate for every use.

Further demands for SFA are a higher multiplexability (resulting in a smaller number of LC's), lower threshold voltages and a steep characteristic curve.

Optimal parameters, however, cannot be achieved simultaneously for all the properties mentioned above because of opposite influence of different material parameters such as dielectric and elastic properties.

In WO-A-8,908,692 WO-A-9 110 716 and WO-A-9 115 556 SFA's containing fluoro compounds of formula III are disclosed, however there is no hint to combinations of this compounds with phenylpyrimidines of formula B1VIII or with cyclohexanes.

Therefore, there continues to be a great demand for improved SFAs having short switching times and, at the same time, a broad service-temperature range, high characteristic line steepness, good angle dependency of the contrast and low threshold voltage.

The invention has the object of providing SFAs which only have the abovementioned disadvantages to a small extent, or not at all, and at the same time have very useful overall properties.

It has now been found that this object can be achieved if nematic liquid-crystal mixtures are used which contain one or more compounds of the formula I 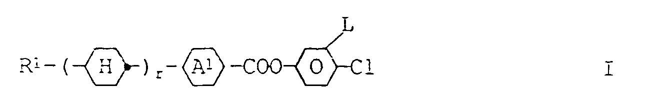 and/or one or more compounds of the formula II 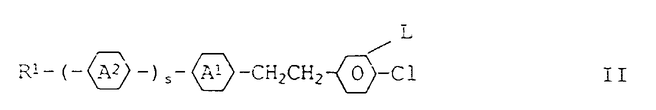 and/or one or more compounds of the formula III 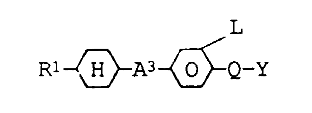 wherein R¹ is alkyl having 1-12 C atoms, wherein one or two non-adjacent CH₂ groups can also be replaced by -O-, -CH=CH-, -CO-, -O-CO- or -CO-O-, r is 0 or 1, s is 0, 1 or 2, rings A¹ and A² are independently from each other trans-1,4-cyclohexylene, 1,4-phenylene or 3-fluoro-1,4-phenylene A³ denotes 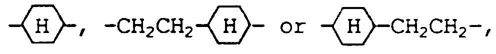 Q is OCHF, OCF₂, CF₂ or a single bond, Y is H, E or Cl and L denotes H or F.

The nematic liquid-crystal mixture preferably has a nematic phase range of at least 60 °C, a viscosity of not more than 30 mPa.s and a dielectric anisotropy of at least +5, the dielectric anisotropies of the compounds and the parameters related to the nematic liquid-crystal mixture being based on a temperature of 20 °C.

The invention thus relates to an SFA having
- two plane-parallel carrier plates which, with an edging, form a cell,
- a nematic liquid crystal mixture of positive dielectric anisotropy in the cell,
- electrode layers with superimposed orientation layers on the inside of the carrier plates,
- an angle of incidence between the longitudinal axis of the molecules on the surface of the carrier plates and the carrier plates of about 1 degree to 30 degrees and
- the absolute amount of the twisting angle of the liquid crystal mixture in the cell from orientation layer to orientation layer being between 160 and 720 °, characterized in that the nematic liquid crystal mixture contains one or more compounds of the formula I 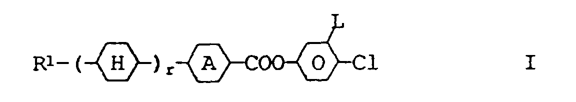 and/or one or more compounds of the formula II 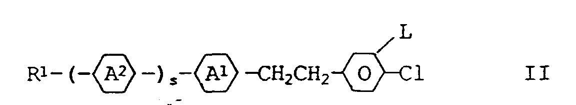 and/or one or more compounds of the formula III 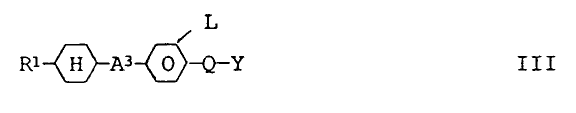 wherein R¹ is alkyl having 1-12 C atoms, wherein one or two non-adjacent CH₂ groups can also be replaced by -O-, -CH=CH-, -CO-, -O-CO- or -CO-O-, r is 0 or 1, s is 0, 1 or 2, rings A¹ and A² are independently from each other trans-1,4-cyclohexylene, 1,4-phenylene or 3-fluoro-1,4-phenylene,

A³ denotes 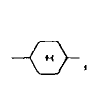
Q is OCHF, OCF₂, CF₂ or a single bond,
Y is H, F, or Cl and L denotes H or F and at least one compound of the formula B1VIII 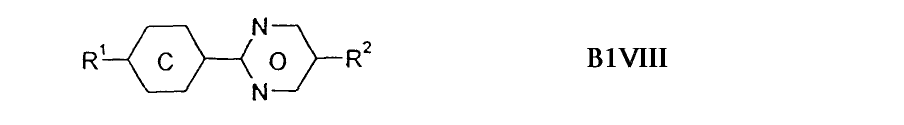 in which R¹ and R² in each case independently of one another are alkyl having 1-12 C atoms, wherein one or two non-adjacent CH₂ groups can also be replaced by -O-, -CH=CH-, -CO-, -O-CO- or -CO-O-, and 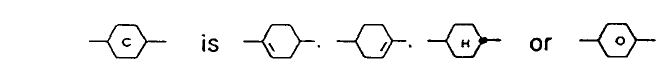 or at least one compound of the formula 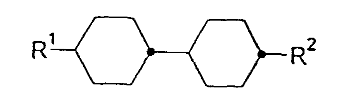 in which
R¹ is CH₃-(CH₂)ₙ-O-, CH₃-(CH₂)ₜ-, trans-H-(CH₂)ᵣ-CH=CH-(CH₂CH₂)ₛ-CH₂-O-, trans-H-(CH₂)ᵣ-CH=CH-(CH₂-CH₂)ₛ-,
R² is CH₃-(CH₂)ₜ-,
n is 1, 2, 3 or 4,
t is 1, 2, 3 or 4,
r is 0, 1, 2 or 3,
s is 0 or 1.

In a special embodiment the SFA is characterized in that the nematic liquid crystal mixture contains one or more compounds of the formula III 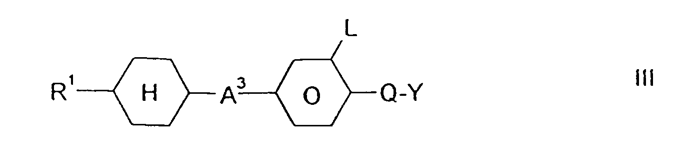 wherein
R¹ is alkyl having 1-12 C atoms, wherein one or two non-adjacent CH₂ groups can also be replaced by -O-, -CH=CH-, -CO-, -O-CO- or -CO-O-,
A³ denotes 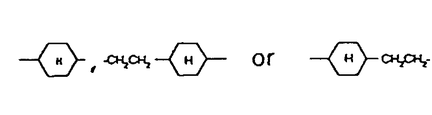
Q is OCHF, OCF₂ or CF₂, Y is H, F or Cl and L denotes H or F.

The invention also relates to corresponding liquid-crystal mixtures.

The individual compounds of the formulae I, II and III and also other compounds which can be used in the SFAs according to the invention, are either known or can be prepared analogously to the known compounds.

The mixtures of this invention allow the realization of SFAs with high multiplex ratios, broad working temperature range, low threshold voltages (below 3 volt, preferably between 1.25 and 2.80, in particular between 1.60 and 2.20 volt) and steep characteristic curves.

The compounds of the formulae I, II and III have low values of the ratio of the elastic constants (K₃/K₁) and lead therefore to short switching times.

The mixtures according to the present invention have an optic anisotropy (Δn) of more than 0.120, preferably 0.130-0.170, in particular 0.130-0.160.

The mixtures according to the invention preferably contain one or more compounds selected from the following group: 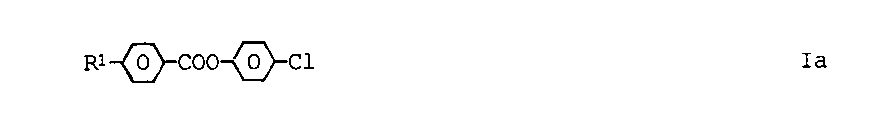 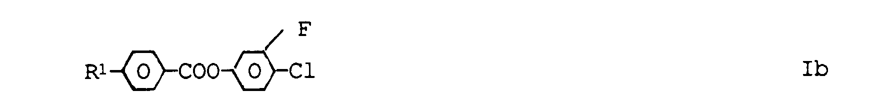 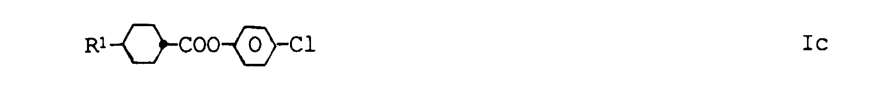 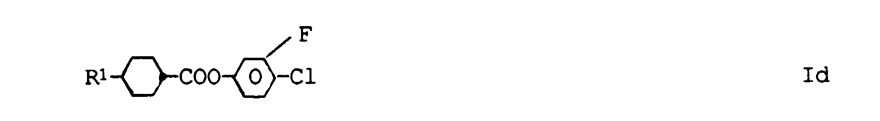 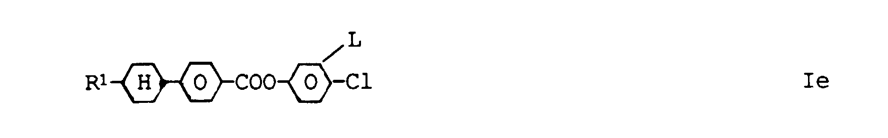 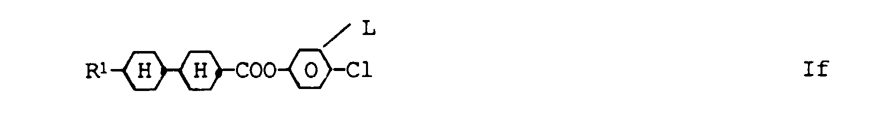 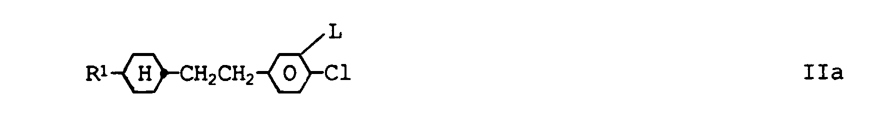 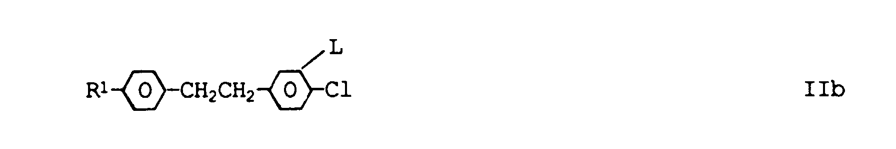 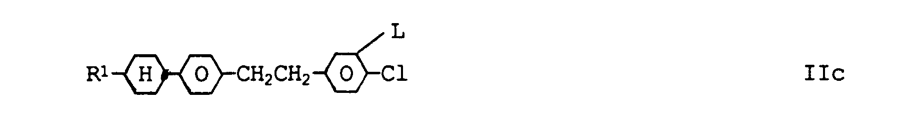 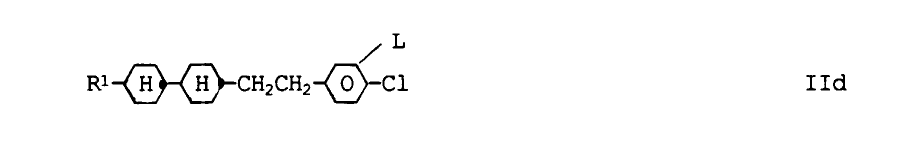 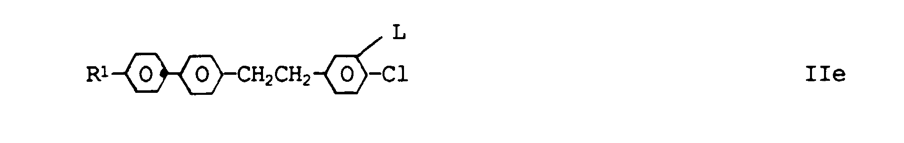 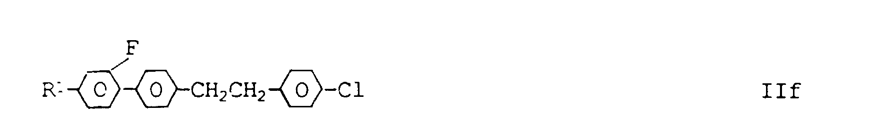 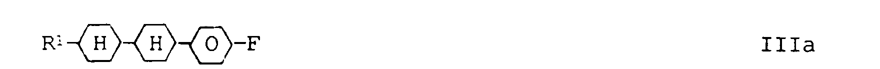 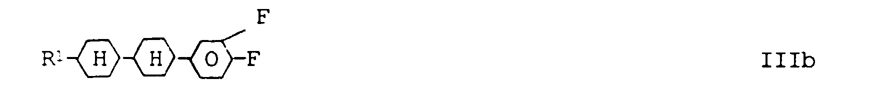 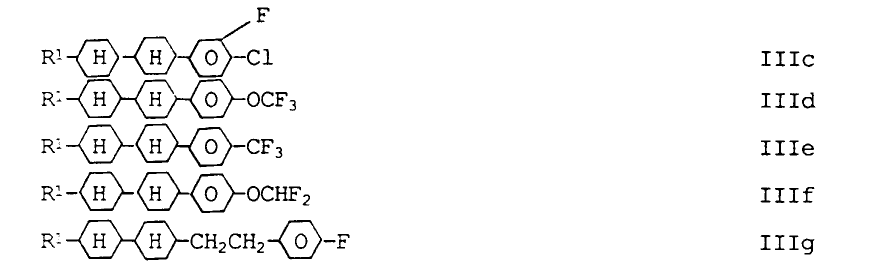 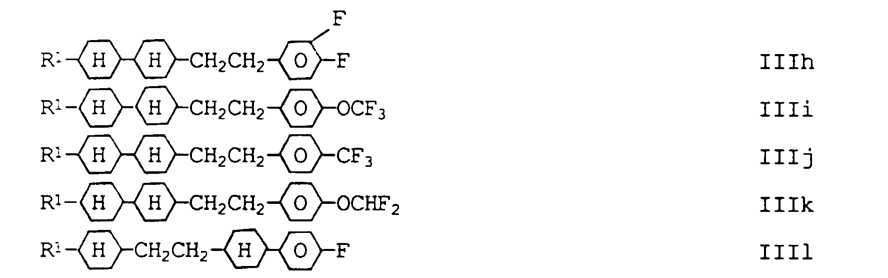 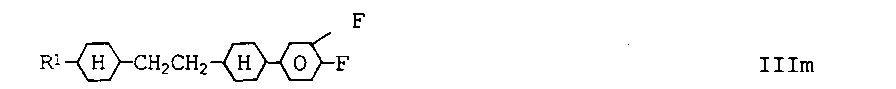 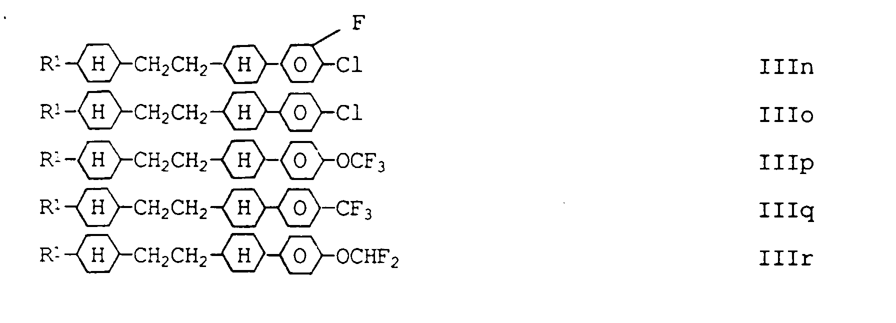 Preferred mixtures contain one, two, three or more compounds of the formulae If, IIId, IIIh, IIIi, IIII, IIIs, in particular one or more compounds of the formula IIId or IIIs and one or three compounds selected from the formulae If, IIIh, IIIi, IIIl, IIIt and IIIu.

Preferred liquid-crystal mixtures which can be used according to the invention contain one or more compounds from group A preferably in a proportion of 5 % to 60 %, preferably 10 % to 40 %. These compounds or this compound from group A have a dielectric anisotropy of more than +8 (preferably of more than +12) and form the component A of the LC mixtures of this invention.

Preferably group A comprises compounds selected from the following group: 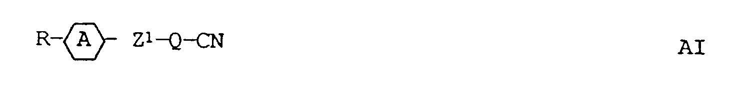 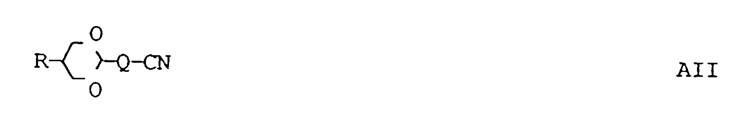 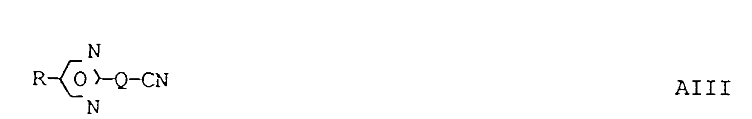 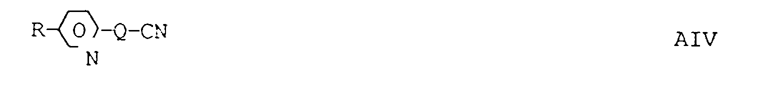 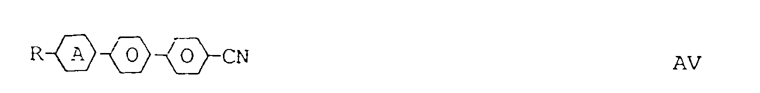 wherein
- R: is alkyl having 1-12 C atoms, wherein one or two non-adjacent CH₂ groups can also be replaced by -O-, -CH=CH-, -CO-, -O-CO- or -CO-O-,
- Q: is the formula 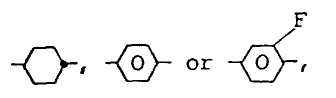
- Z¹: is 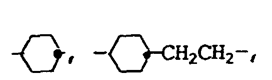 a single bond, -CH₂CH₂-, -CO-O- or -O-CO- and

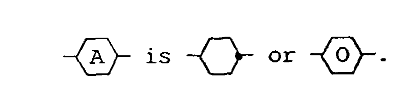

Preferably the mixtures comprise one ore more compounds of the formula AI in the range of 5 to 60 %. Preferred are those compounds wherein Z¹ denotes a single bond, -CH₂CH₂- or -CO-O- and especially preferred are the following compounds:

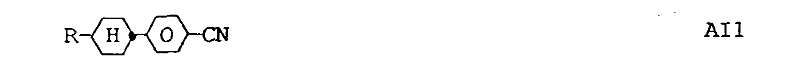

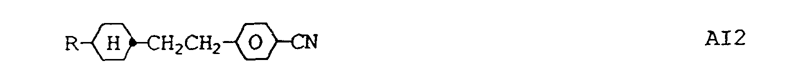

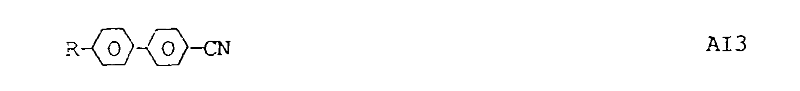

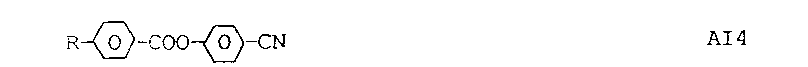

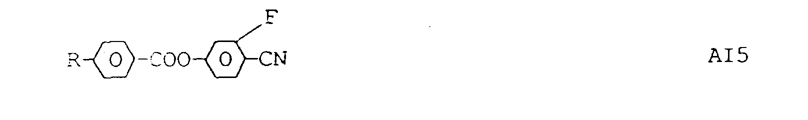

Also preferred are the following compounds: 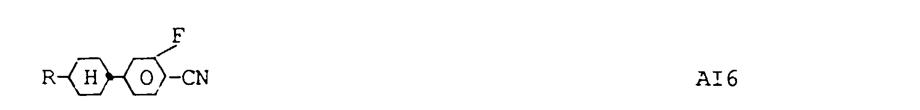 Group A preferably comprises one ore more compounds selected from the formulae AI1 to AI5 and optionally also one or more compounds of the formula AI6.

Preferably the mixtures further contain one or more polar compounds with a higher clearing point, e.g. selected from the following compounds:

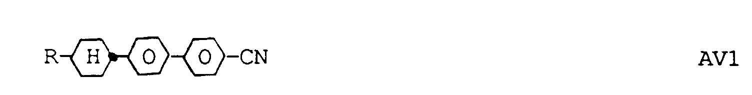

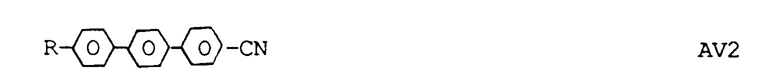

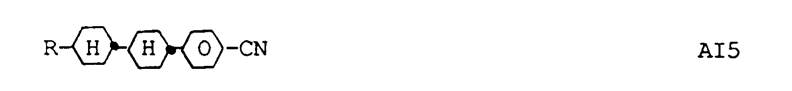

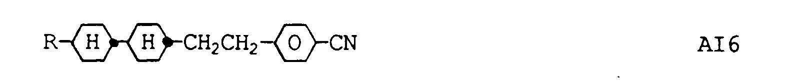

In the above four formulae the 1,4-phenylene rings can also be laterally substituted by one fluorine atom, e.g.

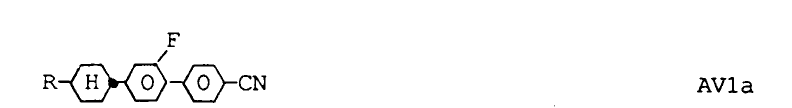

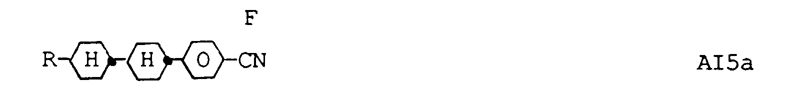

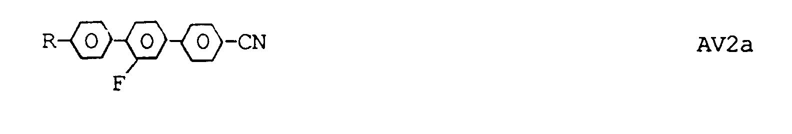

These polar compounds with a higher clearing point are preferably used in the range of 2 to 15 %.

In another preferred embodiment the mixtures comprise one or more compounds with a very high dielectric anisotropy. Such compounds are preferably used in the range of 2 to 60 %. Preferred compounds of this type are those of the formulae AII, AIII and AV, wherein Q denotes 1,4-phenylene or 3-fluoro-1,4-phenylene or compounds of the formula AI7:

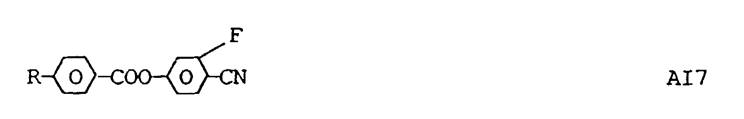

Preferred liquid-crystal mixtures contain one or more compounds from group B, preferably in a proportion of 10 % to 40 %. These compounds or this compound from group B have a clearing point of more than 120° and dielectrically neutral ((Δε) < 2) or medium polar (Δε in the range of +2 to +10, preferably +4 to +8) and form component B of the LC mixtures of this invention.

Preferably group B comprises compounds selected from the following group: 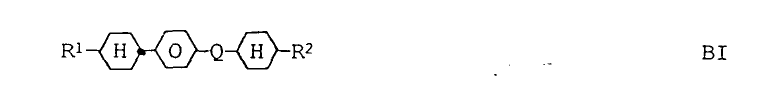 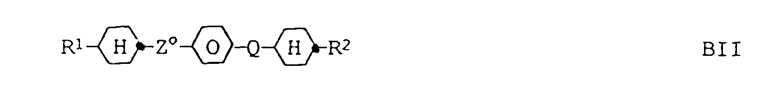 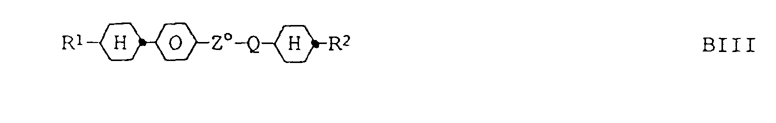 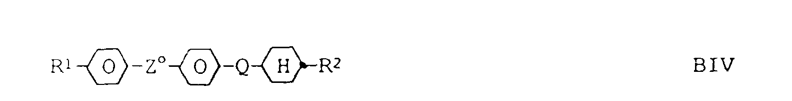 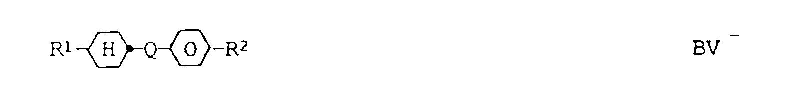 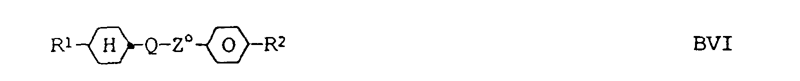 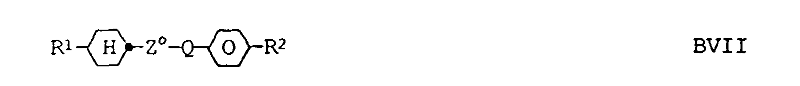 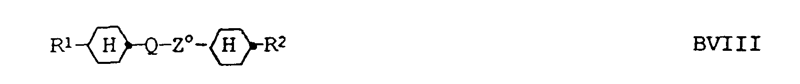 wherein R¹ and R² each independently of one another are R as defined in claim 4, Z^{o} is -CO-O-, -O-CO- or -CH₂CH₂-, Q is as defined in claim 4 and the 1,4-phenylene ring in BI to BVII may also be substituted in 2- or 3-position by fluorine.

Preferably the mixtures comprise one or more compounds with four rings of the formulae BI to BIV in order to achieve a high clearing point. These compounds are preferably selected from the group of the following four-ring compounds:

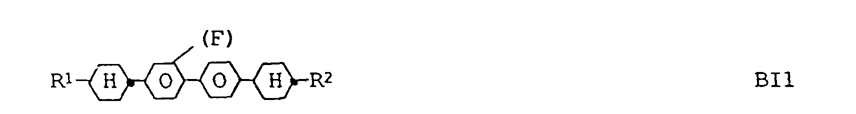

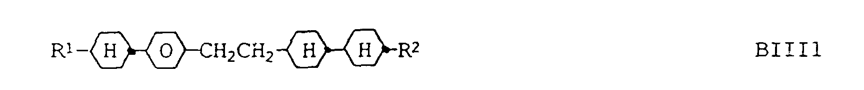

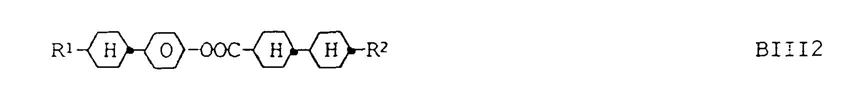

Preferably the mixtures comprise also one or more compounds selected from the following group of three-ring compounds:

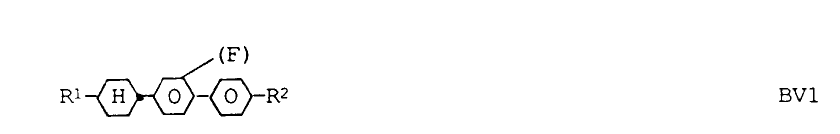

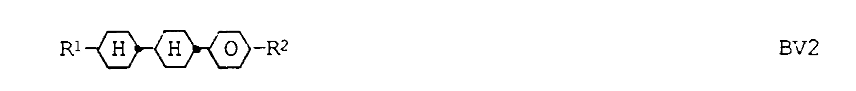

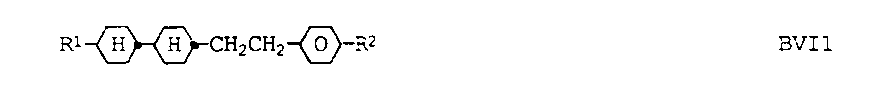

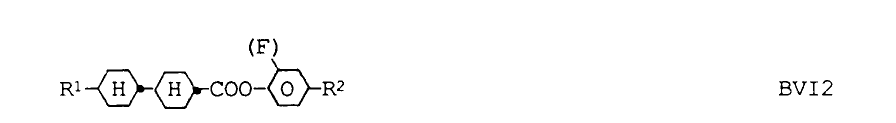

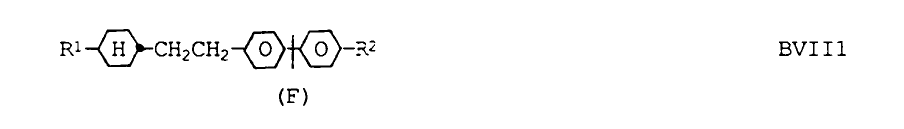

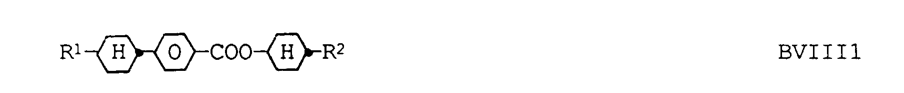

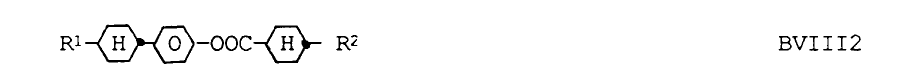

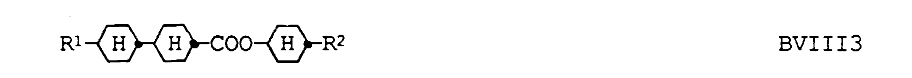

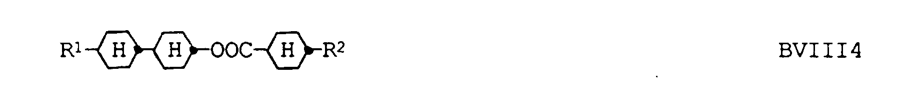

In another preferred embodiment the LC mixtures also contain one or more compounds from the following group: 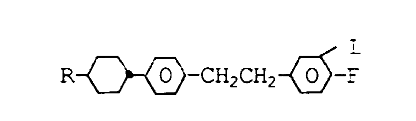 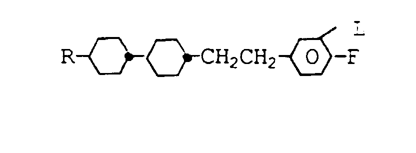 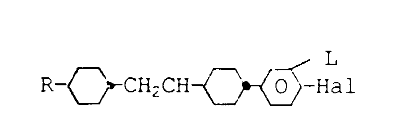 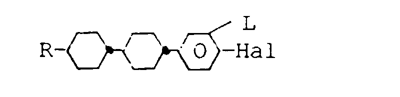 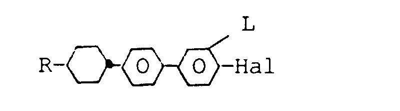 wherein Hal is F or Cl and L and R are as defined above.

The LC mixtures also comprise an optically active component C, in an amount such that the ratio between the layer thickness (separation of the plane-parallel carrier plates) and the natural pitch of the chiral nematic liquid crystal mixture is more than 0.2 suitable to the desired twist angle. Suitable dopants can be selected from a wide variety of known chiral materials and commercially available dopants such as cholesteryl nonanoate, S 811 (E. Merck, Darmstadt, FRG) and CB 15 (BDH, Poole, UK). The choice thereof is not crucial per se.

Preferably the mixtures also contain one or more compounds from group B1 comprising the compounds of the formulae B1I to B1IV: 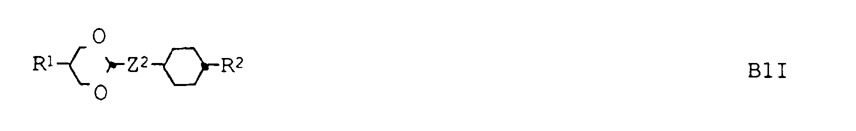 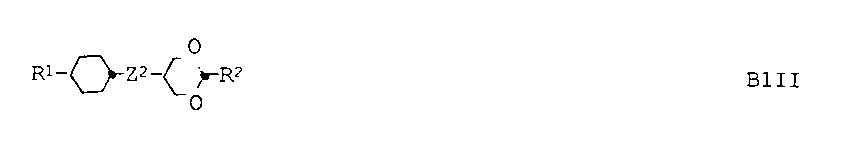 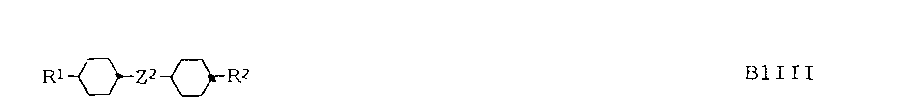 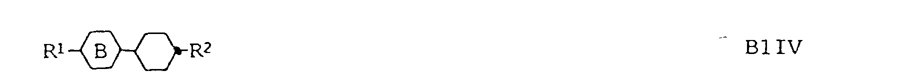 in which R¹ and R², in each case independently of one another, are as defined for R, Z² is -CH₂CH₂-, -CO-O-, -O-CO- or a single bond, and 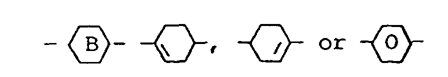 and/or at least one component selected from group B2 comprising the compounds of the formulae B1V to B1VII: 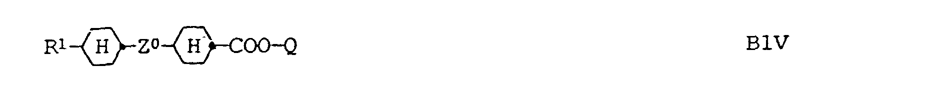 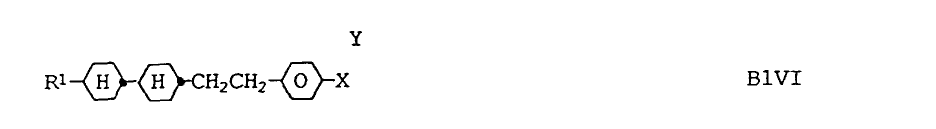 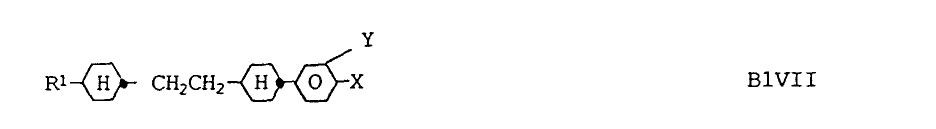 in which R¹ is as defined for R,
Z° is -CH₂CH₂- or a single bond, and
Q is 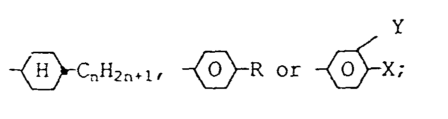 where n is 1 to 9, X is CN or F and Y is H or F; and/or at least one component selected from group B3 comprising the compounds of the formulae B1VIII, B1IX and B1X: 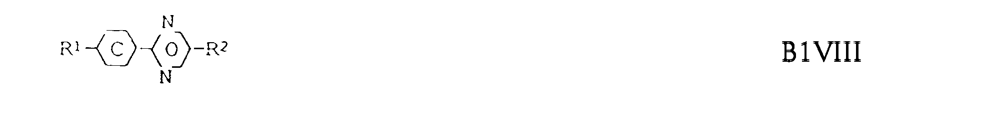 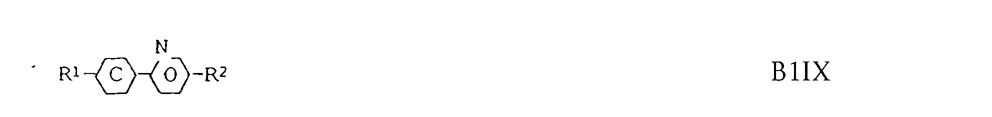 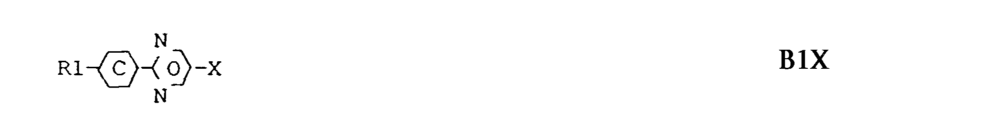 in which R¹ and R², in each case independently of one another, are as defined for R, X is Cl or F, and

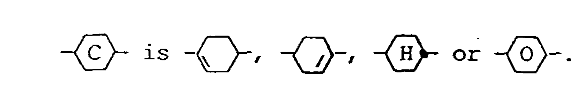

In a further preferred embodiment the LC mixtures contain one or more compounds selected from group T, comprising compounds of the formulae TI, T2 and T3: 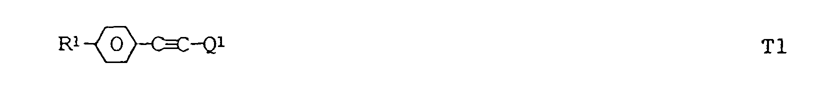 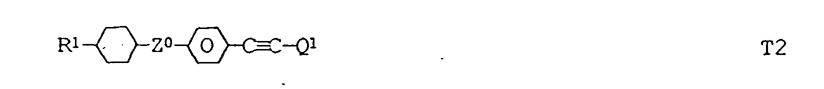 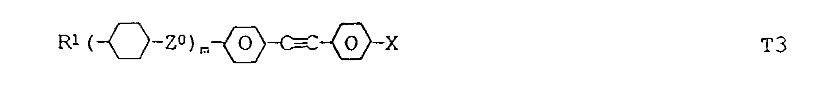 in which Q¹ is 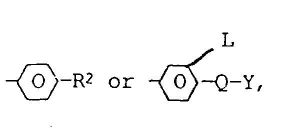
L, Y and Q are as defined for the compounds of the formula III
R¹ and R², in each case independently of one another, are each R,
   - R: is alkyl having 1-12 C atoms, in which, in addition, one or two non-adjacent CH₂ groups may be replaced by -O-, -CH=CH-, -CO-, -O-CO- or -CO-O-, and Z° is -CH₂CH₂- or a single bond, and the 1,4-phenylene rings may also be laterally substituted by fluorine,
   - X: is F or OCF₃, and m is 0 or 1.

The proportion of component(s) from group T is preferably 5 % to 30 %, in particular 5 % to 20 %.

The proportion of component(s) from group B1 is preferably 5 % to 45 %, in particular preferably about 10 % to 40 %. Components of the formulae B1III and B1IV are preferred. Particularly preferred compounds of the formula B1III are those of the following sub-formulae: 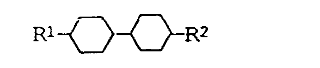 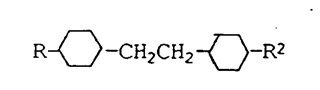 in which
- R¹: is CH₃-(CH₂)ₙ-O-, -CH₃-(CH₂)ₜ-, trans-H-(CH₂)ᵣ-CH=CH-(CH₂CH₂)ₛ-CH₂O- or trans-H-(CH₂)ᵣ-CH=CH-(CH₂CH₂)ₛ-,
- R²: is CH₃-(CH₂)ₜ-,
- n: is 1, 2, 3 or 4,
- r: is 0, 1, 2 or 3,
- s: is 0 or 1, and
- t: is 1, 2, 3 or 4.

Furthermore preferred compounds are those of the sub-formula 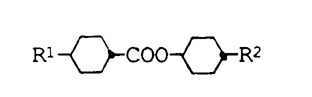 in which R¹ and R² are as defined above.

The proportion of the compounds of the formula B1III of the abovementioned sub-formulae is preferably about 5 % to 45 %, in particular preferably about 10 % to 35 %. Particularly preferred compounds of the formula B1IV are those of the following sub-formula: 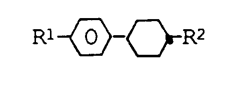 in which
- R¹: is CH₃-(CH₂)ₙ-O- or trans-H-(CH₂)ᵣ-CH=CH-(CH₂CH₂)ₛ-CH₂O- and R² is CH₃-(CH₂)ₜ-, where
- n: is 1, 2, 3 or 4,
- r: is 0, 1, 2 or 3,
- s: is 0 or 1, and
- t: is 1, 2, 3 or 4.

The proportion of these compounds or of the compounds of the formula B1IV is preferably about 5 % to 40 %, in particular preferably about 10 % to 35 %.

The mixtures preferably contain compounds of the formula III, in particular those of the sub-formula

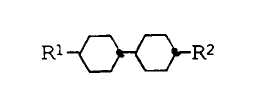

In a particularly preferred embodiment, the mixtures simultaneously contain compounds of the formulae B1III and B1IV, the total proportion for components of group B1 being observed.

If compounds of the formulae B1I and B1III are present, R¹ and R² are preferably, in each case independently of one another, n-alkyl having 1 to 7 C atoms or (trans)-n-alkenyl having 3 to 7 C atoms. Z² is preferably a single bond. BI is particularly preferred.

Furthermore preferred mixtures according to the invention are those which contain one or more compounds of the formula B1IV in which 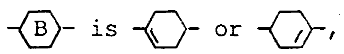 and R¹ and R² have one of the abovementioned preferred meanings, in particular preferably n-alkyl having 1 to 7 C atoms.

In all cases, the total proportion for components of group B1 is observed.

The proportion of the compounds of group B2 is preferably about 5 % to 45 %, in particular preferably 5 % to 20 %. The proportion (preferred ranges) for B1V to B1VII is as follows:
- B1V: about 5 % to 30 %, preferably about 5 % to 15 %
- Total of B1VI and B1VII:: about 5 % to 25 %, preferably about 10 % to 20 %.

Preferred compounds of group B2 are indicated below:

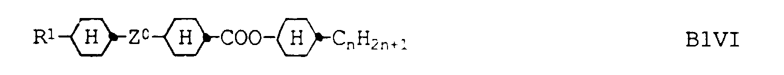

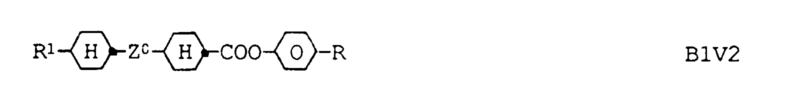

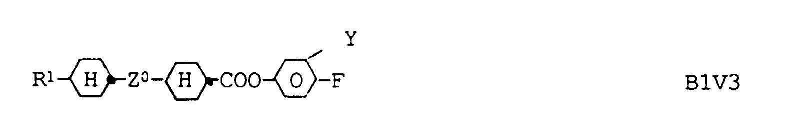

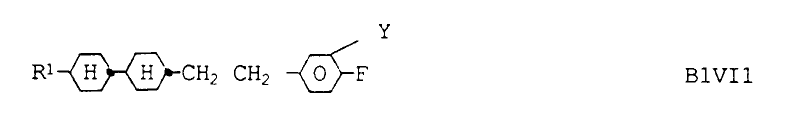

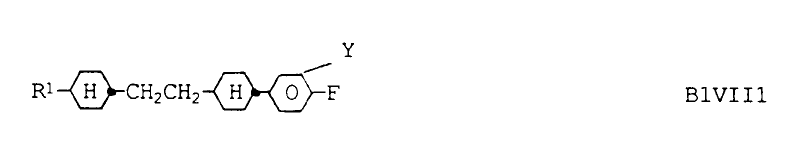

R¹ is preferably n-alkyl having 1 to 7 C atoms or (trans)-n-alkenyl having 3 to 7 C atoms. Z⁰ is preferably a single bond. R preferably has the preferred meaning mentioned above for R¹ or is fluorine. Y is preferably fluorine.

The mixtures according to the invention preferably contain one or more compounds selected from the group comprising B1V3, B1VI1 and B1VII1 in a total proportion of about 5 to 35 %.

In a particularly preferred embodiment, the mixtures according to the invention contain, besides B1V3, B1VI1, B1VII1 and B1V2 (R = F), further terminally fluorinated compounds, for example selected from the group comprising: 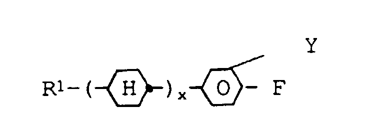 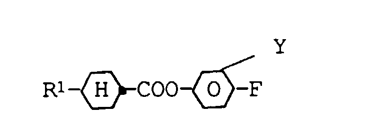 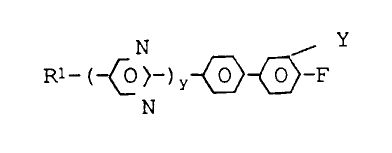 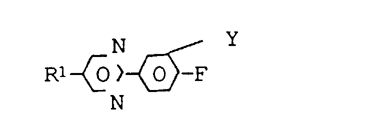 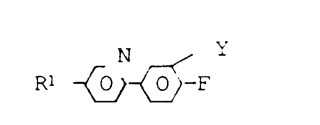 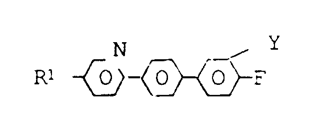 in which R¹ is preferably n-alkyl having 1 to 7 C atoms or (trans)-n-alkenyl having 3 to 7 C atoms, X is 1 or 2, y is 0 or 1 and Y is H or F.

The total proportion of all terminally fluorinated compounds is preferably about 5 % to 65 %, in particular about 15 % to 40 %.

The proportion of the compounds from group B3 is preferably about 5 % to 30 %, in particular preferably about 10 % to 20 %. R¹ is preferably n-alkyl or n-alkoxy, each having 1 to 9 C atoms. However, it is also possible to employ analogous compounds containing alkenyl or alkenyloxy groups. Compounds of the formula BVIII are preferred. 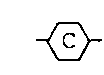 is preferably 1,4-phenylene.

The mixtures according to the invention contain compounds from at least one of groups B1, B2 and B3. They preferably contain one or more compounds from B1 and one or more compounds from group B2 and/or B3.

The proportion of compounds of component C is preferably about 5 % to 60 %, in particular about 20 % to 50 %. Those skilled in the art can easily adjust this proportion to produce the threshold voltage desired, it being possible to use, in principle, all customary liquid-crystal compounds where Δε > +2. If predominantly less-positive terminally fluorinated compounds are used, the total proportion can be above the upper range (about 35 % to 80 %), while the proportion may be lower (about 10 % to 35 %) if terminally cyano-substituted compounds are used.

In a particularly preferred embodiment, the mixtures according to the invention preferably contain about 5 % to 20 % of one or more compounds having a dielectric anisotropy of less than -2 (component D). Compounds of this type are known, for example derivatives of 2,3-dicyanohydroquinone or cyclohexane derivatives containing the structural element 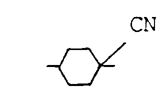 as in DE-OS 3,231,707 or DE-OS 3,407,013.

However, compounds containing the structural element 2,3-difluoro-1,4-phenylene are preferably chosen, for example compounds as in DE-OS 3,807,801, 3,807,861, 3,807,863, 3,807,864 or 3,807,908. Particularly preferred are tolans containing these structural elements, as in International Patent Application PCT/DE 88/00133, in particular those of the formulae 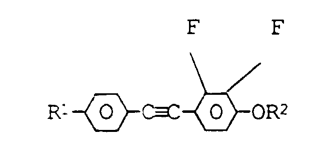 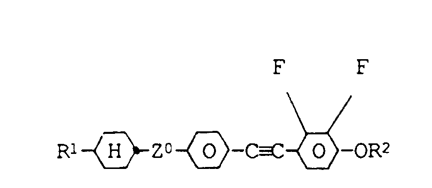 in which R¹ and R² , in each case independently of one another, are preferably n-alkyl having 1 to 7 C atoms or n-alkenyl having 3 to 7 C atoms, and Z⁰ is -CH₂CH₂- or a single bond.

Particularly preferred are also the phenylcyclohexylcarboxylates of the formulae 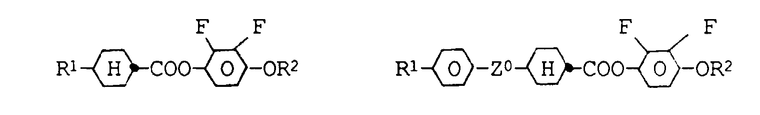 Component D causes, in particular, an improvement in the steepness of the characteristic line.

In a particularly preferred embodiment, the mixtures contain about 5 % to 35 %, in particular preferably about 10 % to 20 %, of liquid-crystalline tolan compounds. These make it possible to work with smaller cell thicknesses (about 5-6 µm), which significantly shorten the switching times. Particularly preferred tolans are indicated below: 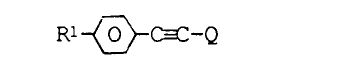 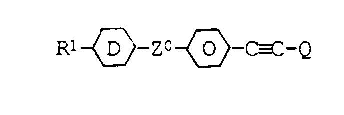
- R¹: is preferably n-alkyl having 1 to 7 C atoms,
- Z⁰: is -CH₂CH₂- or a single bond, 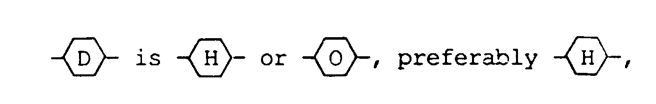
- Q: is 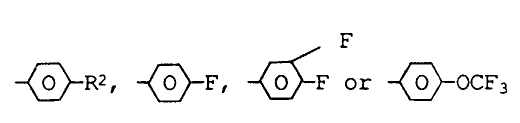
where
- R²: is n-alkyl or n-alkoxy, each having 1 to 7 C atoms, or n-alkenyl or n-alkenyloxy, each having 3 to 7 C atoms.

In further particularly preferred embodiments, the mixtures contain
- a component D which contains one or more compounds having a 1-cyano-trans-1,4-cyclohexylene group or a 2,3-difluoro-1,4-phenylene group,
- at least two compounds of the formulae AIII or AV,
- compounds of the formulae AIII and AV,
- at least one compound from the following group: 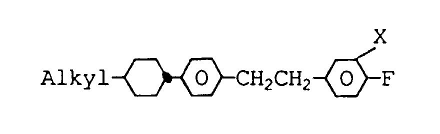 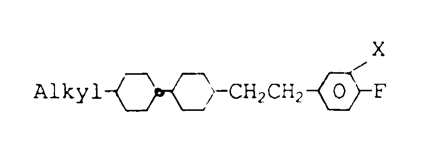 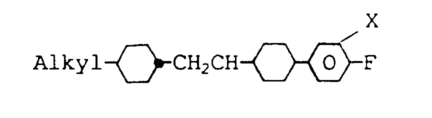 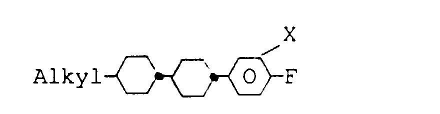 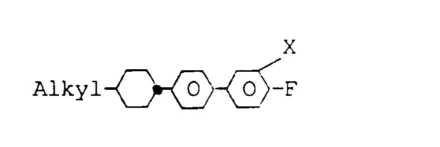 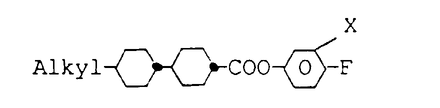 in which alkyl is a straight-chain alkyl group having 2-7 C atoms, and X is H or F,
- one or more compounds in which R is a trans-alkenyl group or a trans-alkenyloxy group,
- one or more compounds selected from the following group 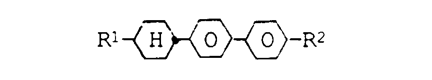 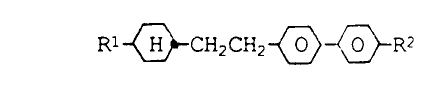 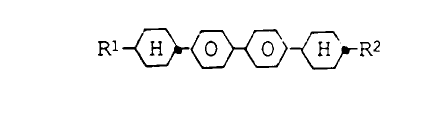 in which R¹ and R² have the preferred meanings indicated in the case of component B, and one of the two 1,4-phenylene groups may also be substituted by fluorine; the proportion of these compounds is 0 % to 25 %, preferably about 5 % to 15 %.

In a further particularly preferred embodiment the mixtures contain
- one or more, in particular 1, 2, 3 or 4, compounds selected from the formulae IIId, IIIb, IIIi and IIIp
- at least two compounds selected from the formulae AI1, AI3, AI4 or AI5
- one or more compounds of the formula B1IV
- one or more compounds of the formulae T1 or T2 or
- one or more compounds selected from the following group 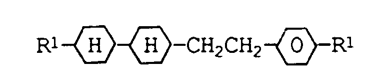 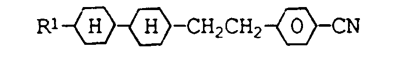 wherin R1 is defined as for the compounds of the formula III.

The construction of the liquid-crystal display elements according to the invention from polarizers, electrode base plates and electrodes having a surface treatment such that the preferential orientation (director) of the liquid-crystal molecules in each case adjacent thereto is usually mutually twisted from one electrode to the other by a value of 160° to 720°, corresponds to the customary construction for display elements of this type. The term customary construction here is used in broad terms and also includes all derivatives and modifications of supertwist cells, in particular also matrix display elements. The surface tilt angle at the two support plates may be identical or different. Identical tilt angles are preferred.

An essential difference between the display elements accordding to the invention and the display elements customary hitherto based on the twisted nematic cell is, however, the choice of liquid-crystal components in the liquid-crystal layer.

The liquid-crystal mixtures which can be used according to the invention are prepared in a manner customary per se. In general, the desired amount of the components used in a relatively small amount is dissolved in the components making up the principal constituent, expediently at elevated temperature. It is also possible to mix solutions of the components in an organic solvent, for example in acetone, chloroform or methanol, and to remove the solvent again, after mixing, for example by distillation.

The dielectrics may also contain further additives known to those skilled in the art and described in the literature. For example, 0-15 % of pleochroic dyes may be added.

The examples below are intended to illustrate the invention, without representing a limitation.

The abbreviations have the following meanings:
- S-N: smectic-nematic phase transition temperature,
- N-I: nematic-isotrop phase transition temperature,
- c.p.: clear point,
- visc.: viscosity (m Pa.s),
- Tₒₙ: time from switching on until 90 % of the maximum contrast is reached,
- T_{off}: time from switching off until 10 % of the maximum contrast is reached,
- V₁₀: threshold voltage (volt).

The SFA is addressed in multiplex operation (multiplex ratio 1:100, bias 1:11, operating voltage 18.5 volts).

Above and below, all temperatures are given in °C. Percentages are per cent by weight. The values for the switching times and viscosities relate to 20 °C.

In the present patent application and in the following examples all chemical structures of LC compounds are given by acronyms the transformation of which into chemical formulae is done as shown in the following. All residues CₙH₂ₙ₊₁ and CₘH₂ₘ₊₁ are straight-chained alkyl groups with n resp. m carbon atoms. The code of Table B is self-explanatory. In Table A only the acronym for the core structure is given. In a concrete compound this acronym is followed by a dash and a code for the substituents R¹, R², L¹ and L² as follows:

| Code for R¹, R² , L¹, L² | R¹ | R² | L¹ | L² |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | H | F |
| nF | CₙH₂ₙ₊₁ | F | H | H |
| nOF | OCₙH₂ₙ₊₁ | F | H | H |
| nCl | CₙH₂ₙ₊₁ | Cl | H | H |
| nF.F | CₙH₂ₙ₊₁ | F | H | F |
| nOmFF | CₙH₂ₙ₊₁ | OCₘH₂ₘ₊₁ | F | F |
| nmF | CₙH₂ₙ₊₁ | CₘH₂ₘ₊₁ | F | H |
| nCF₃ | CₙH₂ₙ₊₁ | CF₃ | H | H |
| nOCF₃ | CₙH₂ₙ₊₁ | OCF₃ | H | H |
| nOCF₂ | CₙH₂ₙ₊₁ | OCHF₂ | H | H |
| nS | CₙH₂ₙ₊₁ | NCS | H | H |
| rVsN | CᵣH₂ᵣ₊₁-CH=CH-CₛH₂ₛ- | CN | H | H |
| rEsN | CᵣH₂ᵣ₊₁-O-CₛH₂ₛ- | CN | H | H |
| nNF | CₙH₂ₙ₊₁ | CN | F | H |
| nAm | CₙH₂ₙ₊₁ | COOCₘH₂ₘ₊₁ | H | H |
| nF.Cl | CₙH₂ₙ₊₁ | Cl | H | F |

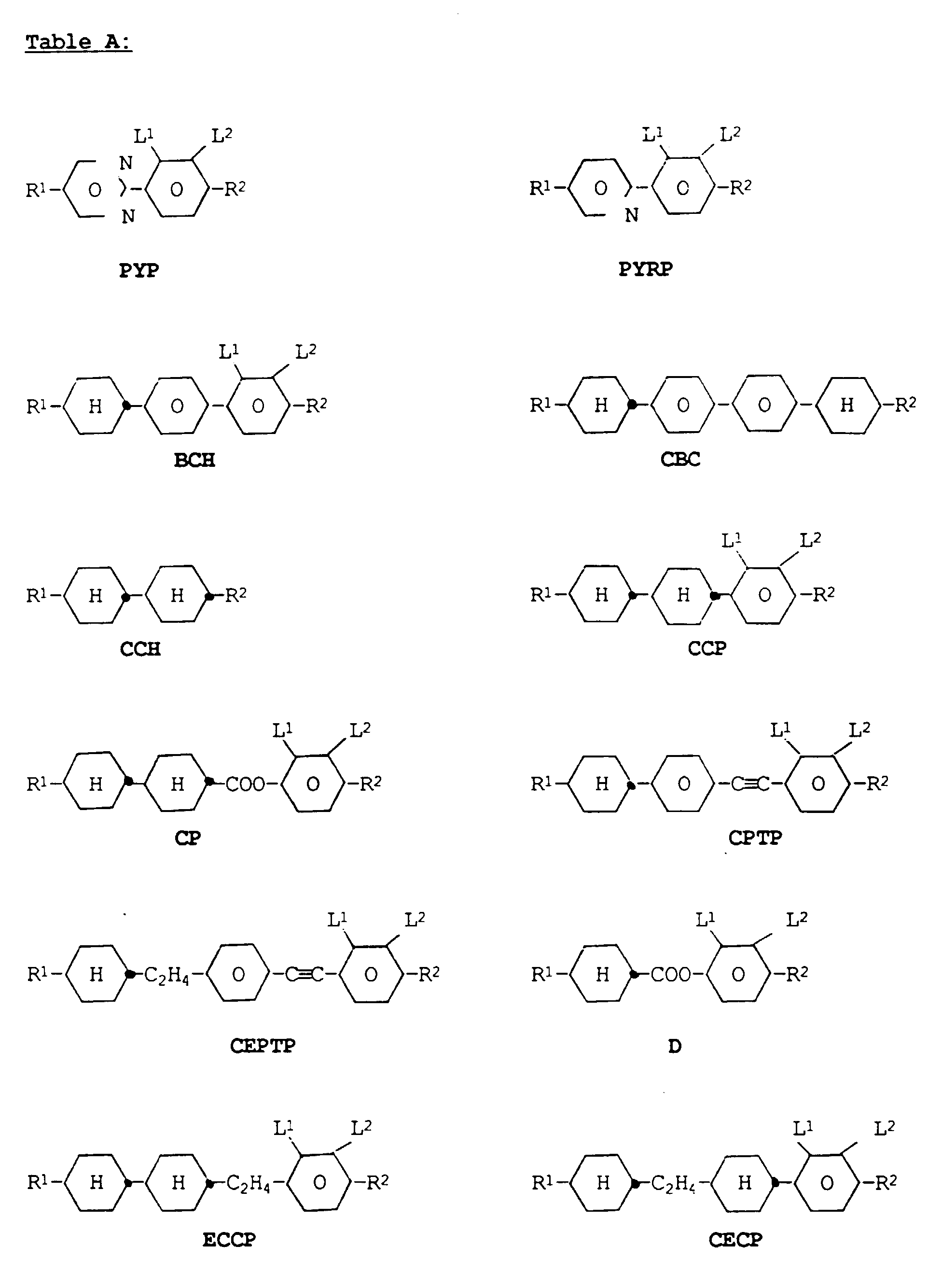

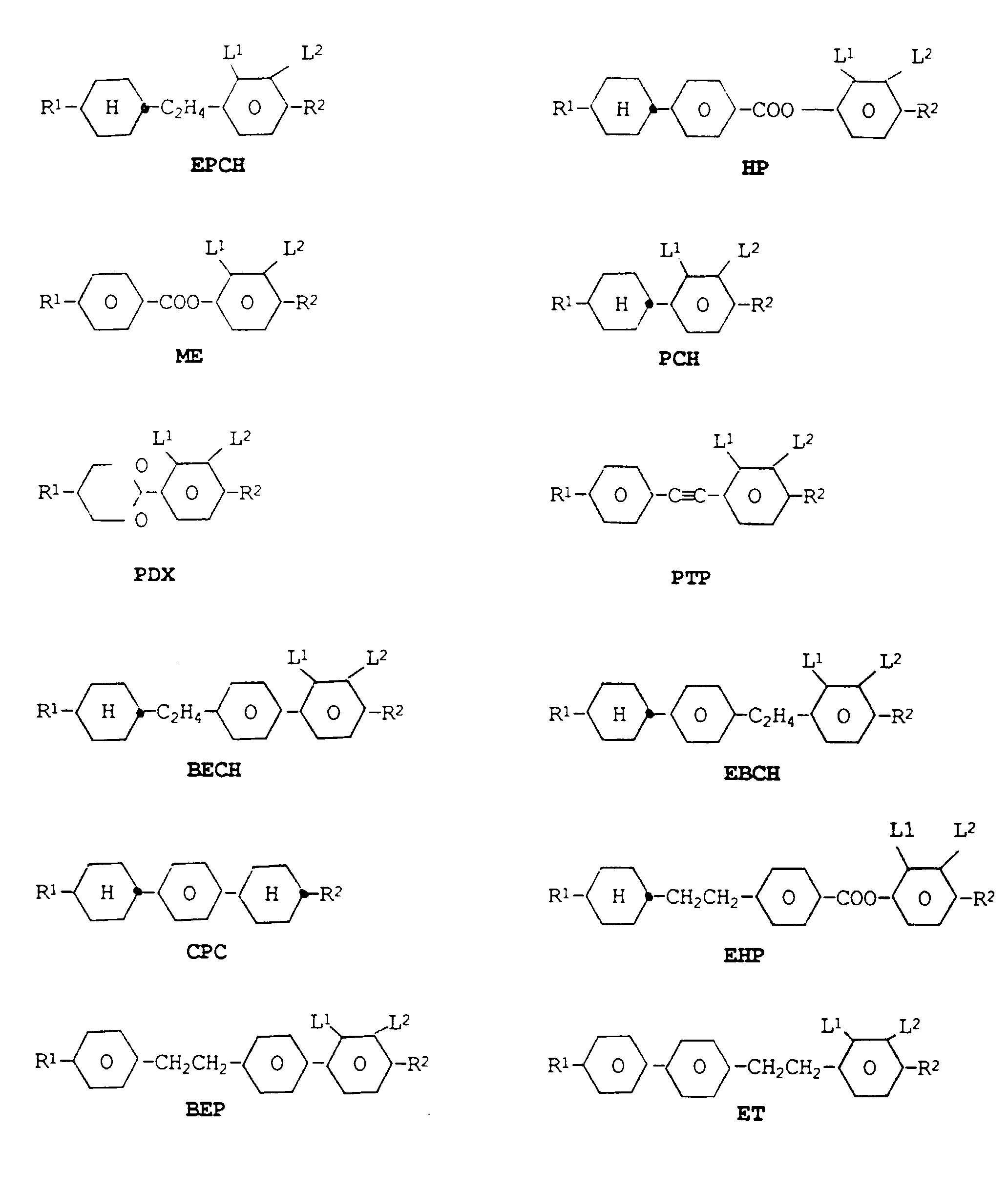

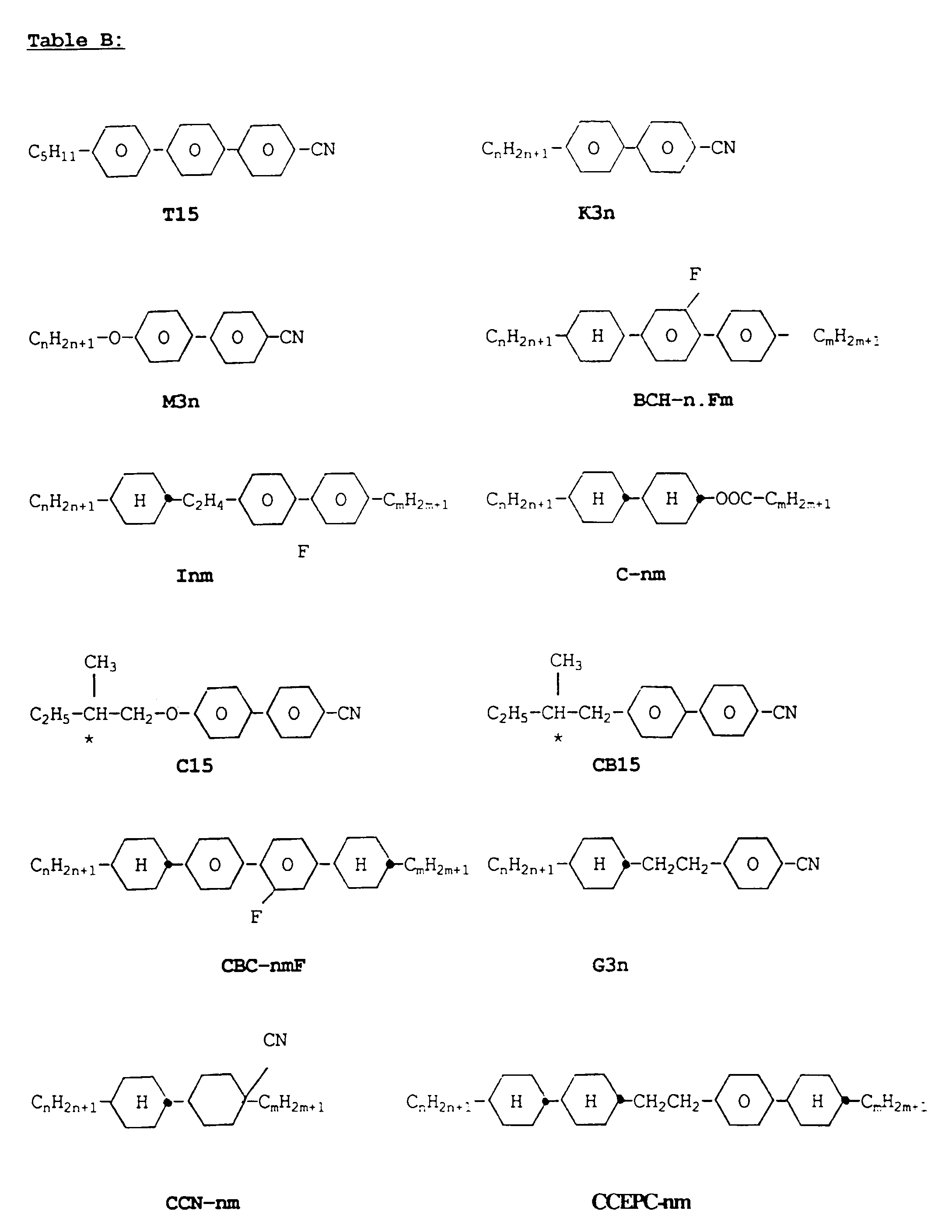

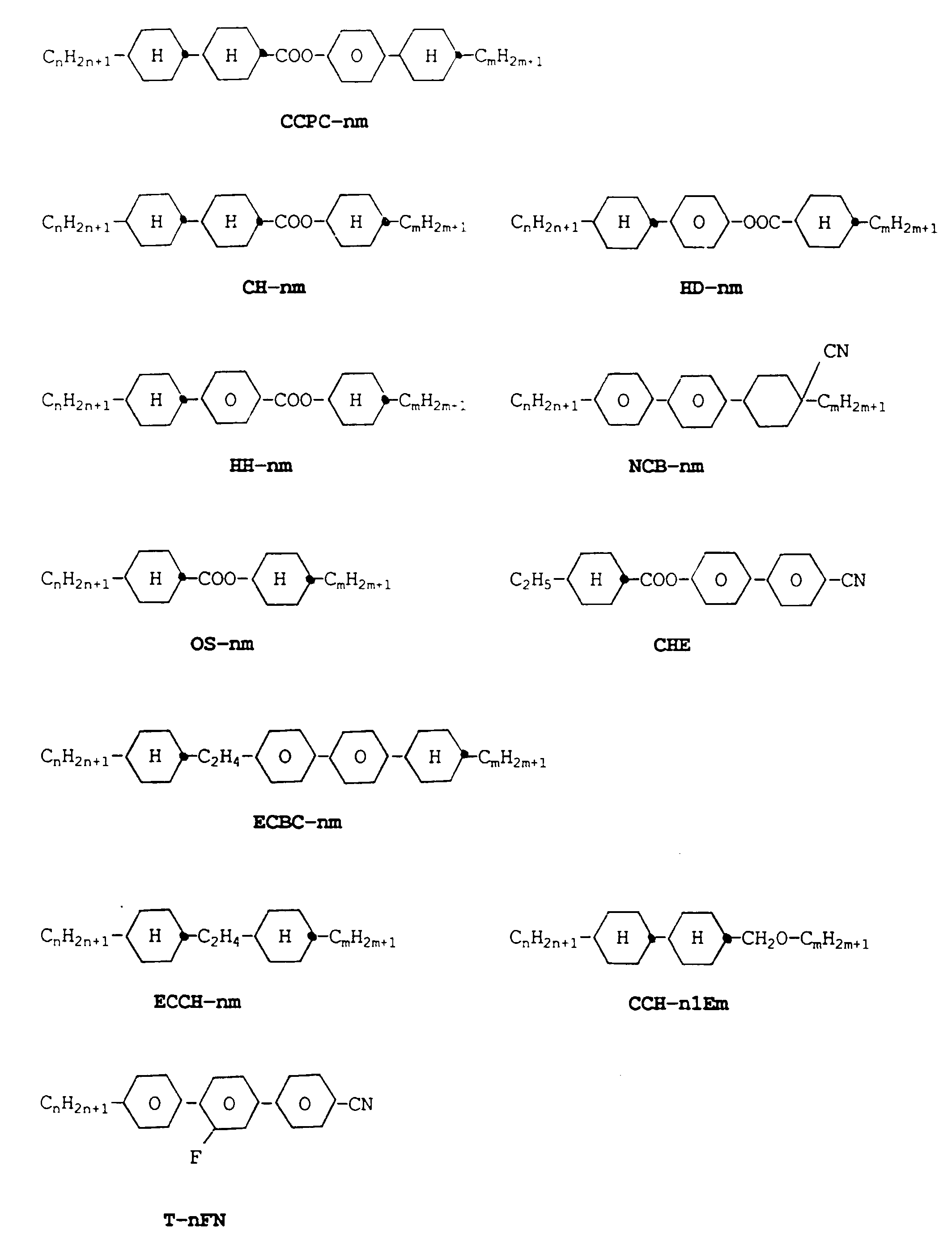

Clₑᵤ is a mixture consisting of
23.5 % of D-3Cl,
26.3 % of D-5Cl,
27.0 % of CP-3Cl and
23.2 % of CP-5Cl.

Cl.Fₑᵤ is a mixture consisting of
22.50 % of D-3Cl.F
22.50 % of D-5Cl.F
30.25 % of CP-3Cl.F
24.75 % of CP-5Cl.F

Iₑᵤ is a mixture consisting of
33.3 % of I32
33.3 % of I52
33.3 % of I35

The following liquid-crystal mixtures show advantageous properties in SFA.

### Examples 1a), b) and c)

The composition and data for further mixtures are as follows:

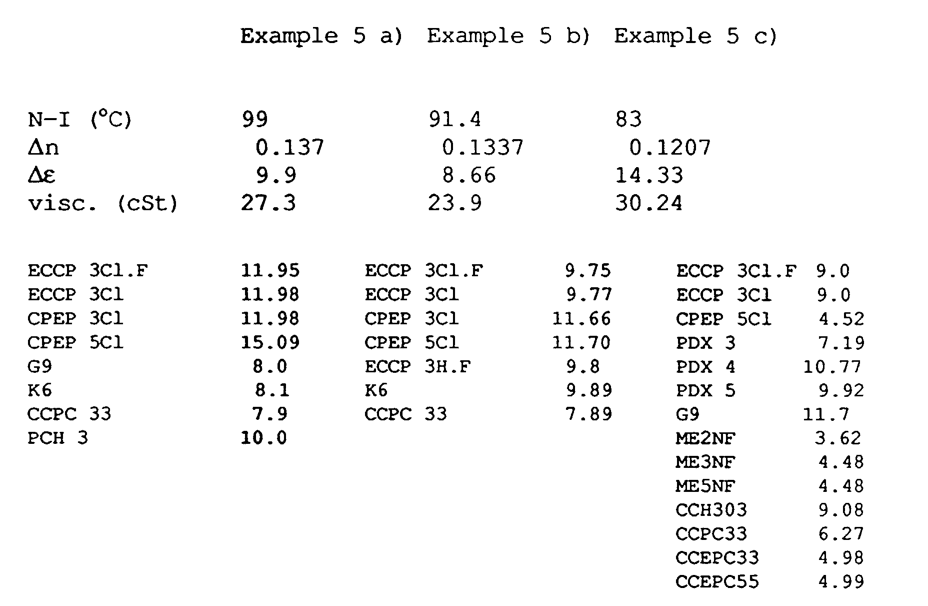

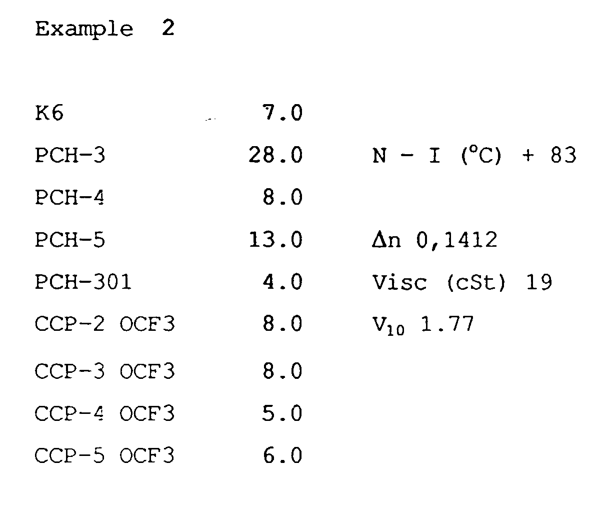

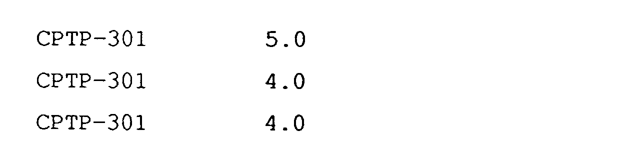

| Example 3 | | |
|---|---|---|
| ME2N.F | 2.0 | |
| ME3N.F | 2.0 | N - I (°C) + 94 |
| PCH-3 | 18.0 | Δn + 0.1174 |
| PCH-5 | 11.0 | |
| PCH-7 | 10.0 | Visc (cSt) 20 |
| PCH-301 | 5.0 | V₁₀ 2.07 |
| CPTP-303 | 5.0 | |
| CCP-20CF3 | 9.0 | |
| CCP-3OCF3 | 10.0 | |
| CCP-5OCF3 | 9.0 | |
| ECCP-32 | 5.0 | |
| ECCP-33 | 5.0 | |
| ECCP-31 | 5.0 | |
| ECCP-3 | 4.0 | |

| Example 4 | | |
|---|---|---|
| PCH-3 | 18.0 | S < -20 N 94 I |
| PCH-5 | 11.0 | V₁₀ 2.07 volt |
| PCH-7 | 10.0 | Δn 0.1174 |
| ME2N.F | 2.0 | |
| ME3N.F | 2.0 | |
| CPTP-303 | 5.0 | |
| CCP-2OCF3 | 9.0 | |
| CCP-3OCF3 | 10.0 | |
| CCP-5OCF3 | 9.0 | |
| ECCP-32 | 5.0 | |
| ECCP33 | 5.0 | |
| ECCP31 | 5.0 | |
| ECCP3 | 4.0 | |

| Example 5 | | |
|---|---|---|
| K6 | 7.0 | S < -40 N 83 I |
| CCP-2OCF3 | 8.0 | Δn 0.1412 |
| CCP-3OCF3 | 8.0 | |
| CCP-4OCF3 | 5.0 | |
| CCP-5OCF3 | 6.0 | |
| PCH-3 | 28.0 | |
| PCH-4 | 8.0 | |
| PCH-5 | 13.0 | |
| PCH-301 | 4.0 | |
| CPTP-301 | 5.0 | |
| CPTP-302 | 4.0 | |
| CPTP-303 | 4.0 | |

| | Example 6 | | Example 7 | |
|---|---|---|---|---|
| N-I | + 92° | | + 90 ° | |
| Δn | +0.1451 | | +0.1301 | |
| V₁₀ | 2.52 | | 1.94 | |
| | PCH-6F | 8.00 | PCH-2 | 9.00 |
| | CCP-3OCF3 | 10.00 | PCH-3 | 22.00 |
| | CCP-4OCF3 | 9.00 | PCH-5 | 12.00 |
| | CCP-5OCF3 | 9.00 | PCH-301 | 13.00 |
| | BCH-3F.F | 13.00 | CCP-3OCF3 | 7.00 |
| | BCH-5F.F | 12.00 | CCP-5OCF3 | 7.00 |
| | BEP-3F.CL | 13.00 | ECCP-33 | 6.00 |
| | BEP-5F.Cl | 13.00 | ECCP-3F | 6.00 |
| | BCH-52F | 13.00 | ECCP-3 | 5.00 |
| | | | CPTP-301 | 4.00 |
| | | | CPTP-302 | 4.00 |
| | | | CPTP-303 | 5.00 |

| | Example 8 | | Example 9 | |
|---|---|---|---|---|
| N-I | + 78° | | + 93 ° | |
| Δn | +0.1263 | | +0.1340 | |
| V₁₀ | 2.11 | | 1.93 | |
| | G9 | 11.00 | K6 | 6.00 |
| | PCH-3 | 24.00 | PCH-2 | 3.00 |
| | PCH-5 | 5.00 | PCH-3 | 22.00 |
| | PCH-301 | 15.00 | PCH-5 | 11.00 |
| | CCP-3OCF3 | 5.00 | PCH-301 | 6.00 |
| | ECCP-3 | 5.00 | CCP-2OCF3 | 7.00 |
| | ECCP-31 | 5.00 | CCP-3OCF3 | 7.00 |
| | ECCP-32 | 5.00 | CCP-4OCF3 | 7.00 |
| | ECCP-33 | 4.00 | CCP-5OCF3 | 7.00 |
| | ECCP-35 | 4.00 | ECCP-3OCF3 | 6.00 |
| | PTP-201 | 6.00 | ECCP-5OCF3 | 6.00 |
| | BCH-32 | 5.00 | CPTP-301 | 4.00 |
| | BCH-52 | 6.00 | CPTP-302 | 4.00 |
| | | | CPTP-303 | 4.00 |

| | Example 10 | | Example 11 | |
|---|---|---|---|---|
| N-I | + 76° | | + 87 ° | |
| Δn | +0.1374 | | +0.1683 | |
| V₁₀ | 2.02 | | 1.86 | |
| | G9 | 10.00 | PCH-3 | 20.00 |
| | PCH-3 | 24.00 | K6 | 7.00 |
| | PCH-5 | 5.00 | K9 | 8.00 |
| | CCH-301 | 10.00 | BCH-5 | 3.00 |
| | PCH-301 | 5.00 | PCH-301 | 6.00 |
| | ECCP-3 | 3.00 | PTP-102 | 8.00 |
| | CCP-3OCF3 | 5.00 | PTP-201 | 8.00 |
| | ECCP-3 | 5.00 | CCP-3OCF3 | 14.00 |
| | ECCP-31 | 5.00 | CCP-5OCF3 | 12.00 |
| | ECCP-32 | 5.00 | ECCP-3F | 6.00 |
| | ECCP-33 | 4.00 | BCH-52F | 14.00 |
| | PTP-102 | 7.00 | | |
| | PTP-201 | 7.00 | | |
| | BCH-32 | 5.00 | | |
| | BCH-52 | 5.00 | | |

| | Example 12 | | Example 13 | |
|---|---|---|---|---|
| N-I | + 70° | | + 86 ° | |
| Δn | +0.1619 | | +0.1082 | |
| V₁₀ | 1.76 | | 1.32 | |
| | PCH-3 | 20.00 | PCH-5F | 6.00 |
| | K6 | 9.00 | PCH-3 | 12.00 |
| | K9 | 7.00 | ME2N.F | 2.00 |
| | ME15 | 9.00 | ME3N.F | 3.00 |
| | PTP-102 | 8.00 | ME5N.F | 4.00 |
| | PTP-201 | 8.00 | ME7N.F | 5.00 |
| | CCP-3OCF3 | 13.00 | CCP-2OCF3 | 7.00 |
| | CCP-5OCF3 | 12.00 | CCP-3OCF3 | 7.00 |
| | ECCP-3F | 4.00 | CCP-4OCF3 | 6.00 |
| | BCH-52F | 8.00 | CCP-5OCF3 | 7.00 |
| | | | ECCP-3OCF3 | 4.00 |
| | | | ECCP-5OCF3 | 4.00 |
| | | | ECCP-3F.F | 6.00 |
| | | | ECCP-5F.F | 5.00 |
| | | | ECCP-3 | 8.00 |
| | | | D-301 | 4.00 |
| | | | D-302 | 4.00 |
| | | | D-401 | 4.00 |
| | | | PTP-201 | 2.00 |

| | Example 14 | | Example 15 | |
|---|---|---|---|---|
| N-I | + 77° | | + 75 ° | |
| Δn | +0.1265 | | +0.1274 | |
| V₁₀ | 2.28 | | 2.01 | |
| | G9 | 11.00 | PCH-3 | 10.00 |
| | K6 | 10.00 | PCH-4 | 7.00 |
| | PCH-3 | 19.00 | K6 | 9.00 |
| | PCH-301 | 18.00 | K9 | 9.00 |
| | CCP-3OCF3 | 5.00 | PCH-301 | 5.00 |
| | ECCP-3 | 5.00 | CCP-3OCF3 | 14.00 |
| | ECCP-31 | 5.00 | CCP-5OCF3 | 10.00 |
| | ECCP-32 | 5.00 | ECCP-3F | 14.00 |
| | ECCP-33 | 5.00 | ECCP-32 | 5.00 |
| | ECCP-35 | 5.00 | | |
| | BCH-32 | 6.00 | | |
| | BCH-52 | 6.00 | | |

| | Example 16 | | Example 17 | |
|---|---|---|---|---|
| N-I | + 90° | | + 81 ° | |
| Δn | - | | +0.1320 | |
| V₁₀ | 1.96 | | 1.86 | |
| | PCH-5F | 6.00 | K6 | 3.00 |
| | PCH-6F | 3.60 | PCH-2 | 4.00 |
| | PCH-7F | 9.60 | PCH-3 | 28.00 |
| | CCP-2OCF3 | 8.20 | PCH-5 | 13.00 |
| | CCP-3OCF3 | 10.20 | PCH-302 | 12.00 |
| | CCP-5OCF3 | 11.00 | CCP-2OCF3 | 8.00 |
| | ECCP-3OCF3 | 8.30 | CCP-3OCF3 | 8.00 |
| | BCH-3F.F | 9.50 | CCP-4OCF3 | 6.00 |
| | BCH-5F.F | 10.30 | CCP-5OCF3 | 6.00 |
| | CP-5CL.F | 11.80 | CPTP-301 | 4.00 |
| | CP-5CL.F | 11.80 | CPTP-302 | 4.00 |
| | | | CPTP-303 | 4.00 |

| | Example 18 | | Example 19 | |
|---|---|---|---|---|
| N-I | + 73° | | + 73 ° | |
| Δn | +0.1712 | | +0.1694 | |
| V₁₀ | 1.72 | | 2.02 | |
| | PCH-3 | 23.00 | K6 | 8.00 |
| | K6 | 9.00 | K9 | 8.00 |
| | K9 | 7.00 | K15 | 4.00 |
| | PTP-4OF | 7.00 | PCH-3 | 4.00 |
| | PTP-102 | 8.00 | PCH-53 | 4.00 |
| | PTP-201 | 8.00 | PCH-302 | 10.00 |
| | CCP-3OCF3 | 13.00 | PTP-4OF | 8.00 |
| | CCP-5OCF3 | 12.00 | PTP-102 | 8.00 |
| | ECCP-3F | 4.00 | PTP-201 | 8.00 |
| | BCH-52F | 9.00 | ECCP-3F | 10.00 |
| | | | CCP-3OCF3 | 13.00 |
| | | | CCP-5OCF3 | 10.00 |
| | | | BCH-52F | 5.00 |

| | Example 20 | | Example 21 | |
|---|---|---|---|---|
| N-I | + 82° | | + 86 ° | |
| Δn | +0.1198 | | +0.1221 | |
| V₁₀ | 2.02 | | 1.96 | |
| | PCH-3 | 22.00 | PCH-3 | 22.00 |
| | PCH-4 | 15.00 | PCH-4 | 20.00 |
| | PCH-53 | 5.00 | PTP-201 | 5.00 |
| | PTP-201 | 6.00 | CCP-3OCF3 | 14.00 |
| | CCP-3OCF3 | 14.00 | CCP-5OCF3 | 12.00 |
| | CCP-5OCF3 | 12.00 | ECCP-3F | 13.00 |
| | ECCP-3F | 13.00 | BCH-52F | 14.00 |
| | BCH-52F | 13.00 | | |

| | Example 22 a) | | Example 22 b) | |
|---|---|---|---|---|
| N-I | + 83° | | + 86 ° | |
| Δn | +0.1211 | | +0.1229 | |
| V₁₀ | 1.94 | | 2.00 | |
| | PCH-3 | 22.00 | PCH-3 | 22.00 |
| | PCH-4 | 20.00 | PCH-4 | 20.00 |
| | PCH-53 | 2.00 | PTP-201 | 6.00 |
| | PTP-201 | 5.00 | CCP-3OCF3 | 14.00 |
| | CCP-3OCF3 | 14.00 | ECCP-3F | 13.00 |
| | CCP-5OCF3 | 12.00 | ECCP-5F | 12.00 |
| | ECCP-3F | 12.00 | BCH-52F | 13.00 |
| | BCH-52F | 13.00 | | |

| | Example 23 | | Example 24 | |
|---|---|---|---|---|
| N-I | + 92° | | + 84 ° | |
| Δn | +0.1347 | | +0.1272 | |
| V₁₀ | 1.86 | | 1.86 | |
| | K6 | 7.00 | ME2N.F | 2.00 |
| | PCH-2 | 3.00 | G9 | 10.00 |
| | PCH-3 | 22.00 | PCH-3 | 21.00 |
| | PCH-5 | 10.00 | PCH-4 | 12.00 |
| | PCH-301 | 6.00 | PCH-5 | 10.00 |
| | CCP-2OCF3 | 6.00 | PCH-301 | 2.00 |
| | CCP-3OCF3 | 6.00 | CPTP-301 | 4.00 |
| | CCP-4OCF3 | 6.00 | CPTP-302 | 5.00 |
| | CCP-5OCF3 | 6.00 | CCP-2OCF3 | 7.00 |
| | ECCP-3OCF3 | 4.00 | CCP-3OCF3 | 7.00 |
| | ECCP-5OCF3 | 4.00 | CCP-4OCF3 | 7.00 |
| | ECCP-3F.F | 4.00 | CCP-5OCF3 | 7.00 |
| | ECCP-5F.F | 4.00 | ECCP-33 | 6.00 |
| | CPTP-301 | 4.00 | | |
| | CPTP302 | 4.00 | | |
| | CPTP-303 | 4.00 | | |

| | Example 25 | | Example 26 | |
|---|---|---|---|---|
| N-I | + 84° | | + 86 ° | |
| Δn | +0.1288 | | +0.1295 | |
| V₁₀ | 1.80 | | 1.80 | |
| | ME2N.F | 2.00 | ME2N.F | 2.00 |
| | PCH-3 | 21.00 | PCH-3 | 21.00 |
| | PCH-4 | 12.00 | PCH-4 | 12.00 |
| | PCH-5 | 20.00 | PCH-5 | 20.00 |
| | PCH-301 | 2.00 | PCH-301 | 4.00 |
| | CPTP-301 | 4.00 | CPTP-301 | 4.00 |
| | CPTP-302 | 5.00 | CPTP-302 | 5.00 |
| | CCP-2OCF3 | 7.00 | CCP-2OCF3 | 7.00 |
| | CCP-3OCF3 | 7.00 | CCP-3OCF3 | 7.00 |
| | CCP-4OCF3 | 7.00 | CCP-4OCF3 | 7.00 |
| | CCP-5OCF3 | 7.00 | CCP-5OCF3 | 7.00 |
| | ECCP-33 | 6.00 | ECCP-3 | 4.00 |

| | Example 27 | | Example 28 | |
|---|---|---|---|---|
| N-I | + 92° | | + 78 ° | |
| Δn | +0.1350 | | +0.1675 | |
| V₁₀ | 1.95 | | 2.04 | |
| | K6 | 7.00 | PCH-5F | 9.00 |
| | PCH-3 | 25.00 | G9 | 16.00 |
| | PCH-5 | 10.00 | PCH-5 | 11.00 |
| | PCH-301 | 6.00 | K9 | 6.00 |
| | CCP-2OCF3 | 5.00 | K15 | 6.00 |
| | CCP-3OCF3 | 5.00 | PCH-302 | 8.00 |
| | CCP-4OCF3 | 5.00 | PTP-102 | 5.00 |
| | CCP-5OCF3 | 5.00 | PTP-201 | 6.00 |
| | ECCP-3OCF3 | 4.00 | CPTP-301 | 4.00 |
| | ECCP-5OCF3 | 4.00 | CPTP-302 | 4.00 |
| | ECCP-3F.F | 6.00 | CPTP-303 | 4.00 |
| | ECCP-5F.F | 6.00 | CCP-3OCF3 | 7.00 |
| | CPTP-301 | 4.00 | BCH-32 | 7.00 |
| | CPTP-302 | 4.00 | BCH-52 | 7.00 |
| | CPTP-303 | 4.00 | | |

| | Example 29 | | Example 30 | |
|---|---|---|---|---|
| N-I | + 87° | | + 81 ° | |
| Δn | +0.1262 | | +0.1267 | |
| V₁₀ | 1.80 | | 1.88 | |
| | ME2N.F | 2.00 | PCH-2 | 7.00 |
| | ME3N.F | 2.00 | PCH-3 | 28.00 |
| | PCH-3 | 20.00 | PCH-5 | 13.00 |
| | PCH-4 | 12.00 | PCH-302 | 9.00 |
| | PCH-5 | 18.00 | CCH-303 | 3.00 |
| | CPTP-301 | 4.00 | CCP-2OCF3 | 7.00 |
| | CPTP-302 | 4.00 | CCP-3OCF3 | 7.00 |
| | CCP-2OCF3 | 8.00 | CCP-4OCF3 | 7.00 |
| | CCP-3OCF3 | 8.00 | CCP-5OCF3 | 6.00 |
| | CCP-4OCF3 | 8.00 | CPTP-301 | 4.00 |
| | CCP-5OCF3 | 8.00 | CPTP-302 | 4.00 |
| | ECCP-33 | 6.00 | CPTP-303 | 4.00 |

| | Example 31 | | Example 32 | |
|---|---|---|---|---|
| N-I | + 81° | | + 71 ° | |
| Δn | +0.1527 | | +0.1695 | |
| V₁₀ | 1.94 | | 1.75 | |
| | K6 | 3.00 | PCH-3 | 16.00 |
| | PCH-3 | 22.00 | K6 | 9.00 |
| | PCH-5 | 15.00 | K9 | 6.00 |
| | PCH-301 | 15.00 | K15 | 6.00 |
| | PTP-102 | 6.00 | ME15 | 8.00 |
| | PTP-201 | 6.00 | PTP-102 | 8.00 |
| | CCP-3OCF3 | 6.00 | PTP-201 | 9.00 |
| | CCP-5OCF3 | 6.00 | CCP-3OCF3 | 13.00 |
| | ECCP-3F | 6.00 | CCP-5OCF3 | 10.00 |
| | ECCP-3 | 5.00 | ECCP-3F | 5.00 |
| | CPTP-301 | 3.00 | BCH-52F | 10.00 |
| | CPTP-302 | 3.00 | | |
| | CPTP-303 | 4.00 | | |

| | Example 33 | | Example 34 | |
|---|---|---|---|---|
| N-I | + 79° | | + 89 ° | |
| Δn | +0.1545 | | +0.1744 | |
| V₁₀ | 2.50 | | 2.02 | |
| | PCH-5F | 6.00 | PCH-3 | 20.00 |
| | PCH-6F | 6.00 | PCH-5 | 18.00 |
| | PCH-7F | 5.00 | BCH-5 | 6.00 |
| | CCP-2OCF3 | 7.00 | PTP-4OF | 5.00 |
| | CCP-3OCF3 | 10.00 | PTP-102 | 8.00 |
| | CCP-5OCF3 | 10.00 | PTP-201 | 8.00 |
| | BCH-3F.F | 13.00 | ECCP-3F | 13.00 |
| | BCH-5F.F | 13.00 | CPTP-301 | 5.00 |
| | PTP-4OF | 10.00 | BCH-32 | 2.00 |
| | PTP-6OF | 8.00 | BCH-52F | 15.00 |
| | PTP-102 | 5.00 | | |
| | PTP-201 | 5.00 | | |
| | CPTP-301 | 2.00 | | |

| | Example 35 | | Example 36 | |
|---|---|---|---|---|
| N-I | + 70° | | + 77 ° | |
| Δn | +0.1680 | | +0.1388 | |
| V₁₀ | 1.91 | | 2.01 | |
| | PCH-3 | 24.00 | PCH-3 | 23.00 |
| | K6 | 6.00 | PCH-5 | 14.00 |
| | PCH-302 | 12.00 | PCH-301 | 17.00 |
| | PTP-4OF | 5.00 | CCP-3OCF3 | 4.00 |
| | PTP-102 | 8.00 | ECCP-3 | 5.00 |
| | PTP-201 | 8.00 | ECCP-31 | 5.00 |
| | CCP-3OCF3 | 10.00 | ECCP-32 | 4.00 |
| | BCH-32 | 10.00 | ECCP-33 | 4.00 |
| | BCH-52F | 14.00 | PTP-102 | 6.00 |
| | | | PTP-201 | 6.00 |
| | | | BCH-32 | 6.00 |
| | | | BCH-52 | 6.00 |

| | Example 37 | | Example 38 | |
|---|---|---|---|---|
| N-I | + 78° | | + 78° | |
| Δn | +0.1382 | | +0.1437 | |
| V₁₀ | 1.38 | | 2.14 | |
| | ME2N.F | 2.00 | K9 | 12.00 |
| | ME3N.F | 4.00 | PCH-5 | 22.00 |
| | ME5N.F | 5.00 | PCH-5F | 8.00 |
| | HP-3N.F | 3.00 | PCH-7F | 8.00 |
| | HP-4N.F | 4.00 | CCP-3OCF3 | 5.00 |
| | HP-5N.F | 5.00 | CCP-5OCF3 | 5.00 |
| | K6 | 6.00 | ECCP-31 | 5.00 |
| | PCH-3 | 23.00 | ECCP-32 | 5.00 |
| | PCH-5 | 20.00 | ECCP-33 | 5.00 |
| | CCP-3OCF3 | 9.00 | ECCP-35 | 5.00 |
| | CCP-4OCF3 | 8.00 | PTP-201 | 5.00 |
| | CCP-5OCF3 | 9.00 | PTP-102 | 5.00 |
| | CPTP-302 | 2.00 | CPTP-302 | 5.00 |
| | | | BCH-52 | 5.00 |

| | Example 39 | | Example 40 | |
|---|---|---|---|---|
| N-I | + 79° | | + 78 ° | |
| Δn | +0.1517 | | +0.1608 | |
| V₁₀ | 2.12 | | 1.99 | |
| | K6 | 6.00 | K6 | 2.00 |
| | K9 | 12.00 | K9 | 12.00 |
| | PCH-5 | 16.00 | PCH-5 | 11.00 |
| | PCH-5F | 8.00 | PCH-5F | 8.00 |
| | PCH-7F | 7.00 | PCH-7F | 7.00 |
| | CCP-3OCF3 | 5.00 | CCP-3OCF3 | 5.00 |
| | CCP-5OCF3 | 5.00 | CCP-5OCF3 | 5.00 |
| | ECCP-31 | 6.00 | ECCP-31 | 6.00 |
| | ECCP-32 | 5.00 | ECCP-32 | 5.00 |
| | ECCP-33 | 5.00 | ECCP-33 | 5.00 |
| | ECCP-35 | 5.00 | PTP-201 | 5.00 |
| | PTP-201 | 5.00 | PTP-102 | 5.00 |
| | PTP-102 | 5.00 | CPTP-302 | 5.00 |
| | CPTP-302 | 5.00 | BCH-32 | 5.00 |
| | BCH-52 | 5.00 | BCH-52 | 5.00 |

| | Example 41 | | Example 42 | |
|---|---|---|---|---|
| N-I | + 88° | | + 70 ° | |
| Δn | +0.1453 | | +0.1651 | |
| V₁₀ | 1.84 | | 1.92 | |
| | ME2N.F | 2.00 | PCH-3 | 14.00 |
| | ME3N.F | 3.00 | K6 | 7.00 |
| | K6 | 8.00 | K9 | 7.00 |
| | PCH-3 | 21.00 | PCH-53 | 3.00 |
| | PCH-5 | 24.00 | PCH-302 | 11.00 |
| | CPTP-301 | 6.00 | PTP-4OF | 7.00 |
| | CPTP-302 | 5.00 | PTP-102 | 7.00 |
| | CCP-2OCF3 | 6.00 | PTP-201 | 8.00 |
| | CCP-3OCF3 | 5.00 | ECCP-3F | 5.00 |
| | CCP-4OCF3 | 6.00 | CCP-3OCF3 | 10.00 |
| | CCP-5OCF3 | 5.00 | CCP-5OCF3 | 8.00 |
| | ECCP-31 | 5.00 | BCH-32 | 5.00 |
| | ECCP-32 | 4.00 | BCH-52F | 10.00 |

| | Example 43 | | Example 44 | |
|---|---|---|---|---|
| N-I | + 76° | | + 73 ° | |
| Δn | +0.1382 | | +0.1381 | |
| V₁₀ | 1.30 | | - | |
| | ME2N.F | 3.00 | PCH-3 | 23.00 |
| | ME3N.F | 4.00 | G9 | 14.00 |
| | ME5N.F | 6.00 | PCH-301 | 17.00 |
| | HP-3N.F | 3.00 | CCP-3OCF3 | 4.00 |
| | HP-4N.F | 4.00 | ECCP-3 | 5.00 |
| | HP-5N.F | 5.00 | ECCP-31 | 5.00 |
| | K6 | 5.00 | ECCP-32 | 4.00 |
| | PCH-3 | 23.00 | ECCP-33 | 4.00 |
| | PCH-5 | 21.00 | PTP-102 | 6.00 |
| | CCP-3OCF3 | 8.00 | PTP-201 | 6.00 |
| | CCP-4OCF3 | 8.00 | BCH-32 | 6.00 |
| | CCP-5OCF3 | 8.00 | BCH-52 | 6.00 |
| | CPTP-302 | 2.00 | | |

| | Example 45 | | Example 46 | |
|---|---|---|---|---|
| N-I | + 84° | | +103 ° | |
| Δn | +0.1396 | | +0.1484 | |
| V₁₀ | 1.64 | | 2.02 | |
| | K6 | 7.00 | K6 | 7.00 |
| | ME2N.F | 3.00 | PCH-3 | 28.00 |
| | ME3N.F | 3.00 | PCH-4 | 5.00 |
| | ME5N.F | 3.00 | PCH-5 | 5.00 |
| | PCH-3 | 12.00 | PCH-301 | 4.00 |
| | PCH-4 | 8.00 | CCP-2OCF3 | 8.00 |
| | PCH-5 | 10.00 | CCP-3OCF3 | 8.00 |
| | PCH-301 | 9.00 | CCP-4OCF3 | 5.00 |
| | CCP-2OCF3 | 8.00 | CCP-5OCF3 | 6.00 |
| | CCP-3OCF3 | 8.00 | CPTP-301 | 5.00 |
| | CCP-4OCF3 | 8.00 | CPTP-302 | 6.00 |
| | CCP-5OCF3 | 8.00 | CPTP-303 | 3.00 |
| | CPTP-301 | 5.00 | ECCP-3 | 10.00 |
| | CPTP-302 | 4.00 | | |
| | CPTP-303 | 4.00 | | |

| | Example 47 | | Example 48 | |
|---|---|---|---|---|
| N-I | + 69° | | + 71 ° | |
| Δn | +0.1387 | | +0.1458 | |
| V₁₀ | 1.68 | | 1.69 | |
| | PCH-3 | 22.00 | PCH-3 | 20.00 |
| | PCH-4 | 17.00 | PCH-4 | 10.00 |
| | PCH-5 | 6.0 | K6 | 9.0 |
| | K6 | 9.0 | K9 | 9.0 |
| | K9 | 3.0 | K15 | 12.0 |
| | PTP-35 | 5.0 | BCH-5 | 2.0 |
| | CCP-3OCF3 | 12.0 | CCP-3OCF3 | 14.0 |
| | CCP-5OCF3 | 10.0 | CCP-5OCF3 | 10.0 |
| | BCH-32 | 5.0 | ECCP-3F | 14.0 |
| | BCH-52F | 11.0 | | |

| | Example 49 | | Example 50 | |
|---|---|---|---|---|
| N-I | + 69° | | + 71 ° | |
| Δn | +0.1665 | | +0.1391 | |
| V₁₀ | 1.94 | | 1.67 | |
| | PCH-3 | 20.00 | PCH-3 | 20.00 |
| | PCH-5 | 4.0 | PCH-4 | 12.0 |
| | K6 | 6.0 | K6 | 9.0 |
| | PCH-302 | 12.0 | K9 | 9.0 |
| | PTP-35 | 9.0 | K15 | 9.0 |
| | PTP-102 | 7.0 | CCP-3OCF3 | 15.0 |
| | PTP-201 | 8.0 | CCP-5OCF3 | 12.0 |
| | CCP-3OCF3 | 8.0 | ECCP-3F | 14.0 |
| | BCH-32 | 10.0 | | |
| | BCH-52F | 16.0 | | |

| | Example 51 | | Example 52 | |
|---|---|---|---|---|
| N-I | + 70° | | + 69 ° | |
| Δn | +0.1398 | | +0.1383 | |
| V₁₀ | 1.74 | | 1.74 | |
| | K6 | 7.00 | K6 | 7.00 |
| | PCH-3 | 28.0 | PCH-3 | 25.0 |
| | PCH-5 | 13.0 | PCH-5 | 13.0 |
| | PCH-301 | 11.0 | PCH-5F | 5.0 |
| | CCP-2OCF3 | 8.0 | PCH-301 | 8.0 |
| | CCP-3OCF3 | 6.0 | CCP-2OCF3 | 8.0 |
| | CCP-4OCF3 | 5.0 | CCP-3OCF3 | 5.0 |
| | CCP-5OCF3 | 4.0 | CCP-4OCF3 | 5.0 |
| | ECCP-32 | 4.0 | CCP-5OCF3 | 4.0 |
| | PTP-102 | 4.0 | ECCP-32 | 5.0 |
| | PTP-201 | 4.0 | PTP-102 | 4.0 |
| | CPTP-301 | 3.0 | PTP-201 | 4.0 |
| | CPTP-302 | 3.0 | CPTP-301 | 3.0 |
| | | | CPTP-302 | 4.0 |

| | Example 53 | | Example 54 | |
|---|---|---|---|---|
| N-I | + 72° | | + 68 ° | |
| Δn | +0.1431 | | +0.1418 | |
| V₁₀ | 1.80 | | 1.85 | |
| | K6 | 7.0 | PYP-3F | 5.0 |
| | PCH-3 | 25.0 | PYP-5F | 9.0 |
| | PCH-5 | 11.0 | PCH-5F | 9.0 |
| | PCH-5F | 10.0 | PCH-3 | 21.0 |
| | PCH-301 | 7.0 | PCH-301 | 12.0 |
| | CCP-3OCF3 | 9.0 | CCP-3OCF3 | 4.0 |
| | CCP-5OCF3 | 8.0 | CCP-5OCF3 | 4.0 |
| | ECCP-3 | 9.0 | ECCP-32 | 4.0 |
| | PTP-102 | 4.0 | ECCP-33 | 4.0 |
| | PTP-201 | 4.0 | ECCP-3 | 8.0 |
| | CPTP-301 | 3.0 | PTP-102 | 4.0 |
| | CPTP-302 | 4.0 | PTP-201 | 4.0 |
| | | | CPTP-301 | 6.0 |
| | | | CPTP-302 | 6.0 |

| | Example 55 | | Example 56 | |
|---|---|---|---|---|
| N-I | + 71° | | + 84 ° | |
| Δn | +0.1674 | | +0.1294 | |
| V₁₀ | 1.98 | | 1.85 | |
| | K6 | 8.0 | PCH-2 | 9.0 |
| | K9 | 9.0 | PCH-3 | 22.0 |
| | K12 | 6.0 | PCH-5 | 14.0 |
| | PCH-3 | 3.0 | PCH-301 | 9.0 |
| | PCH-53 | 4.0 | CCP-2OCF3 | 8.0 |
| | PCH-302 | 10.0 | CCP-3OCF3 | 8.0 |
| | PTP-35 | 8.0 | CCP-4OCF3 | 5.0 |
| | PTP-102 | 7.0 | CCP-5OCF3 | 6.0 |
| | PTP-201 | 7.0 | PTP-102 | 6.0 |
| | ECCP-3F | 10.0 | CPTP-301 | 5.0 |
| | CCP-3OCF3 | 13.0 | CBC-33F | 4.0 |
| | CCP-5OCF3 | 10.0 | CBC-53F | 4.0 |
| | BCH-52F | 5.0 | | |

| | Example 57 | | Example 58 | |
|---|---|---|---|---|
| N-I | + 70° | | + 72 ° | |
| Δn | +0.1590 | | +0.1424 | |
| V₁₀ | 1.67 | | 1.97 | |
| | K6 | 7.0 | PYP-3F | 5.0 |
| | K9 | 10.0 | PYP-5F | 8.0 |
| | PCH-2 | 8.0 | PCH-5F | 9.0 |
| | PCH-3 | 14.0 | PCH-3 | 21.0 |
| | PCH-301 | 13.0 | PCH-301 | 11.0 |
| | CCP-2OCF3 | 8.0 | CCP-3OCF3 | 4.0 |
| | CCP-3OCF3 | 8.0 | CCP-5OCF3 | 5.0 |
| | CCP-4OCF3 | 5.0 | ECCP-32 | 5.0 |
| | CCP-5OCF3 | 6.0 | ECCP-33 | 4.0 |
| | PTP-102 | 6.0 | ECCP-3 | 8.0 |
| | PTP-201 | 6.0 | PTP-102 | 4.0 |
| | CPTP-301 | 5.0 | PTP-201 | 4.0 |
| | CPTP-302 | 4.0 | CPTP-301 | 6.0 |
| | | | CPTP-302 | 6.0 |

| | Example 59 | | Example 60 | |
|---|---|---|---|---|
| N-I | + 71° | | + 76 ° | |
| Δn | +0.1397 | | +0.1401 | |
| V₁₀ | 1.79 | | 1.68 | |
| | K6 | 7.0 | PCH-3 | 20.0 |
| | PCH-3 | 23.0 | PCH-4 | 6.0 |
| | PCH-5 | 13.0 | K6 | 9.0 |
| | PCH-5F | 5.0 | K9 | 9.0 |
| | PCH-301 | 9.0 | K15 | 10.0 |
| | CCP-2OCF3 | 8.0 | CCP-3OCF3 | 15.0 |
| | CCP-3OCF3 | 5.0 | CCP-4OCF3 | 5.0 |
| | CCP-4OCF3 | 5.0 | CCP-5OCF3 | 12.0 |
| | CCP-5OCF3 | 4.0 | ECCP-3F | 14.0 |
| | ECCP-32 | 5.0 | | |
| | PTP-102 | 4.0 | | |
| | PTP-201 | 4.0 | | |
| | CPTP-301 | 4.0 | | |
| | CPTP-302 | 4.0 | | |

| | Example 61 | | Example 62 | |
|---|---|---|---|---|
| N-I | + 81° | | + 70 ° | |
| Δn | +0.1355 | | +0.1407 | |
| V₁₀ | 1.82 | | 1.64 | |
| | PCH-3 | 22.0 | PCH-3 | 20.0 |
| | PCH-4 | 17.0 | PCH-4 | 16.0 |
| | K6 | 6.0 | PCH-5 | 7.0 |
| | PCH-302 | 7.0 | K6 | 9.0 |
| | PTP-201 | 6.0 | K9 | 9.0 |
| | CCP-3OCF3 | 14.0 | BCH-5 | 3.0 |
| | CCP-5OCF3 | 12.0 | PTP-201 | 3.0 |
| | ECCP-3F | 10.0 | CCP-3OCF3 | 15.0 |
| | CPTP-301 | 6.0 | CCP-5OCF3 | 12.0 |
| | | | ECCP-3F | 6.0 |

| | Example 63 | | Example 64 | |
|---|---|---|---|---|
| N-I | + 81° | | + 77 ° | |
| Δn | +0.1329 | | +0.1622 | |
| V₁₀ | 1.93 | | - | |
| | PCH-3 | 22.0 | PCH-3 | 20.0 |
| | PCH-4 | 17.0 | PCH-4 | 6.0 |
| | PCH-302 | 9.0 | K6 | 9.0 |
| | PTP-102 | 5.0 | K9 | 7.0 |
| | PTP-201 | 6.0 | PTP-102 | 8.0 |
| | CCP-3OCF3 | 14.0 | PTP-201 | 8.0 |
| | CCP-5OCF3 | 12.0 | CCP-3OCF3 | 18.0 |
| | ECCP-3F | 11.0 | CCP-5OCF3 | 14.0 |
| | CPTP-301 | 4.0 | BCH-52F | 10.0 |

| | Example 65 | | Example 66 | |
|---|---|---|---|---|
| N-I | + 91° | | + 87 ° | |
| Δn | +0.1603 | | +0.1724 | |
| V₁₀ | 1.94 | | 1.99 | |
| | K6 | 7.0 | PCH-5F | 4.0 |
| | K9 | 10.0 | PCH-3 | 17.0 |
| | PCH-2 | 9.0 | PCH-5 | 12.0 |
| | PCH-3 | 14.0 | K9 | 6.0 |
| | PCH-301 | 9.0 | K15 | 4.0 |
| | CCP-3OCF3 | 8.0 | PCH-302 | 10.0 |
| | CCP-5OCF3 | 8.0 | PTP-102 | 5.0 |
| | ECCP-33 | 6.0 | PTP-201 | 7.0 |
| | ECCP-3F | 6.0 | CPTP-301 | 5.0 |
| | ECCP-3 | 5.0 | CPTP-302 | 4.0 |
| | PTP-201 | 5.0 | CPTP-303 | 6.0 |
| | CPTP-301 | 4.0 | CCP-3OCF3 | 7.0 |
| | CPTP-302 | 4.0 | CCP-5OCF3 | 7.0 |
| | CPTP-303 | 5.0 | BCH-32 | 6.0 |

| | Example 67 | | Example 68 | |
|---|---|---|---|---|
| N-I | + 89° | | + 81 ° | |
| Δn | +0.1235 | | +0.1202 | |
| V₁₀ | 1.59 | | 2.41 | |
| | ME2N.F | 2.0 | PCH-6F | 5.0 |
| | ME3N.F | 3.0 | PCH-7F | 15.0 |
| | PCH-3 | 12.0 | CCP-3OCF3 | 15.0 |
| | PCH-5 | 8.0 | CCP-5OCF3 | 13.0 |
| | PCH-302 | 14.0 | BCH-3F.F | 14.0 |
| | CCP-3OCF3 | 12.0 | BCH-5F.F | 16.0 |
| | CCP-5OCF3 | 11.0 | BEP-3CL.F | 6.0 |
| | BCH-3F.F | 12.0 | BEP-5CL.F | 8.0 |
| | BCH-5F.F | 10.0 | BCH-52F | 6.0 |
| | BCH-32 | 6.0 | | |
| | BCH-52 | 5.0 | | |
| | BCH-52F | 5.0 | | |

| | Example 69 | | Example 70 | |
|---|---|---|---|---|
| N-I | + 87° | | + 76 ° | |
| Δn | +0.1228 | | +0.1414 | |
| V₁₀ | 2.59 | | 1.81 | |
| | PCH-6F | 5.0 | K6 | 8.0 |
| | PCH-7F | 15.0 | PCH-3 | 25.0 |
| | CCP-3OCF3 | 15.0 | PCH-5 | 10.0 |
| | CCP-5OCF3 | 13.0 | PCH-301 | 12.0 |
| | BCH-3F.F | 14.0 | CCP-3OCF3 | 8.0 |
| | BCH-5F.F | 16.0 | CCP-5OCF3 | 8.0 |
| | PTP-201 | 7.0 | ECCP-3 | 7.0 |
| | BCH-52F | 15.0 | ECCP-3F | 7.0 |
| | | | ECCP-32 | 3.0 |
| | | | PTP-102 | 5.0 |
| | | | PTP-201 | 5.0 |
| | | | CPTP-302 | 2.0 |

| | Example 71 | | Example 72 | |
|---|---|---|---|---|
| N-I | + 77° | | + 73 ° | |
| Δn | +0.1456 | | +0.1422 | |
| V₁₀ | 1.87 | | 1.96 | |
| | PCH-3 | 23.0 | K6 | 8.0 |
| | PCH-5 | 13.0 | PCH-3 | 25.0 |
| | PTP-4OF | 11.0 | PCH-5 | 10.0 |
| | PCH-301 | 9.0 | PCH-301 | 12.0 |
| | CCP-2OCF3 | 7.0 | CCP-3OCF3 | 8.0 |
| | CCP-3OCF3 | 5.0 | CCP-5OCF3 | 8.0 |
| | CCP-4OCF3 | 5.0 | ECCP-3 | 7.0 |
| | CCP-5OCF3 | 5.0 | ECCP-31 | 5.0 |
| | ECCP-3 | 3.0 | ECCP-32 | 5.0 |
| | PTP-102 | 5.0 | PTP-102 | 6.0 |
| | PTP-102 | 4.0 | PTP-201 | 6.0 |
| | PTP-201 | 4.0 | | |
| | CPTP-301 | 4.0 | | |

| | Example 73 | | Example 74 | |
|---|---|---|---|---|
| N-I | + 71° | | + 72 ° | |
| Δn | +0.1411 | | +0.1430 | |
| V₁₀ | 1.90 | | 1.92 | |
| | PCH-3 | 23.0 | K6 | 8.0 |
| | PCH-5 | 14.0 | PCH-3 | 25.0 |
| | PTP-4OF | 8.0 | PCH-5 | 10.0 |
| | PCH-301 | 11.0 | PCH-301 | 14.0 |
| | CCP-2OCF3 | 7.0 | CCP-3OCF3 | 6.0 |
| | CCP-3OCF3 | 5.0 | CCP-5OCF3 | 6.0 |
| | CCP-5OCF3 | 5.0 | ECCP-3 | 9.0 |
| | ECCP-3 | 5.0 | ECCP-31 | 5.0 |
| | ECCP-31 | 5.0 | ECCP-32 | 5.0 |
| | ECCP-32 | 5.0 | PTP-102 | 6.0 |
| | PTP-102 | 6.0 | PTP-201 | 6.0 |
| | PTP-201 | 6.0 | | |

| | Example 75 | | Example 76 | |
|---|---|---|---|---|
| N-I | + 72° | | + 92 ° | |
| Δn | +0.1406 | | +0.1333 | |
| V₁₀ | 1.96 | | 2.24 | |
| | PTP-4OF | 8.0 | PCH-3 | 20.0 |
| | PCH-3 | 23.0 | PCH-5 | 16.0 |
| | PCH-5 | 14.0 | CCP-3OCF3 | 8.0 |
| | PCH-301 | 13.0 | CCP-5OCF3 | 7.0 |
| | CCP-3OCF3 | 7.0 | PCH-301 | 15.0 |
| | CCP-5OCF3 | 7.0 | ECCP-3 | 10.0 |
| | ECCP-3 | 7.0 | ECCP-31 | 6.0 |
| | ECCP-31 | 5.0 | ECCP-32 | 6.0 |
| | ECCP-32 | 5.0 | PTP-102 | 6.0 |
| | PTP-102 | 5.0 | CPTP-302 | 6.0 |
| | PTP-201 | 6.0 | | |

| | Example 77 | | Example 78 | |
|---|---|---|---|---|
| N-I | + 74° | | + 75 ° | |
| Δn | +0.1411 | | +0.1393 | |
| V₁₀ | 1.95 | | 1.81 | |
| | K6 | 7.0 | K6 | 7.0 |
| | PCH-3 | 25.0 | PCH-3 | 25.0 |
| | PCH-5 | 10.0 | PCH-5 | 19.0 |
| | PCH-301 | 13.0 | PCH-301 | 12.0 |
| | CCP-3OCF3 | 8.0 | CCP-3OCF3 | 10.0 |
| | ECCP-3 | 6.0 | CCP-5OCF3 | 11.0 |
| | ECCP-31 | 7.0 | ECCP-3 | 6.0 |
| | ECCP-32 | 6.0 | PTP-102 | 5.0 |
| | ECCP-33 | 6.0 | CPTP-302 | 5.0 |
| | PTP-102 | 6.0 | | |
| | PTP-201 | 6.0 | | |

| | Example 79 | | Example 80 | |
|---|---|---|---|---|
| N-I | + 76° | | + 76 ° | |
| Δn | +0.1379 | | +0.1378 | |
| V₁₀ | 2.00 | | 1.76 | |
| | K6 | 9.0 | ME2N.F | 2.0 |
| | PCH-3 | 24.0 | K6 | 6.0 |
| | PCH-5 | 10.0 | PCH-3 | 24.0 |
| | PCH-301 | 13.0 | PCH-5 | 19.0 |
| | CCP-3OCF3 | 8.0 | PCH-301 | 12.0 |
| | ECCP-3 | 8.0 | CCP-3OCF3 | 10.0 |
| | ECCP-31 | 5.0 | CCP-5OCF3 | 11.0 |
| | ECCP-32 | 5.0 | ECCP-3 | 7.0 |
| | ECCP-33 | 5.0 | PTP-102 | 4.0 |
| | ECCP-35 | 5.0 | CPTP-302 | 5.0 |
| | PTP-102 | 4.0 | | |
| | PTP-201 | 4.0 | | |

| | Example 81 | | Example 82 | |
|---|---|---|---|---|
| N-I | + 77° | | + 81 ° | |
| Δn | +0.1353 | | +0.1385 | |
| V₁₀ | 2.01 | | 1.84 | |
| | K6 | 8.0 | K6 | 7.0 |
| | PCH-3 | 24.0 | PCH-3 | 28.0 |
| | PCH-5 | 11.0 | PCH-5 | 13.0 |
| | PCH-301 | 13.0 | PCH-301 | 12.0 |
| | CCP-3OCF3 | 8.0 | CCP-2OCF3 | 8.0 |
| | ECCP-3 | 8.0 | CCP-3OCF3 | 8.0 |
| | ECCP-31 | 5.0 | CCP-4OCF3 | 5.0 |
| | ECCP-32 | 5.0 | CCP-5OCF3 | 6.0 |
| | ECCP-33 | 5.0 | CPTP-301 | 5.0 |
| | ECCP-35 | 5.0 | CPTP-302 | 4.0 |
| | PTP-102 | 4.0 | CPTP-303 | 4.0 |
| | PTP-201 | 4.0 | | |

| | Example 83 | | Example 84 | |
|---|---|---|---|---|
| N-I | + 77° | | + 77 ° | |
| Δn | +0.1322 | | +0.1281 | |
| V₁₀ | 1.98 | | 2.05 | |
| | K6 | 9.0 | K6 | 9.0 |
| | PCH-3 | 20.0 | PCH-3 | 20.0 |
| | PCH-5 | 14.0 | PCH-5 | 10.0 |
| | PCH-301 | 9.0 | PCH-5F | 6.0 |
| | CCP-3OCF3 | 9.0 | PCH-301 | 11.0 |
| | CCP-5OCF3 | 9.0 | CCP-3OCF3 | 8.0 |
| | ECCP-31 | 5.0 | CCP-5OCF3 | 8.0 |
| | ECCP-32 | 6.0 | ECCP-31 | 5.0 |
| | ECCP-33 | 6.0 | ECCP-32 | 5.0 |
| | ECCP-35 | 5.0 | ECCP-33 | 6.0 |
| | PTP-102 | 4.0 | ECCP-35 | 5.0 |
| | PTP-201 | 4.0 | PTP-102 | 4.0 |
| | | | CPTP-302 | 4.0 |

| | Example 85 | | Example 86 | |
|---|---|---|---|---|
| N-I | + 83° | | + 84 ° | |
| Δn | +0.1698 | | +0.1273 | |
| V₁₀ | 2.03 | | 2.25 | |
| | PCH-5F | 9.0 | PCH-6F | 6.0 |
| | PCH-3 | 14.0 | PCH-7F | 5.0 |
| | PCH-5 | 9.0 | PYP-5F | 5.0 |
| | K9 | 6.0 | CCP-3OCF3 | 15.0 |
| | K15 | 6.0 | CCP-5OCF3 | 13.0 |
| | PCH-302 | 9.0 | ECCP-3F.F | 4.0 |
| | PTP-102 | 5.0 | BCH-3F.F | 18.0 |
| | PTP-201 | 7.0 | BCH-5F.F | 14.0 |
| | CPTP-301 | 5.0 | BEP-3ClF | 10.0 |
| | CPTP-302 | 4.0 | BEP-5ClF | 10.0 |
| | CPTP-303 | 6.0 | | |
| | CCP-3OCF3 | 7.0 | | |
| | CCP-5OCF3 | 7.0 | | |
| | BCH-32 | 6.0 | | |

| | Example 87 | | Example 88 | |
|---|---|---|---|---|
| N-I | + 82° | | + 75 ° | |
| Δn | +0.1286 | | +0.1353 | |
| V₁₀ | 2.22 | | 2.06 | |
| | PCH-6F | 6.0 | K6 | 12.0 |
| | PCH-7F | 10.0 | PCH-3 | 22.0 |
| | CCP-3OCF3 | 15.0 | PCH-5F | 10.0 |
| | CCP-5OCF3 | 7.0 | PCH-301 | 5.0 |
| | EHP-5F.F | 10.0 | CCP-3OCF3 | 7.0 |
| | BCH-3F.F | 18.0 | CCP-5OCF3 | 6.0 |
| | BCH-5F.F | 14.0 | ECCP-31 | 6.0 |
| | BEP-3ClF | 10.0 | ECCP-32 | 6.0 |
| | BEP-5ClF | 10.0 | ECCP-33 | 6.0 |
| | | | ECCP-35 | 6.0 |
| | | | PTP-102 | 6.0 |
| | | | CPTP-302 | 5.0 |

| | Example 89 | | Example 90 | |
|---|---|---|---|---|
| N-I | + 76° | | + 77 ° | |
| Δn | +0.1371 | | +0.1371 | |
| V₁₀ | 1.71 | | 1.64 | |
| | ME2N.F | 2.0 | ME2N.F | 2.0 |
| | ME3N.F | 3.0 | ME3N.F | 3.0 |
| | K6 | 4.0 | K6 | 6.0 |
| | PCH-3 | 24.0 | PCH-3 | 24.0 |
| | PCH-5 | 18.0 | PCH-5 | 16.0 |
| | PCH-301 | 12.0 | PCH-301 | 6.0 |
| | CCP-3OCF3 | 10.0 | CCP-3OCF3 | 11.0 |
| | CCP-5OCF3 | 11.0 | CCP-4OCF3 | 11.0 |
| | ECCP-3 | 7.0 | CCP-5OCF3 | 11.0 |
| | PTP-102 | 4.0 | PTP-102 | 5.0 |
| | CPTP-302 | 5.0 | CPTP-302 | 5.0 |

| | Example 91 | | Example 92 | |
|---|---|---|---|---|
| N-I | + 80° | | + 77 ° | |
| Δn | +0.1689 | | +0.1368 | |
| V₁₀ | 1.96 | | 2.03 | |
| | PCH-5F | 9.0 | K6 | 6.0 |
| | PCH-3 | 16.0 | K9 | 6.0 |
| | PCH-5 | 11.0 | PCH-3 | 12.0 |
| | K9 | 6.0 | PCH-5 | 10.0 |
| | K15 | 6.0 | PCH-5F | 9.0 |
| | PCH-302 | 8.0 | PCH-301 | 8.0 |
| | PTP-102 | 5.0 | CCP-3OCF3 | 7.0 |
| | PTP-201 | 6.0 | CCP-5OCF3 | 6.0 |
| | CPTP-301 | 4.0 | ECCP-31 | 6.0 |
| | CPTP-302 | 4.0 | ECCP-32 | 6.0 |
| | CPTP-303 | 4.0 | ECCP-33 | 6.0 |
| | CCP-3OCF3 | 7.0 | ECCP-35 | 5.0 |
| | BCH-32 | 7.0 | PTP-201 | 4.0 |
| | BCH-52 | 7.0 | PTP-102 | 4.0 |
| | | | CPTP-302 | 5.0 |

| | Example 93 | | Example 94 | |
|---|---|---|---|---|
| N-I | + 79° | | + 75 ° | |
| Δn | +0.1399 | | +0.1364 | |
| V₁₀ | 2.22 | | 1.62 | |
| | PTP-4OF | 6.0 | ME2N.F | 2.0 |
| | K9 | 6.0 | ME3N.F | 3.0 |
| | PCH-3 | 12.0 | K6 | 6.0 |
| | PCH-5 | 10.0 | PCH-3 | 24.0 |
| | PCH-5F | 7.0 | PCH-5 | 16.0 |
| | PCH-301 | 10.0 | PCH-301 | 5.0 |
| | CCP-3OCF3 | 7.0 | CCP-2OCF3 | 8.0 |
| | CCP-5OCF3 | 6.0 | CCP-3OCF3 | 9.0 |
| | ECCP-31 | 6.0 | CCP-4OCF3 | 8.0 |
| | ECCP-32 | 6.0 | CCP-5OCF3 | 9.0 |
| | ECCP-33 | 6.0 | PTP-102 | 5.0 |
| | ECCP-35 | 6.0 | CPTP-302 | 5.0 |
| | PTP-201 | 4.0 | | |
| | PTP-102 | 4.0 | | |
| | CPTP-302 | 5.0 | | |

| | Example 95 | | Example 96 | |
|---|---|---|---|---|
| N-I | + 93° | | + 79 ° | |
| Δn | +0.1412 | | +0.1343 | |
| V₁₀ | 1.77 | | 1.94 | |
| | K6 | 7.0 | PCH-2 | 8.0 |
| | PCH-3 | 28.0 | PCH-3 | 17.0 |
| | PCH-4 | 8.0 | PCH-5 | 10.0 |
| | PCH-5 | 13.0 | PCH-301 | 11.0 |
| | PCH-301 | 4.0 | CCP-20CF3 | 7.0 |
| | CCP-2OCF3 | 8.0 | CCP-3OCF3 | 7.0 |
| | CCP-3OCF3 | 8.0 | CCP-4OCF3 | 7.0 |
| | CCP-4OCF3 | 5.0 | CCP-5OCF3 | 7.0 |
| | CCP-5OCF3 | 6.0 | ECCP-3 | 5.0 |
| | CPTP-301 | 5.0 | ECCP-32 | 5.0 |
| | CPTP-302 | 4.0 | PTP-102 | 6.0 |
| | CPTP-303 | 4.0 | PTP-201 | 6.0 |
| | | | CPTP-303 | 4.0 |

| | Example 97 | | Example 98 | |
|---|---|---|---|---|
| N-I | + 80° | | +100 ° | |
| Δn | +0.1606 | | +0.2005 | |
| V₁₀ | 1.94 | | 2.91 | |
| | PCH-2 | 5.0 | PCH-5F | 7.0 |
| | K6 | 7.0 | PCH-7F | 6.0 |
| | K9 | 8.0 | BCH-3F.F | 14.0 |
| | K15 | 9.0 | BCH-5F.F | 13.0 |
| | PCH-301 | 15.0 | PTP-4OF | 10.0 |
| | CCP-2OCF3 | 7.0 | PTP-3OF | 10.0 |
| | CCP-3OCF3 | 7.0 | PTP-102 | 6.0 |
| | CCP-4OCF3 | 7.0 | PTP-201 | 6.0 |
| | CCP-5OCF3 | 7.0 | CPTP-301 | 5.0 |
| | ECCP-3 | 6.0 | CPTP-302 | 5.0 |
| | ECCP-32 | 5.0 | CPTP-303 | 6.0 |
| | PTP-102 | 6.0 | CCP-3OCF3 | 6.0 |
| | PTP-201 | 6.0 | CCP-5OCF3 | 6.0 |
| | CPTP-303 | 4.0 | | |

| | Example 99 | | Example 100 | |
|---|---|---|---|---|
| N-I | + 77° | | + 78 ° | |
| Δn | +0.1340 | | +0.1315 | |
| V₁₀ | 2.02 | | 2.09 | |
| | K6 | 9.0 | K6 | 9.0 |
| | PCH-3 | 22.0 | PCH-3 | 22.0 |
| | PCH-5 | 10.0 | PCH-5 | 10.0 |
| | PCH-301 | 13.0 | PCH-301 | 10.0 |
| | CCP-3OCF3 | 9.0 | CCP-3OCF3 | 9.0 |
| | ECCP-3 | 5.0 | ECCP-3F | 4.0 |
| | ECCP-31 | 6.0 | ECCP-5F | 4.0 |
| | ECCP-32 | 6.0 | ECCP-31 | 6.0 |
| | ECCP-33 | 6.0 | ECCP-32 | 6.0 |
| | ECCP-35 | 6.0 | ECCP-33 | 6.0 |
| | PTP-102 | 4.0 | ECCP-35 | 6.0 |
| | PTP-201 | 4.0 | PTP-102 | 4.0 |
| | | | PTP-201 | 4.0 |

| | Example 101 | | Example 102 | |
|---|---|---|---|---|
| N-I | + 77° | | + 76 ° | |
| Δn | +0.1380 | | +0.1389 | |
| V₁₀ | 2.07 | | 1.61 | |
| | K6 | 6.0 | ME2N.F | 2.0 |
| | K9 | 5.0 | ME3N.F | 4.0 |
| | PCH-3 | 12.0 | K6 | 6.0 |
| | PCH-5 | 12.0 | PCH-3 | 26.0 |
| | PCH-5F | 8.0 | PCH-5 | 14.0 |
| | PCH-6F | 4.0 | PCH-301 | 3.0 |
| | PCH-301 | 3.0 | CCP-2OCF3 | 8.0 |
| | CCP-3OCF3 | 7.0 | CCP-3OCF3 | 9.0 |
| | CCP-5OCF3 | 6.0 | CCP-4OCF3 | 9.0 |
| | ECCP-31 | 6.0 | CCP-5OCF3 | 9.0 |
| | ECCP-32 | 6.0 | PTP-102 | 5.0 |
| | ECCP-33 | 6.0 | CPTP-302 | 5.0 |
| | ECCP-35 | 5.0 | | |
| | PTP-201 | 5.0 | | |
| | PTP-102 | 4.0 | | |
| | CPTP-302 | 5.0 | | |

| | Example 103 | | Example 104 | |
|---|---|---|---|---|
| N-I | + 76° | | + 71 ° | |
| Δn | +0.1378 | | +0.1401 | |
| V₁₀ | 1.52 | | 1.70 | |
| | ME2N.F | 2.0 | K6 | 7.0 |
| | ME3N.F | 4.0 | PCH-3 | 28.0 |
| | ME5N.F | 5.0 | PCH-5 | 13.0 |
| | K6 | 6.0 | PCH-301 | 11.0 |
| | PCH-3 | 27.0 | CCP-2OCF3 | 8.0 |
| | PCH-5 | 14.0 | CCP-3OCF3 | 8.0 |
| | CCP-2OCF3 | 8.0 | CCP-4OCF3 | 5.0 |
| | CCP-3OCF3 | 9.0 | CCP-5OCF3 | 6.0 |
| | CCP-4OCF3 | 8.0 | PTP-102 | 8.0 |
| | CCP-5OCF3 | 9.0 | CPTP-301 | 6.0 |
| | PTP-102 | 2.0 | | |
| | CPTP-302 | 6.0 | | |

| | Example 105 | | Example 106 | |
|---|---|---|---|---|
| N-I | + 90° | | + 77 ° | |
| Δn | +0.1334 | | +0.1373 | |
| V₁₀ | 1.88 | | 2.04 | |
| | PCH-3 | 22.0 | K6 | 8.0 |
| | PCH-4 | 16.0 | PCH-3 | 22.0 |
| | PCH-5 | 8.0 | PCH-5 | 10.0 |
| | HP.3N.F | 4.0 | PCH-301 | 13.0 |
| | BCH-5 | 6.0 | CCP-3OCF3 | 8.0 |
| | PTP-201 | 5.0 | ECCP-3 | 6.0 |
| | ECCP-3F | 12.0 | ECCP-31 | 6.0 |
| | ECCP-5F | 9.0 | ECCP-32 | 6.0 |
| | CCP-3OCF3 | 8.0 | ECCP-33 | 6.0 |
| | BCH-52F | 10.0 | ECCP-35 | 5.0 |
| | | | PTP-102 | 5.0 |
| | | | PTP-201 | 5.0 |

| | Example 107 | | Example 108 | |
|---|---|---|---|---|
| N-I | + 75° | | + 76 ° | |
| Δn | +0.1366 | | +0.1358 | |
| V₁₀ | 1.97 | | 1.56 | |
| | K6 | 10.0 | ME2N.F | 2.0 |
| | PCH-3 | 22.0 | ME3N.F | 4.0 |
| | PCH-5 | 10.0 | K6 | 5.0 |
| | PCH-301 | 10.0 | PCH-3 | 26.0 |
| | CCP-3OCF3 | 8.0 | PCH-5 | 14.0 |
| | ECCP-3F | 3.0 | PCH-301 | 4.0 |
| | ECCP-5F | 3.0 | CCP-2OCF3 | 8.0 |
| | ECCP-31 | 6.0 | CCP-3OCF3 | 9.0 |
| | ECCP-32 | 6.0 | CCP-4OCF3 | 9.0 |
| | ECCP-33 | 6.0 | CCP-5OCF3 | 9.0 |
| | ECCP-35 | 6.0 | PTP-102 | 5.0 |
| | PTP-102 | 5.0 | CPTP-302 | 5.0 |
| | PTP-201 | 5.0 | | |

| | Example 109 | | Example 110 | |
|---|---|---|---|---|
| N-I | + 76° | | + 95 ° | |
| Δn | +0.1385 | | +0.1851 | |
| V₁₀ | 1.49 | | 2.22 | |
| | ME2N.F | 2.0 | K9 | 5.0 |
| | ME3N.F | 3.0 | K12 | 5.0 |
| | ME5N.F | 5.0 | PCH-3 | 10.0 |
| | K6 | 6.0 | PCH-5 | 7.0 |
| | PCH-3 | 27.0 | PCH-5F | 7.0 |
| | PCH-5 | 13.0 | PCH-7F | 7.0 |
| | CCP-2OCF3 | 9.0 | BCH-32 | 5.0 |
| | CCP-3OCF3 | 9.0 | BCH-52 | 6.0 |
| | CCP-4OCF3 | 8.0 | BCH-52F | 7.0 |
| | CCP-5OCF3 | 9.0 | PTP-102 | 7.0 |
| | PTP-201 | 3.0 | PTP-201 | 8.0 |
| | CPTP-302 | 6.0 | CPTP-301 | 6.0 |
| | | | CPTP-302 | 6.0 |
| | | | CPTP-303 | 6.0 |
| | | | CCP-3OCF3 | 4.0 |
| | | | CCP-5OCF3 | 4.0 |

| | Example 111 | | Example 112 | |
|---|---|---|---|---|
| N-I | + 74 ° | | + 84 ° | |
| Δn | +0.1310 | | +0.1287 | |
| V₁₀ | 2.12 | | 2.11 | |
| | G9 | 5.0 | PCH-3 | 7.0 |
| | PCH-3 | 24.0 | PCH-6F | 5.0 |
| | PCH-5 | 10.0 | PCH-7F | 5.0 |
| | PCH-301 | 15.0 | CCP-2OCF3 | 5.0 |
| | CCP-3OCF3 | 8.0 | CCP-3OCF3 | 9.0 |
| | ECCP-31 | 5.0 | CCP-4OCF3 | 5.0 |
| | ECCP-32 | 5.0 | CCP-5OCF3 | 8.0 |
| | ECCP-33 | 4.0 | ECCP-3F.F | 4.0 |
| | ECCP-35 | 4.0 | BCH-3F.F | 18.0 |
| | PTP-102 | 5.0 | BCH-5F.F | 14.0 |
| | PTP-201 | 5.0 | BEP-3F.CL | 10.0 |
| | BCH-32 | 5.0 | BEP-5F.Cl | 10.0 |
| | BCH-52 | 5.0 | | |

| | Example 113 | | Example 114 | |
|---|---|---|---|---|
| N-I | + 82 ° | | + 74 ° | |
| Δn | +0.1510 | | +0.1363 | |
| V₁₀ | 1.65 | | 1.97 | |
| | K6 | 8.0 | G9 | 10.0 |
| | K9 | 8.0 | PCH-3 | 24.0 |
| | PCH-3 | 20.0 | PCH-5 | 5.0 |
| | PCH-4 | 10.0 | PCH-301 | 13.0 |
| | PCH-5 | 10.0 | CCP-3OCF3 | 10.0 |
| | PCH-301 | 4.0 | CCP-5OCF3 | 5.0 |
| | CCP-2OCF3 | 8.0 | ECCP-31 | 4.0 |
| | CCP-3OCF3 | 8.0 | ECCP-32 | 5.0 |
| | CCP-4OCF3 | 5.0 | ECCP-33 | 4.0 |
| | CCP-5OCF3 | 6.0 | PTP-102 | 6.0 |
| | CPTP-301 | 5.0 | PTP-201 | 6.0 |
| | CPTP-302 | 4.0 | BCH-32 | 6.0 |
| | CPTP-303 | 4.0 | BCH-52 | 6.0 |

| | Example 115 | | Example 116 | |
|---|---|---|---|---|
| N-I | + 75 ° | | + 85 ° | |
| Δn | +0.1432 | | +0.1341 | |
| V₁₀ | 1.98 | | 2.24 | |
| | K6 | 8.0 | K6 | 10.0 |
| | K9 | 8.0 | PCH-3 | 14.0 |
| | PCH-3 | 16.0 | PCH-5 | 8.0 |
| | PCH-5 | 10.0 | PCH-301 | 10.0 |
| | PCH-301 | 10.0 | CCP-3OCF3 | 10.0 |
| | CCP-3OCF3 | 8.0 | CCP-5OCF3 | 8.0 |
| | ECCP-3F | 3.0 | ECCP-3F | 3.0 |
| | ECCP-5F | 3.0 | ECCP-5F | 3.0 |
| | ECCP-31 | 6.0 | ECCP-31 | 6.0 |
| | ECCP-32 | 6.0 | ECCP-32 | 6.0 |
| | ECCP-33 | 6.0 | ECCP-33 | 6.0 |
| | ECCP-35 | 6.0 | ECCP-35 | 6.0 |
| | PTP-102 | 5.0 | PTP-102 | 5.0 |
| | PTP-201 | 5.0 | PTP-201 | 5.0 |

| | Example 117 | | Example 118 | |
|---|---|---|---|---|
| N-I | + 72 ° | | + 80 ° | |
| Δn | +0.1357 | | +0.1424 | |
| V₁₀ | 2.05 | | 1.98 | |
| | K6 | 10.0 | K6 | 10.0 |
| | PCH-3 | 17.0 | PCH-3 | 22.0 |
| | G9 | 15.0 | PCH-5 | 10.0 |
| | PCH-301 | 10.0 | PCH-301 | 10.0 |
| | CCP-3OCF3 | 8.0 | CCP-3OCF3 | 8.0 |
| | ECCP-3F | 3.0 | ECCP-3 | 10.0 |
| | ECCP-5F | 3.0 | ECCP-3F | 3.0 |
| | ECCP-31 | 6.0 | ECCP-5F | 3.0 |
| | ECCP-32 | 6.0 | ECCP-33 | 7.0 |
| | ECCP-33 | 6.0 | ECCP-35 | 7.0 |
| | ECCP-35 | 6.0 | PTP-102 | 5.0 |
| | PTP-102 | 5.0 | PTP-201 | 5.0 |
| | PTP-201 | 5.0 | | |

| | Example 119 | | Example 120 | |
|---|---|---|---|---|
| N-I | + 71° | | + 99 ° | |
| Δn | +0.1330 | | +0.1482 | |
| V₁₀ | 1.94 | | 1.70 | |
| | K6 | 10.0 | PCH-3 | 15.0 |
| | PCH-3 | 22.0 | PCH-5F | 6.0 |
| | PCH-5 | 10.0 | CCP-2OCF3 | 9.0 |
| | PCH-5F | 10.0 | CCP-3OCF3 | 10.0 |
| | CCP-3OCF3 | 8.0 | CCP-4OCF3 | 10.0 |
| | ECCP-3F | 3.0 | CCP-5OCF3 | 10.0 |
| | ECCP-5F | 3.0 | BCH-3F.F | 11.0 |
| | ECCP-31 | 6.0 | BCH-5F.F | 11.0 |
| | ECCP-32 | 6.0 | ECCP-3F.F | 8.0 |
| | ECCP-33 | 6.0 | ECCP-5F.F | 8.0 |
| | ECCP-35 | 6.0 | CBC-53F | 2.0 |
| | PTP-102 | 5.0 | | |
| | PTP-201 | 5.0 | | |

| | Example 121 | | Example 122 | |
|---|---|---|---|---|
| N-I | + 75 ° | | + 76 ° | |
| Δn | +0.1365 | | +0.1351 | |
| V₁₀ | 2.09 | | 2.19 | |
| | G9 | 10.0 | G9 | 10.0 |
| | PCH-3 | 24.0 | PCH-3 | 20.0 |
| | PCH-5 | 5.0 | PCH-5 | 5.0 |
| | PCH-301 | 13.0 | PCH-301 | 15.0 |
| | CCP-3OCF3 | 5.0 | CCP-3OCF3 | 6.0 |
| | CCP-5OCF3 | 4.0 | CCP-5OCF3 | 5.0 |
| | ECCP-31 | 5.0 | ECCP-31 | 5.0 |
| | ECCP-32 | 5.0 | ECCP-32 | 5.0 |
| | ECCP-33 | 5.0 | ECCP-33 | 5.0 |
| | PTP-102 | 6.0 | PTP-102 | 6.0 |
| | PTP-201 | 6.0 | PTP-201 | 6.0 |
| | BCH-32 | 6.0 | BCH-32 | 6.0 |
| | BCH-52 | 6.0 | BCH-52 | 6.0 |

| | Example 123 | | Example 124 | |
|---|---|---|---|---|
| N-I | + 76 ° | | + 76 ° | |
| Δn | +0.1379 | | +0.1365 | |
| V₁₀ | 1.52 | | 1.54 | |
| | ME2N.F | 2.0 | ME2N.F | 2.0 |
| | ME3N.F | 4.0 | ME3N.F | 4.0 |
| | ME5N.F | 5.0 | ME5N.F | 5.0 |
| | K6 | 5.0 | K6 | 6.0 |
| | PCH-3 | 27.0 | PCH-3 | 27.0 |
| | PCH-5 | 15.0 | PCH-5 | 14.0 |
| | CP-3O2FF | 5.0 | D-302FF | 5.0 |
| | CCP-2OCF3 | 6.0 | CCP-3OCF3 | 10.0 |
| | CCP-3OCF3 | 7.0 | CCP-4OCF3 | 9.0 |
| | CCP-4OCF3 | 7.0 | CCP-5OCF3 | 10.0 |
| | CCP-5OCF3 | 9.0 | CPTP-301 | 4.0 |
| | PTP-102 | 4.0 | CPTP-302 | 4.0 |
| | CPTP-302 | 4.0 | | |

| | Example 125 | | Example 126 | |
|---|---|---|---|---|
| N-I | + 75 ° | | + 76 ° | |
| Δn | +0.1359 | | +0.1371 | |
| V₁₀ | 1.60 | | 1.67 | |
| | HP.3N.F | 2.0 | ME2N.F | 2.0 |
| | HP.4N.F | 4.0 | ME3N.F | 4.0 |
| | ME2N.F | 2.0 | K6 | 5.0 |
| | K6 | 4.0 | PCH-3 | 26.0 |
| | PCH-3 | 27.0 | PCH-5 | 14.0 |
| | PCH-4 | 11.0 | PCH-301 | 7.0 |
| | PCH-5 | 15.0 | CP-302FF | 5.0 |
| | D-3O2FF | 7.0 | CCP-3OCF3 | 9.0 |
| | CCP-3OCF3 | 10.0 | CCP-4OCF3 | 9.0 |
| | CCP-5OCF3 | 10.0 | CCP-4OCF3 | 9.0 |
| | PTP-102 | 2.0 | PTP-102 | 6.0 |
| | CPTP-302 | 6.0 | CPTP-302 | 4.0 |

| | Example 127 | | Example 128 | |
|---|---|---|---|---|
| N-I | + 86 ° | | + 82 ° | |
| Δn | +0.1235 | | +0.1424 | |
| V₁₀ | 1.92 | | 2.10 | |
| | PCH-3 | 22.0 | K6 | 9.0 |
| | PCH-4 | 20.0 | PCH-3 | 24.0 |
| | PTP-201 | 6.0 | PCH-5 | 10.0 |
| | CCP-3OCF3 | 14.0 | PCH-301 | 9.0 |
| | CCP-5OCF3 | 12.0 | CCP-3OCF3 | 8.0 |
| | ECCP-3F | 13.0 | ECCP-3 | 6.0 |
| | BCH-52F | 13.0 | ECCP-31 | 5.0 |
| | | | ECCP-32 | 5.0 |
| | | | ECCP-33 | 5.0 |
| | | | ECCP-35 | 3.0 |
| | | | PTP-102 | 4.0 |
| | | | PTP-201 | 4.0 |
| | | | BCH-32 | 4.0 |
| | | | BCH-52 | 4.0 |

| | Example 129 | | Example 130 | |
|---|---|---|---|---|
| N-I | + 79 ° | | + 80 ° | |
| Δn | +0.1471 | | +0.1689 | |
| V₁₀ | 2.15 | | 1.96 | |
| | K6 | 6.0 | PCH-5F | 9.0 |
| | K9 | 6.0 | PCH-3 | 16.0 |
| | PCH-3 | 12.0 | PCH-5 | 11.0 |
| | PCH-5 | 10.0 | K9 | 6.0 |
| | PCH-5F | 8.0 | K15 | 6.0 |
| | PCH-301 | 7.0 | PCH-302 | 8.0 |
| | CCP-3OCF3 | 7.0 | PTP-102 | 5.0 |
| | CCP-5OCF3 | 6.0 | PTP-201 | 6.0 |
| | ECCP-31 | 6.0 | CPTP-301 | 4.0 |
| | ECCP-32 | 5.0 | CPTP-302 | 4.0 |
| | ECCP-33 | 5.0 | CPTP-303 | 4.0 |
| | ECCP-35 | 5.0 | CCP-3OCF3 | 7.0 |
| | PTP-201 | 5.0 | BCH-32 | 7.0 |
| | PTP-102 | 6.0 | BCH-52 | 7.0 |
| | CPTP-302 | 6.0 | | |

| | Example 131 | | Example 132 | |
|---|---|---|---|---|
| N-I | + 82 ° | | + 81 ° | |
| Δn | +0.1458 | | +0.1465 | |
| V₁₀ | 2.06 | | 2.11 | |
| | K6 | 9.0 | K6 | 6.0 |
| | PCH-3 | 24.0 | K9 | 6.0 |
| | PCH-5 | 10.0 | PCH-3 | 12.0 |
| | PCH-301 | 8.0 | PCH-5 | 10.0 |
| | CCP-3OCF3 | 8.0 | PCH-5F | 7.0 |
| | ECCP-3 | 5.0 | PCH-301 | 7.0 |
| | ECCP-31 | 5.0 | CCP-3OCF3 | 7.0 |
| | ECCP-32 | 5.0 | CCP-5OCF3 | 7.0 |
| | ECCP-33 | 4.0 | ECCP-31 | 6.0 |
| | ECCP-35 | 3.0 | ECCP-32 | 6.0 |
| | PTP-102 | 4.0 | ECCP-33 | 5.0 |
| | PTP-201 | 5.0 | ECCP-35 | 5.0 |
| | BCH-32 | 5.0 | PTP-201 | 5.0 |
| | BCH-52 | 5.0 | PTP-102 | 5.0 |
| | | | CPTP-302 | 6.0 |

| | Example 133 | | Example 134 | |
|---|---|---|---|---|
| N-I | + 81 ° | | + 93 ° | |
| Δn | +0.1281 | | +0.1350 | |
| V₁₀ | 1.88 | | 1.90 | |
| | PCH-2 | 7.0 | PCH-2 | 9.0 |
| | PCH-3 | 28.0 | PCH-3 | 22.0 |
| | PCH-5 | 13.0 | PCH-5 | 14.0 |
| | PCH-302 | 12.0 | PCH-301 | 11.0 |
| | CCP-2OCF3 | 8.0 | CCP-2OCF3 | 7.0 |
| | CCP-3OCF3 | 8.0 | CCP-3OCF3 | 7.0 |
| | CCP-4OCF3 | 6.0 | CCP-4OCF3 | 7.0 |
| | CCP-5OCF3 | 6.0 | ECCP-3 | 6.0 |
| | CPTP-301 | 4.0 | CPTP-301 | 4.0 |
| | CPTP-302 | 4.0 | CPTP-302 | 4.0 |
| | CPTP-303 | 4.0 | CPTP-303 | 5.0 |
| | | | CBC-53F | 4.0 |

| | Example 135 | | Example 136 | |
|---|---|---|---|---|
| N-I | + 91 ° | | + 74 ° | |
| Δn | +0.1320 | | +0.1369 | |
| V₁₀ | 1.86 | | 1.86 | |
| | PCH-2 | 9.0 | K6 | 9.0 |
| | PCH-3 | 22.0 | PCH-2 | 12.0 |
| | PCH-5 | 14.0 | PCH-3 | 12.0 |
| | PCH-301 | 11.0 | PCH-5 | 10.0 |
| | CCP-2OCF3 | 7.0 | PCH-301 | 11.0 |
| | CCP-3OCF3 | 7.0 | PCH-302 | 11.0 |
| | CCP-4OCF3 | 7.0 | CCP-3OCF3 | 8.0 |
| | CP-302FF | 6.0 | ECCP-3 | 8.0 |
| | CPTP-301 | 4.0 | ECCP-31 | 3.0 |
| | CPTP-302 | 4.0 | ECCP-32 | 4.0 |
| | CPTP-303 | 5.0 | ECCP-33 | 4.0 |
| | CBC-53F | 4.0 | CPTP-301 | 4.0 |
| | | | CPTP-302 | 4.0 |

| | Example 137 | | Example 138 | |
|---|---|---|---|---|
| N-I | + 73 ° | | + 75 ° | |
| Δn | +0.1352 | | +0.1394 | |
| V₁₀ | 1.92 | | 2.10 | |
| | K6 | 10.0 | G9 | 10.0 |
| | PCH-3 | 23.0 | PCH-3 | 24.0 |
| | PCH-5 | 10.0 | PCH-5 | 5.0 |
| | PCH-301 | 13.0 | PCH-301 | 15.0 |
| | PCH-302 | 12.0 | CCP-3OCF3 | 5.0 |
| | CCP-3OCF3 | 5.0 | ECCP-3 | 5.0 |
| | ECCP-3 | 8.0 | ECCP-31 | 4.0 |
| | ECCP-32 | 3.0 | ECCP-32 | 4.0 |
| | ECCP-33 | 3.0 | ECCP-33 | 4.0 |
| | BCH-32 | 4.0 | PTP-102 | 6.0 |
| | BCH-52 | 4.0 | PTP-201 | 6.0 |
| | CPTP-301 | 5.0 | BCH-32 | 6.0 |
| | | | BCH-52 | 6.0 |

| | Example 139 | | Example 140 | |
|---|---|---|---|---|
| N-I | +104 ° | | + 93 ° | |
| Δn | +0.1347 | | +0.1281 | |
| V₁₀ | 2.01 | | 1.97 | |
| | PCH-2 | 9.0 | PCH-2 | 9.0 |
| | PCH-3 | 22.0 | PCH-3 | 22.0 |
| | PCH-5 | 14.0 | PCH-5 | 14.0 |
| | CCH-303 | 4.0 | CCH-303 | 10.0 |
| | CCP-2OCF3 | 7.0 | CCP-2OCF3 | 7.0 |
| | CCP-3OCF3 | 7.0 | CCP-3OCF3 | 7.0 |
| | CCP-4OCF3 | 7.0 | CCP-4OCF3 | 7.0 |
| | CCP-5OCF3 | 7.0 | CCP-5OCF3 | 7.0 |
| | ECCP-3 | 6.0 | CPTP-301 | 5.0 |
| | CPTP-301 | 4.0 | CPTP-302 | 4.0 |
| | CPTP-302 | 4.0 | CPTP-303 | 5.0 |
| | CPTP-303 | 5.0 | CBC-53F | 3.0 |
| | CBC-53F | 4.0 | | |

| | Example 141 | | Example 142 | |
|---|---|---|---|---|
| N-I | + 98 ° | | + 93 ° | |
| Δn | +0.1263 | | +0.1274 | |
| V₁₀ | 2.11 | | 1.86 | |
| | ME2N.F | 2.0 | ME2N.F | 2.0 |
| | ME3N.F | 3.0 | ME3N.F | 3.0 |
| | ME5N.F | 9.0 | ME5N.F | 7.0 |
| | PCH-301 | 25.0 | ME7N.F | 7.0 |
| | CCH-303 | 11.0 | PCH-301 | 22.0 |
| | CCP-2OCF3 | 7.0 | CCH-303 | 11.0 |
| | CCP-3OCF3 | 7.0 | CCP-2OCF3 | 7.0 |
| | CCP-4OCF3 | 7.0 | CCP-3OCF3 | 7.0 |
| | CCP-5OCF3 | 7.0 | CCP-4OCF3 | 7.0 |
| | CPTP-301 | 5.0 | CCP-5OCF3 | 7.0 |
| | CPTP-302 | 5.0 | CPTP-301 | 5.0 |
| | CPTP-303 | 5.0 | CPTP-302 | 5.0 |
| | CBC-33F | 3.0 | CPTP-303 | 5.0 |
| | CBC-53F | 4.0 | CBC-53F | 5.0 |

| | Example 143 | | Example 144 | |
|---|---|---|---|---|
| N-I | + 76 ° | | + 87 ° | |
| Δn | +0.1442 | | +0.1432 | |
| V₁₀ | 2.26 | | 3.48 | |
| | K9 | 12.0 | PCH-3 | 5.0 |
| | G9 | 22.0 | PCH-302 | 15.0 |
| | PCH-5F | 7.0 | PCH-304 | 10.0 |
| | PCH-7F | 7.0 | PCH-305 | 10.0 |
| | CCP-3OCF3 | 6.0 | PCH-501 | 10.0 |
| | CCP-5OCF3 | 6.0 | CCP-2OCF3 | 6.0 |
| | ECCP-31 | 5.0 | CCP-3OCF3 | 6.0 |
| | ECCP-32 | 5.0 | CCP-4OCF3 | 5.0 |
| | ECCP-33 | 5.0 | CCP-5OCF3 | 6.0 |
| | ECCP-35 | 5.0 | PTP-102 | 5.0 |
| | PTP-201 | 5.0 | PTP-201 | 6.0 |
| | PTP-102 | 5.0 | CPTP-301 | 5.0 |
| | CPTP-302 | 5.0 | CPTP-302 | 5.0 |
| | BCH-52 | 5.0 | CPTP-303 | 6.0 |

| | Example 145 | | Example 146 | |
|---|---|---|---|---|
| N-I | + 75 ° | | + 85 ° | |
| Δn | +0.1365 | | +0.1372 | |
| V₁₀ | 2.10 | | 1.88 | |
| | PCH-3 | 23.0 | PCH-3 | 15.0 |
| | G9 | 20.0 | PCH-4 | 16.0 |
| | PCH-301 | 10.0 | PCH-5 | 17.0 |
| | PYP-34 | 4.0 | PCH-53 | 5.0 |
| | CCP-3OCF3 | 4.0 | CCP-2OCF3 | 7.0 |
| | ECCP-3 | 4.0 | CCP-3OCF3 | 8.0 |
| | ECCP-31 | 6.0 | CCP-4OCF3 | 7.0 |
| | ECCP-32 | 6.0 | CCP-5OCF3 | 8.0 |
| | ECCP-33 | 6.0 | PTP-102 | 3.0 |
| | PTP-102 | 3.0 | PTP-201 | 3.0 |
| | PTP-201 | 3.0 | CPTP-301 | 5.0 |
| | CPTP-3OCF3 | 5.0 | CPTP-302 | 6.0 |
| | CPTP-5OCF3 | 6.0 | | |

| | Example 147 | | Example 148 | |
|---|---|---|---|---|
| N-I | + 87 ° | | + 74 ° | |
| Δn | +0.1423 | | +0.1394 | |
| V₁₀ | 2.34 | | 2.10 | |
| | PCH-3 | 17.0 | PCH-3 | 23.0 |
| | G9 | 7.0 | G9 | 14.0 |
| | PCH-302 | 13.0 | PCH-301 | 13.0 |
| | PCH-501 | 6.0 | PYP-34 | 5.0 |
| | CCP-2OCF3 | 8.0 | CCP-3OCF3 | 4.0 |
| | CCP-3OCF3 | 8.0 | ECCP-3 | 3.0 |
| | CCP-4OCF3 | 5.0 | ECCP-31 | 6.0 |
| | CCP-5OCF3 | 6.0 | ECCP-32 | 6.0 |
| | PTP-102 | 5.0 | ECCP-33 | 6.0 |
| | PTP-201 | 8.0 | PTP-102 | 4.0 |
| | CPTP-301 | 3.0 | PTP-201 | 4.0 |
| | CPTP-302 | 3.0 | CPTP-3OCF3 | 6.0 |
| | CPTP-303 | 3.0 | CPTP-5OCF3 | 6.0 |
| | ECCP-31 | 4.0 | | |
| | ECCP-32 | 4.0 | | |

| | Example 149 | | Example 150 | |
|---|---|---|---|---|
| N-I | + 96 ° | | + 75 ° | |
| Δn | +0.1301 | | +0.1355 | |
| V₁₀ | 1.96 | | 2.09 | |
| | PCH-2 | 9.0 | G9 | 10.0 |
| | PCH-3 | 22.0 | PCH-3 | 24.0 |
| | PCH-5 | 14.0 | PCH-5 | 5.0 |
| | CCH-303 | 11.0 | PCH-301 | 10.0 |
| | CCP-2OCF3 | 5.0 | CCH-303 | 3.0 |
| | CCP-3OCF3 | 6.0 | CCP-3OCF3 | 5.0 |
| | CCP-4OCF3 | 5.0 | CCP-5OCF3 | 4.0 |
| | CCP-5OCF3 | 6.0 | ECCP-31 | 5.0 |
| | ECCP-3 | 6.0 | ECCP-32 | 5.0 |
| | CPTP-301 | 4.0 | ECCP-33 | 5.0 |
| | CPTP-302 | 4.0 | PTP-102 | 6.0 |
| | CPTP-303 | 5.0 | PTP-201 | 6.0 |
| | CBC-53F | 3.0 | BCH-32 | 6.0 |
| | | | BCH-52 | 6.0 |

| | Example 151 | | Example 152 | |
|---|---|---|---|---|
| N-I | + 72 ° | | + 85 ° | |
| Δn | +0.1375 | | +0.1394 | |
| V₁₀ | 2.10 | | 1.42 | |
| | PCH-3 | 13.0 | ME2N.F | 2.0 |
| | G9 | 24.0 | ME3N.F | 4.0 |
| | PCH-301 | 17.0 | ME5N.F | 5.0 |
| | CCP-3OCF3 | 4.0 | HP-3N.F | 3.0 |
| | ECCP-3 | 5.0 | HP-4N.F | 4.0 |
| | ECCP-31 | 5.0 | HP-5N.F | 5.0 |
| | ECCP-32 | 4.0 | PCH-3 | 24.0 |
| | ECCP-33 | 4.0 | PCH-5 | 22.0 |
| | PTP-102 | 6.0 | CCP-3OCF3 | 7.0 |
| | PTP-201 | 6.0 | CCP-4OCF3 | 7.0 |
| | BCH-32 | 6.0 | CCP-5OCF3 | 7.0 |
| | BCH-52 | 6.0 | CPTP-3OCF3 | 5.0 |
| | | | CPTP-5OCF3 | 5.0 |

| | Example 153 | | Example 154 | |
|---|---|---|---|---|
| N-I | + 75 ° | | + 92 ° | |
| Δn | +0.1372 | | +0.0837 | |
| V₁₀ | 1.97 | | 1.81 | |
| | G9 | 10.0 | PCH-5F | 6.0 |
| | PCH-3 | 24.0 | PCH-6F | 6.0 |
| | PCH-5 | 7.0 | PCH-7F | 3.0 |
| | ME15 | 10.0 | CCH-303 | 3.0 |
| | PCH-301 | 6.0 | CCH-302 | 3.0 |
| | CCP-3OCF3 | 5.0 | CCP-2OCF3 | 9.0 |
| | ECCP-3 | 5.0 | CCP-3OCF3 | 9.0 |
| | ECCP-31 | 5.0 | CCP-4OCF3 | 9.0 |
| | ECCP-32 | 5.0 | CCP-5OCF3 | 9.0 |
| | ECCP-33 | 4.0 | ECCP-3F.F | 9.0 |
| | PTP-102 | 5.0 | ECCP-5F.F | 9.0 |
| | PTP-201 | 4.0 | ECCP-3OCF3 | 5.0 |
| | BCH-32 | 5.0 | EHP-3F.F | 10.0 |
| | BCH-52 | 5.0 | EHP-5F.F | 10.0 |

| | Example 155 | |
|---|---|---|
| N-I | + 94 ° | |
| Δn | +0.1169 | |
| V₁₀ | 1.97 | |
| | ME2N.F | 2.0 |
| | ME3N.F | 2.0 |
| | ME5N.F | 5.0 |
| | PCH-3 | 15.0 |
| | PCH-5 | 10.0 |
| | PCH-301 | 11.0 |
| | CPTP-303 | 5.0 |
| | CCP-2OCF3 | 9.0 |
| | CCP-3OCF3 | 9.0 |
| | CCP-5OCF3 | 9.0 |
| | ECCP-31 | 5.0 |
| | ECCP-32 | 5.0 |
| | ECCP-33 | 5.0 |
| | ECCP-35 | 4.0 |
| | ECCP-3 | 4.0 |

## Claims

1. Supertwist liquid crystal display having
- two plane-parallel carrier plates which, with an edging, form a cell,
- a nematic liquid crystal mixture of positive dielectric anisotropy in the cell,
- electrode layers with superimposed orientation layers on the inside of the carrier plates,
- an angle of incidence between the longitudinal axis of the molecules on the surface of the carrier plates and the carrier plates of about 1 degree to 30 degrees and
- the absolute amount of the twisting angle of the liquid crystal mixture in the cell from orientation layer to orientation layer being between 160 and 720°, characterized in that the nematic liquid crystal mixture contains one or more compounds of the formula I 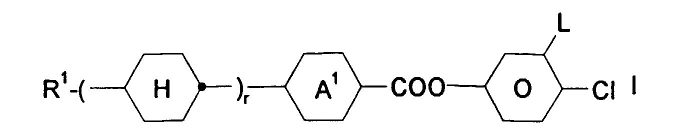 and/or one or more compounds of the formula II 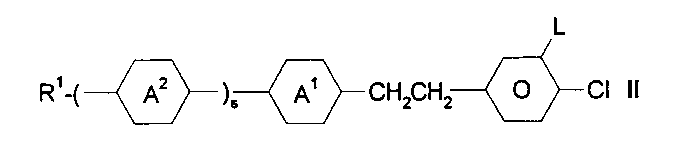 and/or one or more compounds of the formula III 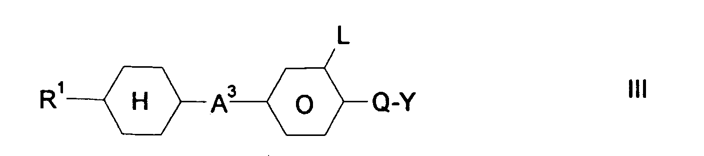 wherein
R¹ is alkyl having 1-12 C atoms, wherein one or two non-adjacent CH₂ groups can also be replaced by -O-, -CH=CH-, -CO-, -O-CO- or -CO-O-,
r is 0 or 1,
s is 0, 1 or 2,
rings A¹ and A² are independently from each other trans-1,4-cyclohexylene, 1,4-phenylene or 3-fluoro-1,4-phenylene,
A³ denotes 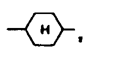
Q is OCHF, OCF₂, CF₂ or a single bond,
Y is H, F, or Cl and L denotes H or F and at least one compound of the formula B1VIII: 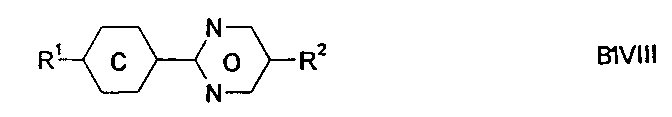 in which R¹ and R² in each case independently of one another are alkyl having 1-12 C atoms, wherein one or two non-adjacent CH₂ groups can also be replaced by -O-, -CH=CH-, -CO-, -O-CO- or -CO-O-, and 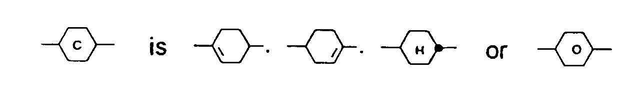 or at least one compound of the formula 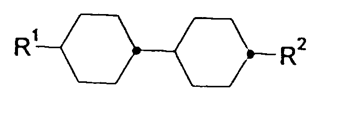 in which
R¹ is CH₃-(CH₂)ₙ-O-, CH₃-(CH₂)t-, trans-H-(CH₂),-CH=CH-(CH₂CH₂)ₛ-CH₂-O-, trans-H-(CH₂),-CH=CH-(CH₂-CH₂)ₛ-
R² is CH₃-(CH₂)ₜ-,
n is 1, 2, 3 or 4,
t is 1, 2, 3 or 4,
r is 0, 1, 2, 3,
s is 0 or 1.

2. Supertwist liquid crystal display having
- two plane-parallel carrier plates which, with an edging, form a cell,
- a nematic liquid crystal mixture of positive dielectric anisotropy in the cell,
- electrode layers with superimposed orientation layers on the inside of the carrier plates,
- an angle of incidence between the longitudinal axis of the molecules on the surface of the carrier plates and the carrier plates of about 1 degree to 30 degrees and
- the absolute amount of the twisting angle of the liquid crystal mixture in the cell from orientation layer to orientation layer being between 160 and 720°, characterized in that the nematic liquid crystal mixture contains one or more compounds of the formula III 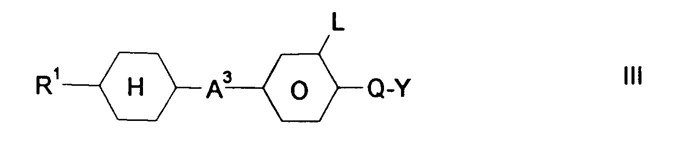 wherein
R¹ is alkyl having 1-12 C atoms, wherein one or two non-adjacent CH₂ groups can also be replaced by -O-, -CH=CH-, -CO-, -O-CO- or -CO-O-,
A³ denotes 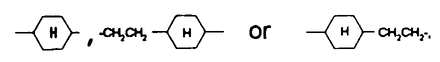 and
Q is OCHF, OCF₂ or CF₂, Y is H, F or Cl and L denotes H or F
in combination with one or more compound of formula B1VIII as defined in claim 1
or one or more compound of cyclohexylcyclohexanes as defined in claim 1

3. Display according to claim 1 or 2, characterized in that the nematic liquid crystal mixture further comprises
a) 5-60 % by weight of a liquid crystalline component A consisting of one or more compounds having a dielectric anisotropy of more than +8,
b) 10-40 % by weight of a liquid crystalline component B consisting of one or more compounds having a clearing point of more than 120 °C, and
c) an optically active component C, in an amount such that the ration between the layer thickness (separation of the plane-parallel carrier plates) and the natural pitch of the chiral nematic liquid crystal mixture is more than 0.2 adjusted to the desired twist angle,
and in that the nematic liquid crystal mixture has a nematic phase range of at least 60 °C, a viscosity of not more than 30 mPa.s and a dielectric anisotropy of at least +5, the dielectric anisotropies of the compounds and the parameters relating to the nematic liquid crystal mixture being based on a temperature of 20 °C.

4. Display according to claim 3, characterized in that component A comprises compounds selected from the following group: 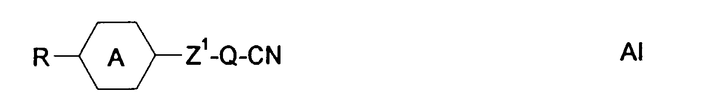 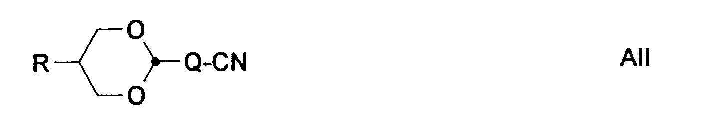 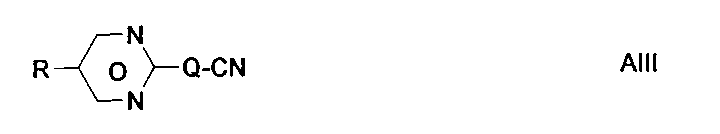 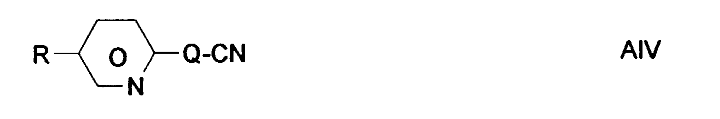 wherein
R is alkyl having 1-12 C atoms, wherein one or two non-adjacent CH₂ groups can also be replaced by -O-, -CH=CH-, -CO-, -O-CO- or -CO-O-,
Q is the formula 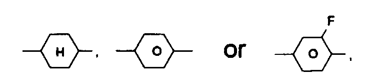
Z¹ is 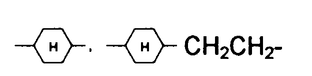 a single bond, -CH₂CH₂-, -CO-O-, or -O-CO- and

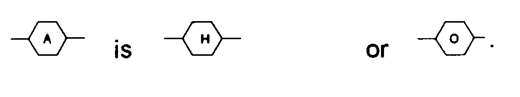

5. Display according to one of claims 1 to 4, characterized in that component B comprises compounds selected from the following group: 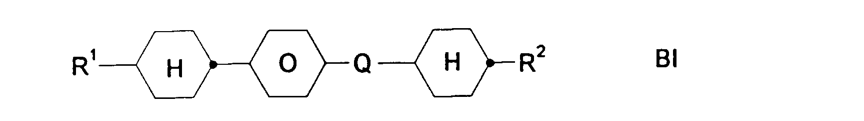 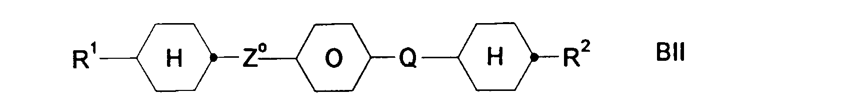 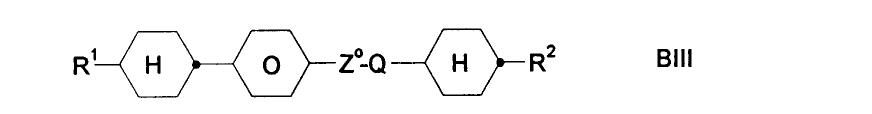 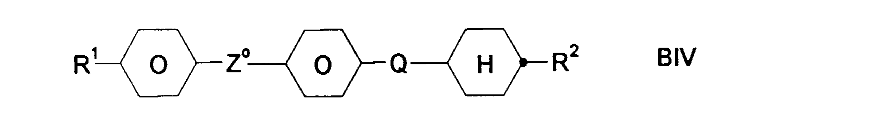 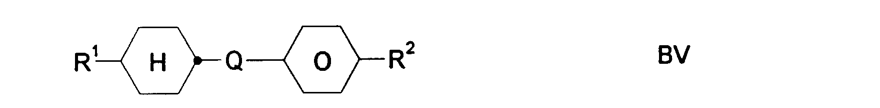 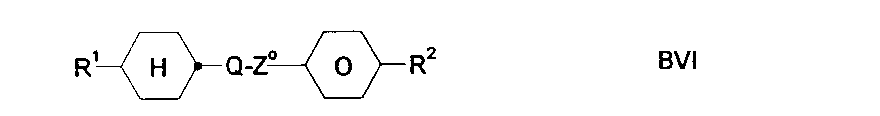 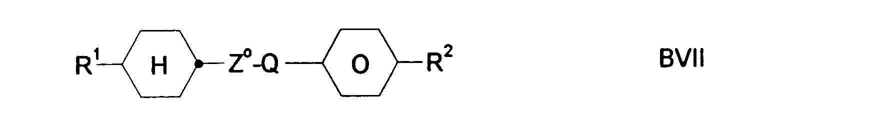 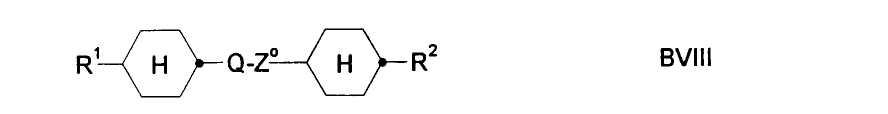 wherein R¹ and R² each independently of one another are R as defined in claim 4, Z^{o} is -CO-O-, -O-CO- or -CH₂CH₂-, Q is as defined in claim 4 and the 1,4-phenylene ring in BI to BVII may also be substituted in 2- or 3-position by fluorine.

6. Display according to one of claims 1 to 5, characterized in that the liquid crystal mixture contains at least one component selected from group T, comprising compounds of the formulae T1, T2 and T3 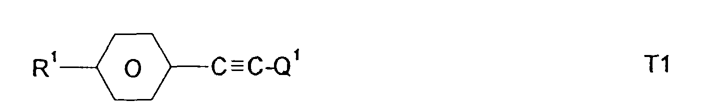 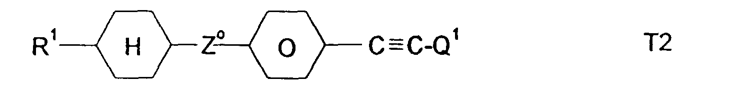 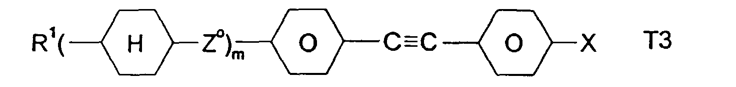 in which Q¹ is 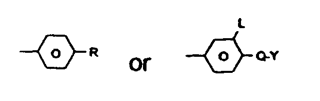 R¹, L, Y and Q are as defined in claim 1, R is as defined in claim 4 Z^{o} is -CH₂CH₂- or a single bond, X is F or OCF₃, and m is 0 or 1.

7. Display according to at least one of claims 4 to 6, characterized in that the liquid crystal mixture contains one or more compounds wherein R is a trans-alkenyl group or a trans-alkenyloxy group.

8. Liquid crystal mixture characterized in that it contains one or more compounds of formula II as defined in claim 1.

9. Liquid crystal mixture characterized in that it contains one or more compounds of formula III and at least one compound of formula B1VIII as defined in claim 1.

10. Liquid crystal mixture according to claim 1 characterized in that it contains at least one of the compounds of formula 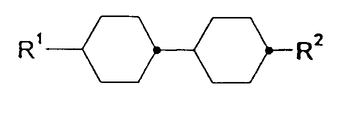 wherein
R¹ is CH₃-(CH₂)ₜ-
R² is CH₃-(CH₂)ₜ-, and
t is 1, 2, 3 or 4.

11. Liquid crystal mixture according to one of the claims 8 to 10 comprising the composition as defined in at least one of claims 3 to 7.

## Patentansprüche

1. Supertwist-Flüssigkristallanzeige mit
- zwei planparallelen Trägerplatten, die mit einer Umrandung eine Zelle bilden,
- einer in der' Zelle befindlichen nematischen Flüssigkristallmischung mit positiver dielektrischer Anisotropie,
- Elektrodenschichten mit überlagerten Orientierungsschichten auf der Innenseite der Trägerplatten,
- einem Einfallswinkel zwischen der Längsachse der auf der Oberfläche der Trägerplatten befindlichen Moleküle und den Trägerplatten von etwa 1 Grad bis 30 Grad, wobei
- der absolute Betrag des Verdrillungswinkels der Flüssigkristallmischung in der Zelle von Orientierungsschicht zu Orientierungsschicht zwischen 160 und 720° liegt, dadurch gekennzeichnet, daß die nematische Flüssigkristallmischung eine oder mehrere Verbindungen der Formel I 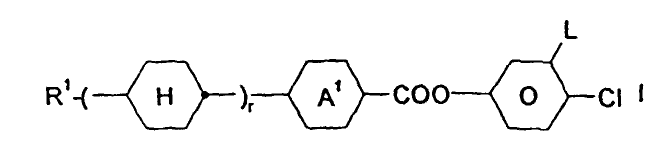 und/oder eine oder mehrere Verbindungen der Formel II 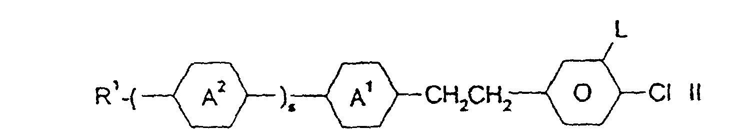 und/oder eine oder mehrere Verbindungen der Formel III 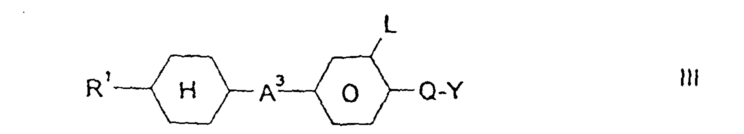 worin
R¹ Alkyl mit 1-12 C-Atomen, worin eine oder zwei nichtbenachbarte CH₂-Gruppen auch durch -O-, -CH=CH-, -CO-, -O-CO- oder -CO-O- ersetzt sein können,
r 0 oder 1,
s 0, 1 oder 2,
die Ringe A¹ und A² unabhängig voneinander trans-1,4-Cyclohexylen, 1,4-Phenylen oder 3-Fluor-1,4-phenylen,
A³ 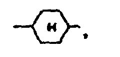
Q OCHF, OCF₂, CF₂ oder eine Einfachbindung,
Y H, F oder Cl und L H oder F bedeuten, und mindestens eine Verbindung der Formel B1VIII: 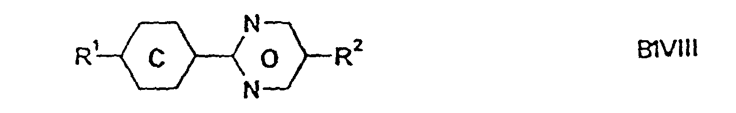 worin R¹ und R² jeweils unabhängig voneinander Alkyl mit 1-12 C-Atomen, worin eine oder zwei nichtbenachbarte CH₂-Gruppen auch durch -O-, -CH=CH-, -CO-, -O-CO- oder -CO-O- ersetzt sein können, und 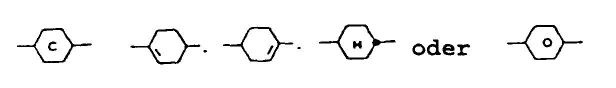 bedeutet, oder mindestens eine Verbindung der Formel 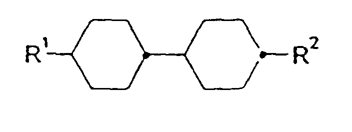 enthält, worin
R¹ CH₃-(CH₂)ₙ-O-, CH₃-(CH₂)ₜ-, trans-H-(CH₂)ᵣ-CH=CH-(CH₂CH₂)ₛ-CH₂-O-, trans-H-(CH₂)ᵣ-CH=CH-(CH₂CH₂)ₛ-,
R² CH₃- (CH₂)ₜ-,
n 1, 2, 3 oder 4,
t 1, 2, 3 oder 4,
r 0, 1, 2 oder 3 und
s 0 oder 1 bedeuten.

2. Supertwist-Flüssigkristallanzeige mit
- zwei planparallelen Trägerplatten, die mit einer Umrandung eine Zelle bilden,
- einer in der Zelle befindlichen nematischen Flüssigkristallmischung mit positiver dielektrischer Anisotropie,
- Elektrodenschichten mit überlagerten Orientierungsschichten auf der Innenseite der Trägerplatten,
- einem Einfallswinkel zwischen der Längsachse der auf der Oberfläche der Trägerplatten befindlichen Moleküle und den Trägerplatten von etwa 1 Grad bis 30 Grad, wobei
- der absolute Betrag des Verdrillungswinkels der Flüssigkristallmischung in der Zelle von Orientierungsschicht zu Orientierungsschicht zwischen 160 und 720° liegt, dadurch gekennzeichnet, daß die nematische Flüssigkristallmischung eine oder mehrere Verbindungen der Formel III 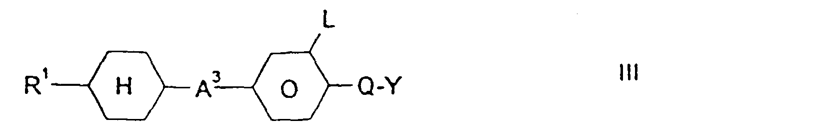 worin
R¹ Alkyl mit 1-12 C-Atomen, worin eine oder zwei nichtbenachbarte CH₂-Gruppen auch durch -O-, -CH=CH-, -CO-, -O-CO- oder -CO-O- ersetzt sein können,
A³ 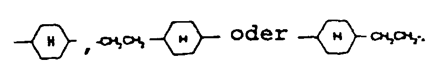 und
Q OCHF, OCF₂ oder CF₂, Y H, F oder Cl und L H oder F bedeuten, in Kombination mit einer oder mehreren Verbindungen der in Anspruch 1 definierten Formel B1VIII oder eine oder mehrere Cyclohexylcyclohexanverbindungen nach Anspruch 1 enthält.

3. Anzeige nach Anspruch 1 oder 2, dadurch gekennzeichnet, daß die nematische Flüssigkristallmischung weiterhin
a) 5-60 Gew.-% einer flüssigkristallinen Komponente A bestehend aus einer oder mehreren Verbindungen mit einer dielektrischen Anisotropie von mehr als +8,
b) 10-40 Gew.-% einer flüssigkristallinen Komponente B bestehend aus einer oder mehreren Verbindungen mit einem Klärpunkt von mehr als 120°C und
c) eine optisch aktive Komponente C in solch einer Menge enthält, daß das Verhältnis zwischen der Schichtdicke (Abstand der planparallelen Trägerplatten) und der natürlichen Ganghöhe der chiralen nematischen Flüssigkristallmischung bei Anpassung an den gewünschten Verdrillungswinkel mehr als 0,2 beträgt,
und daß die Flüssigkristallmischung einen nematischen Phasenbereich von mindestens 60°C, eine Viskosität von nicht mehr als 30 mPa·s und eine dielektrische Anisotropie von mindestens +5 aufweist, wobei die dielektrischen Anisotropien der Verbindungen und die Parameter der Flüssigkristallmischung auf eine Temperatur von 20°C bezogen sind.

4. Anzeige nach Anspruch 3, dadurch gekennzeichnet, daß Komponente A Verbindungen aus folgender Gruppe enthält: 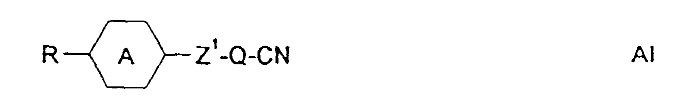 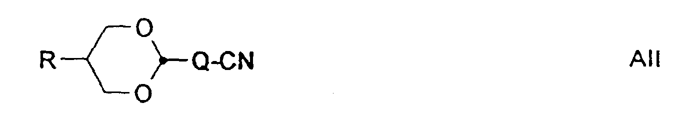 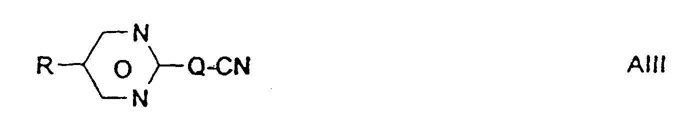 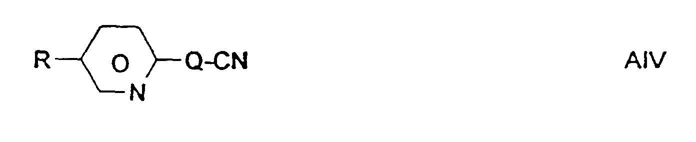 worin
R Alkyl mit 1-12 C-Atomen, worin eine oder zwei nichtbenachbarte CH₂-Gruppen auch durch -O-, -CH=CH-, -CO-, -O-CO- oder -CO-O- ersetzt sein können,
Q die Formel 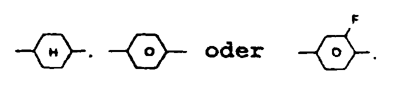
Z¹ 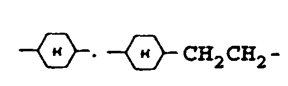 eine Einfachbindung, -CH₂CH₂-, -CO-O- oder -O-CO- und 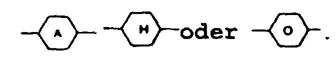 bedeuten.

5. Anzeige nach einem der Ansprüche 1 bis 4, dadurch gekennzeichnet, daß Komponente B Verbindungen aus folgender Gruppe enthält: 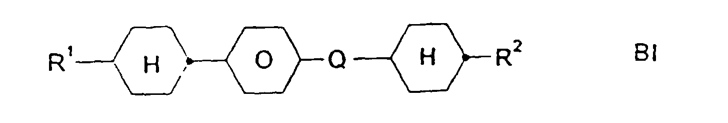 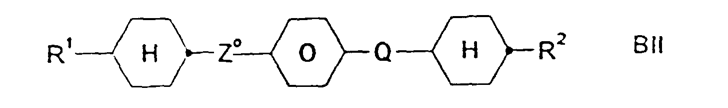 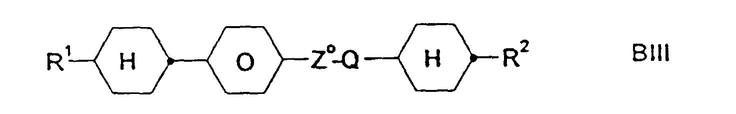 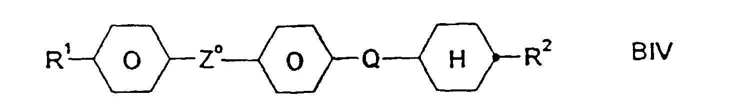 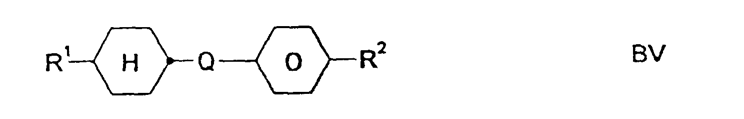 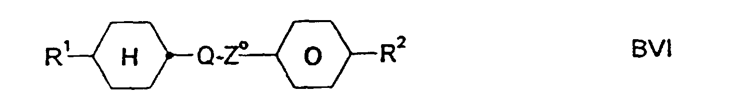 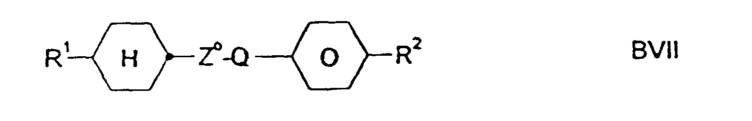 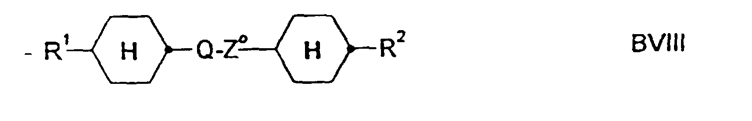 worin R¹ und R² jeweils unabhängig voneinander die in Anspruch 4 für R angegebene Bedeutung besitzen, Z⁰ -CO-O-, -O-CO- oder -CH₂CH₂- bedeutet, Q die in Anspruch 4 angegebene Bedeutung besitzt und der 1,4-Phenylenring in BI bis BVII in 2- oder 2-Stellung auch durch Fluor substituiert sein kann.

6. Anzeige nach einem der Ansprüche 1 bis 5, dadurch gekennzeichnet, daß die Flüssigkristallmischung mindestens eine Komponente aus der Gruppe T enthält, die Verbindungen der Formeln T1, T2 und T3 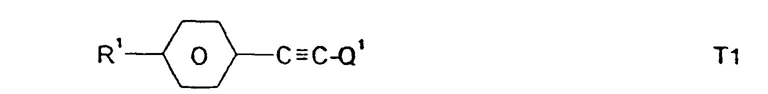 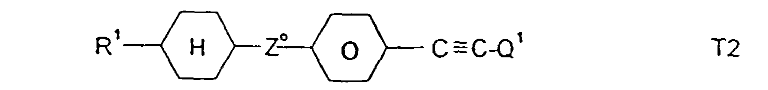 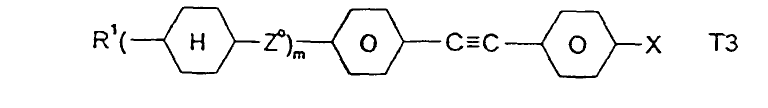 enthält, worin Q¹ 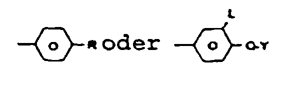 R¹, L, Y und Q die in Anspruch 1 angegebene Bedeutung besitzen, R die in Anspruch 4 angegebene Bedeutung besitzt, Z⁰ -CH₂CH₂- oder eine Einfachbindung, X F oder OCF₃ und m 0 oder 1 bedeuten.

7. Anzeige nach mindestens einem der Ansprüche 4 bis 6, dadurch gekennzeichnet, daß die Flüssigkristallmischung eine oder mehrere Verbindungen enthält, worin R eine trans-Alkenylgruppe oder eine trans-Alkenyloxygruppe bedeutet.

8. Flüssigkristallmischung, dadurch gekennzeichnet, daß sie eine oder mehrere Verbindungen der in Anspruch 1 definierten Formel II enthält.

9. Flüssigkristallmischung, dadurch gekennzeichnet, daß sie eine oder mehrere Verbindungen der Formel III und mindestens eine Verbindung der in Anspruch 1 definierten Formel BIVIII enthält.

10. Flüssigkristallmischung nach Anspruch 1, dadurch gekennzeichnet, daß sie mindestens eine der Verbindungen der Formel 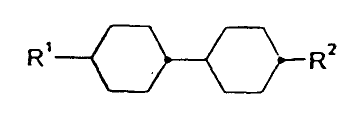 enthält, worin
R¹ CH₃-(CH₂)ₜ-,
R² CH₃-(CH₂)ₜ- und
t 1, 2, 3 oder 4 bedeuten.

11. Flüssigkristallmischung nach einem der Ansprüche 8 bis 10, enthaltend eine Zusammensetzung nach mindestens einem der Ansprüche 3 bis 7.

## Revendications

1. Affichage à cristaux liquides super-torsadés comportant:
deux plaques porteuses plan-parallèles qui forment, avec un débordant, une cellule,
un mélange cristallin liquide nématique à anisotropie diélectrique positive dans la cellule,
des couches d'électrodes situées sur l'intérieur des plaques porteuses, des couches d'orientation leur étant superposées,
un angle d'incidence d'environ 1 degré à 30 degrés entre l'axe longitudinal des molécules sur la surface des plaques porteuses et les plaques porteuses et
la valeur absolue de l'angle de torsion du mélange cristallin liquide de la cellule, de couche d'orientation à couche d'orientation, étant compris entre 160 et 720°, caractérisé en ce que le mélange cristallin liquide nématique contient un ou plusieurs composés de la formule I 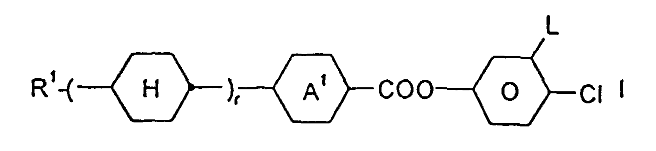 et/ou un ou plusieurs composés de la formule II 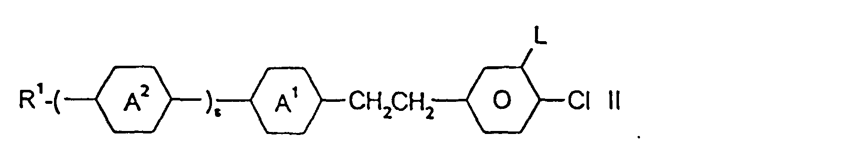 et/ou un ou plusieurs composés de la formule III 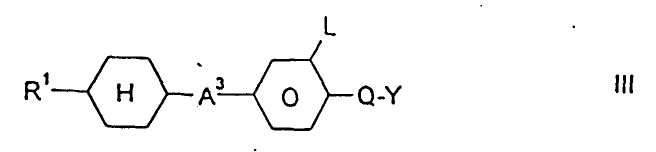 où
R¹ est un alkyle à 1 à 12 atomes de carbone, dans lequel un ou deux groupes CH₂ non adjacents peuvent aussi être remplacés par -O-, -CH=CH-, -CO-, -O-CO-, ou -CO-O-,
r est 0 ou 1,
s est 0, 1 ou 2,
les noyaux A¹ et A² sont, indépendamment l'un de l'autre, un trans-1,4 cyclohexylène, un 1,4-phénylène ou un 3-fluoro-1,4-phényléne,
A³ désigne 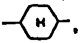
Q est OCHF, OCF₂, CF₂, ou une liaison unique,
Y est H, F, ou Cl et L désigne H ou F et au moins un composé de la formule B1VIII: 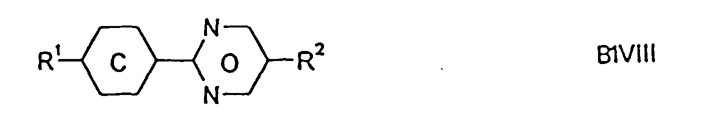 dans lequel R¹ et R² sont indépendamment l'un de l'autre dans chaque cas un alkyle à 1 à 12 atomes de carbone, dans lequel un ou deux groupes CH₂ non adjacents peuvent aussi être remplacés par -O-, -CH=CH-, -CO-, -O-CO-, ou -CO-O-, et 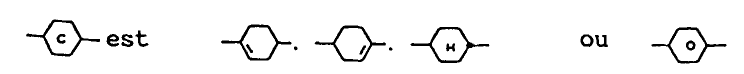 ou au moins un composé de la formule 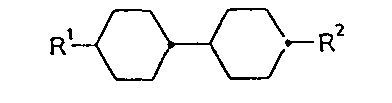 dans lequel
R¹ est CH₃-(CH₂)ₙ-O-, CH₃-(CH₂)ₜ-, trans-H-(CH₂)ᵣ- CH=CH-(CH₂CH₂)ₛ-CH₂-O, trans-H-(CH₂)ᵣ-CH=CH-(CH₂CH₂)ₛ- R2 est CH₃-(CH₂)ₜ
n est 1, 2, 3,ou 4
t est 1, 2, 3 ou 4
r est 0, 1, 2, 3
s est 0 ou 1

2. Affichage à cristaux liquides super-torsadés comportant:
deux plaques porteuses plan-parallèles qui forment, avec un débordant, une cellule,
un mélange cristallin liquide nématique à anisotropie diélectrique positive dans la cellule,
des couches d'électrodes situées sur l'intérieur des plaques porteuses, des couches d'orientation leur étant superposées,
un angle d'incidence d'environ 1 degré à 30 degrés entre l'axe longitudinal des molécules sur la surface des plaques porteuses et les plaques porteuses et
la valeur absolue de l'angle de torsion du mélange cristallin liquide de la cellule, de couche d'orientation à couche d'orientation, étant compris entre 160 et 720°, caractérisé en ce que le mélange cristallin liquide nématique contient un ou plusieurs composés de la formule III 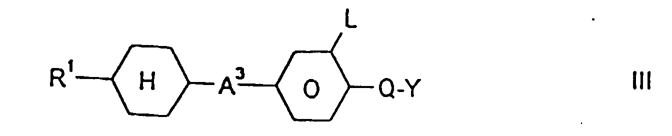 où
R¹ est un alkyle à 1 à 12 atomes de carbone, dans lequel un ou deux groupes CH₂ non adjacents peuvent aussi être remplacés par -O-, -CH=CH-, -CO-, -O-CO-, ou -CO-O-,
A³ désigne 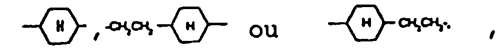 et
Q est OCHF, OCF₂ ou CF₂, Y est H, F, ou Cl et L désigne H ou F
en combinaison avec un ou plusieurs composés de la formule B1VIII selon la revendication 1 ou un ou plusieurs composés de cyclohexylcyclohexanes selon la revendication 1.

3. Affichage selon la revendication 1 ou 2, caractérisé en ce que le mélange cristallin liquide nématique comprend en outre
a) 5 à 60 % en poids d'un composant cristallin liquide A qui consiste en un ou plusieurs composés à anisotropie diélectrique supérieure à + 8,
b) 10 à 40 % en poids d'un composant cristallin liquide B qui consiste en un ou plusieurs composés à point de décantation supérieur à 120°C, et
un composant optiquement actif C, en une quantité telle que le rapport entre l'épaisseur de couche (séparation entre les plaques porteuses plan-parallèles) et le pas naturel du mélange cristallin liquide nématique chiral est supérieur à 0,2 ajusté à l'angle de torsion souhaité,
et en ce que le mélange cristallin liquide nématique présente une plage de phase nématique d'au moins 60°C, une viscosité ne dépassant pas 30 mPa.s et une anisotropie diélectrique d'au moins +5; les anisotropies diélectriques des composés et les paramètres concernant le mélange cristallin liquide nématique étant basés sur une température de 20°C.

4. Affichage selon la revendication 3, caractérisé en ce que le composant A comprend des composés sélectionnés dans le groupe suivant 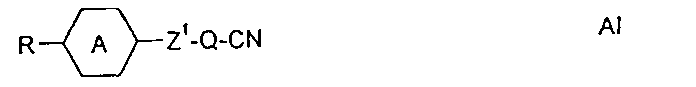 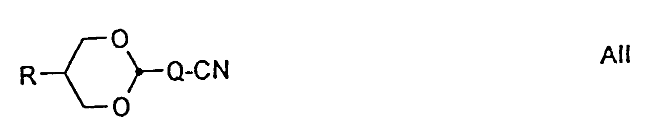 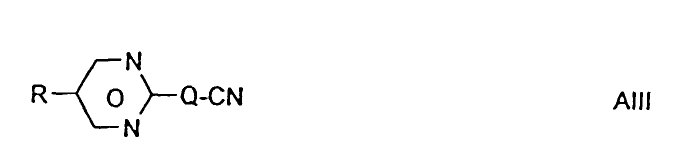 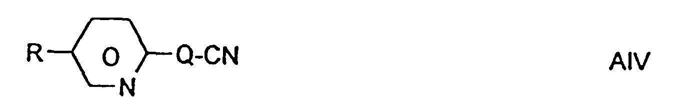 où
R est un alkyle à 1 à 12 atomes de carbone, dans lequel un ou deux groupes CH₂ non adjacents peuvent aussi être remplacés par -O-, -CH=CH-, -CO-, -O-CO-, ou -CO-O-,
Q est la formule 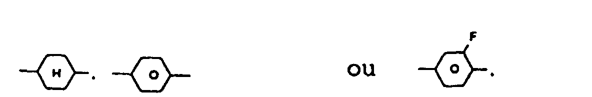
Z¹ est 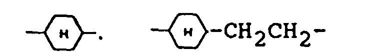 une liaison unique -CH₂CH₂-, -CO-O-, ou -O-CO- et

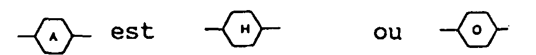

5. Affichage selon l'une des revendications 1 à 4, caractérisé en ce que le composant B comprend des composés sélectionnés dans le groupe suivant 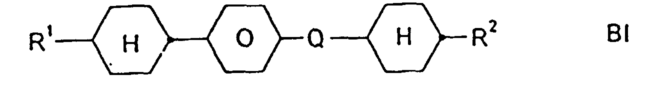 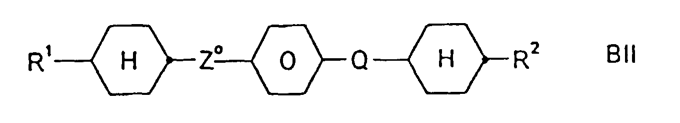 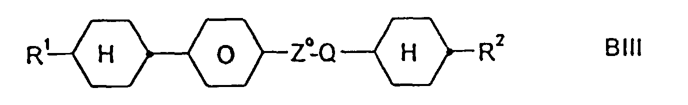 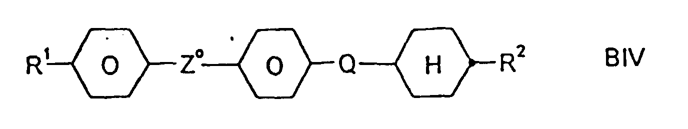 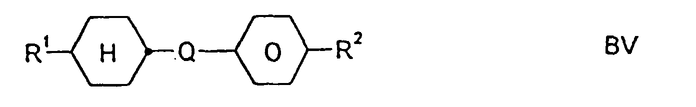 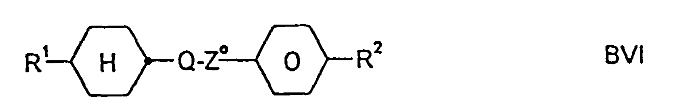 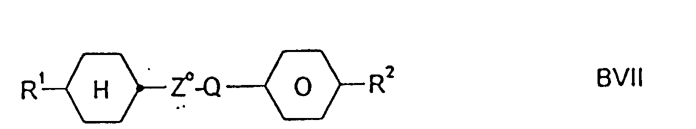 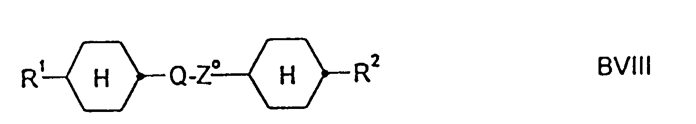 où
R¹ et R² sont chacun, indépendamment l'un de l'autre,
R tel que défini à la revendication 4, Z° est -CO-O-, -O-CO- ou -CH₂CH₂-, Q est tel que défini à la revendication 4 et le noyau 1,4 phénylène de BI à BVII peut aussi être remplacé par du fluor en position 2 ou 3.

6. Affichage selon l'une des revendications 1 à 5, caractérisé en ce que le mélange cristallin liquide
contient au moins un composant sélectionné dans le groupe T, comprenant des composés des formules T1, T2 et T3 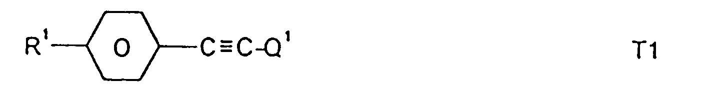 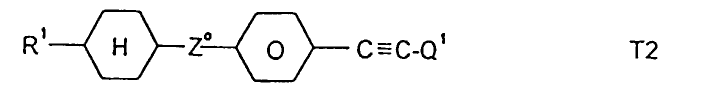 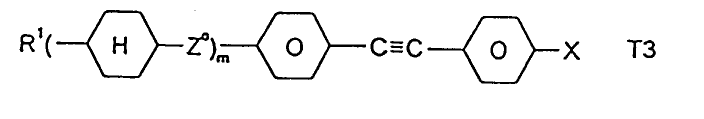 où
Q¹ est 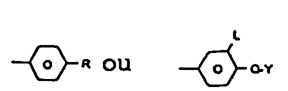
R¹, L, Y et Q sont tels que définis à la revendication 1, R est tel que défini à la revendication 4, Z° est -CH₂CH₂- ou une liaison unique, X est F ou OCF₃, et m est 0 ou 1.

7. Affichage selon l'une des revendications 4 à 6, caractérisé en ce que le mélange cristallin liquide
contient un ou plusieurs composés où R est un groupe trans-alkényle ou un groupe trans-alkényloxy.

8. Mélange cristallin liquide caractérisé en ce qu'il contient un ou plusieurs composés de la formule II définie à la revendication 1.

9. Mélange cristallin liquide caractérisé en ce qu'il contient un ou plusieurs composés de la formule III et au moins un composé de la formule B1VIII définies à la revendication 1.

10. Mélange cristallin liquide selon la revendication 1 caractérisé en ce qu'il contient au moins un des composés de la formule 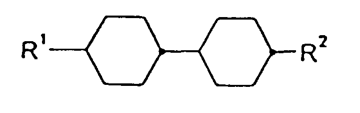 où
R¹ est CH₃-(CH₂)ₜ
R² est CH₃-(CH₂)ₜ, et
t est 1, 2, 3 ou 4.

11. Mélange cristallin liquide selon l'une des revendications 8 à 10 comprenant la composition définie dans au moins l'une des revendications 3 à 7.
